(19) Europäisches Patentamt
European Patent Office
Office européen des brevets

(11) EP 0 831 707 B1

(12) EUROPÄISCHE PATENTSCHRIFT

(45) Veröffentlichungstag und Bekanntmachung des Hinweises auf die Patenterteilung:
**26.09.2001 Patentblatt 2001/39**

(21) Anmeldenummer: **96920794.3**

(22) Anmeldetag: **05.06.1996**

(51) Int Cl.[7]: **A01N 47/36**

(86) Internationale Anmeldenummer:
**PCT/EP96/02443**

(87) Internationale Veröffentlichungsnummer:
**WO 96/41537 (27.12.1996 Gazette 1996/56)**

(54) **HERBIZIDE MITTEL MIT 4-IODO-2-[3-(4-METHOXY-6-METHYL-1,3,5-TRIAZIN-2-YL)UREIDOSULFONYL]-BENZOESÄUREESTERN**

HERBICIDES WITH 4-IODO-2-[3-(4-METHOXY-6-METHYL-1,3,5-TRIAZIN-2-YL)UREIDOSULFONYL]-BENZOIC ACID ESTERS

HERBICIDES AVEC DES ESTERS D'ACIDE 4-IODO-2-[3-(4-METHOXY-6-METHYL-1,3,5-TRIAZIN-2-YL)UREIDOSULFONYL]-BENZOIQUE

(84) Benannte Vertragsstaaten:
**AT BE CH DE DK ES FR GB GR IE IT LI NL PT SE**

(30) Priorität: **08.06.1995 DE 19520839**

(43) Veröffentlichungstag der Anmeldung:
**01.04.1998 Patentblatt 1998/14**

(73) Patentinhaber: **Aventis CropScience GmbH
65929 Frankfurt am Main (DE)**

(72) Erfinder:
- **HACKER, Erwin
D-65239 Hochheim (DE)**
- **KEHNE, Heinz
D-65719 Hofheim (DE)**
- **HESS, Martin
D-55128 Mainz (DE)**

(74) Vertreter: **Luderschmidt, Schüler & Partner GbR
Patentanwälte,
Postfach 3929
65029 Wiesbaden (DE)**

(56) Entgegenhaltungen:
**WO-A-92/13845**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 831 707 B1

## Beschreibung

Die Erfindung bezieht sich auf das technische Gebiet der Pflanzenschutzmittel, insbesondere betrifft die Erfindung herbizide Mittel mit 4-Iodo-2-[3-(4-methoxy-6-methyl-1,3,5-triazin-2-yl)ureidosulfonyl]-benzoesäureestern und/oder ihren Salzen.

Aus der WO 92/13845 (PCT/EP92/00304) sind iodierte Arylsulfonylharnstoffe der allgemeinen Formel 1 und deren Salze bekannt,

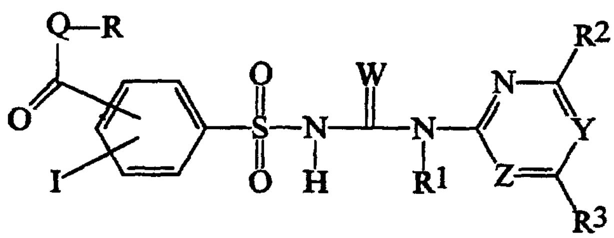

(1),

wobei von der allgemeinen Formel 1 durch die umfangreiche und breite Definition der Reste Q, W, Y, Z, R, $R^1$, $R^2$ und $R^3$ eine Vielzahl von möglichen Einzelverbindungen umfaßt werden.

Im chemischen Beispiel 9 gemäß der WO 92/13845 wird 2-[[[(4,6-Dimethoxy-2-pyrimidinyl)-amino]-carbonyl]-amino]sulfonyl]-4-iodobenzoesäuremethylester synthetisiert während das chemische Beispiel 10 die Herstellung von 2-Iodo-3-[[[[4-methoxy-6-methyl-1,3,5-triazin-2-yl)-amino]carbonyl]-amino]-sulfonyl]-benzoesäure-ethylester zum Inhalt hat. Ein chemisches Beispiel zur Darstellung von 4-Iodo-2-[3-(4-methoxy-6-methyl-1,3,5-triazin-2-yl)ureidosulfonyl]-benzoesäureestern ist nicht beschrieben.

In Tabelle 3 der WO 92/13845 werden Verbindungen der Formel 2 aufgezählt

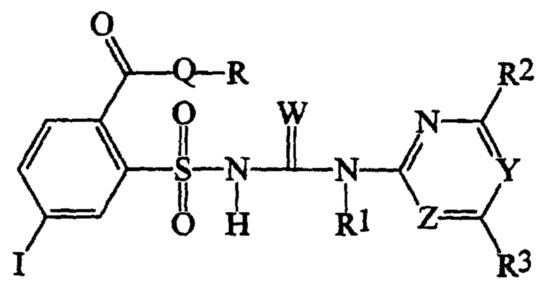

(2),

wobei sich die Beispiele mit den Nummern 7, 44, 81, 118, 155, 192, 229, 237, 245, 253, 261, 269, 277, 298, 299 und 300 auf solche Verbindungen der Formel 2 beziehen, worin Y und Z für Stickstoff, Q und W für Sauerstoff, $R^1$ für Wasserstoff, $R^2$ für $OCH_3$ und $R^3$ für $CH_3$ stehen. Allerdings ist nur bei den Beispielen 7 (R=Methyl) und 44 (R=Ethyl) sowie den Beispielen 298 bis 300 (Na-, Li-, K-Salz; R jeweils = Methyl) ein Schmelzpunkt angegeben.

Biologische Beispiele für die oben einzeln genannten Verbindungen werden in der WO 92/13845 nicht aufgeführt. Vielmehr wird ein pauschaler Hinweis auf die Möglichkeit gegeben, daß die Verbindungen der Formel 1 mit weiteren Herbiziden angewendet werden können. Diesem Hinweis folgt eine beispielhafte Aufzählung von mehr als ca. 250 verschiedenen Standardwirkstoffen, wobei wörtlich unter anderem Acifluorfen, Alachlor, Amidosulfuron, Atrazine, Bentazone, Bifenox, Bromoxynil, Chlortoluron, Chlorsulfuron, Dicamba, Diclofop-methyl, Difenzoquat, Diflufenican, Fenoxaprop-ethyl, Flamprop-methyl, Fluoroglycofen-ethyl, Fluroxypyr, Fomesafen, Glufosinate, Glyphosate, Imazamethabenz-methyl, Ioxynil, Isoproturon, Lactofen, MCPA, Mecoprop, Methabenzthiazuron, Metolachlor, Metribuzin, Metsulfuron-methyl, Pendimethalin, Primisulfuron-methyl, Terbuthylazine, Thifensulfuron-methyl, Tralkoxydim, Triasulfuron und Tribenuron-methyl Erwähnung finden. Über die bloße Erwähnung der Substanzen hinausgehende Informationen hinsichtlich Sinn und Zweck einer gemeinsamenen Anwendung sind der WO 92/13845 ebensowenig entnehmbar, wie etwa eine Motivation zur gezielten Auswahl und Kombination bestimmter Wirkstoffe.

Die aus der WO 92/13845 gemäß Formel 1 bekannten iodierten Arylsulfonylharnstoffe weisen zwar größtenteils eine brauchbare bis gute Wirksamkeit gegen ein breites Spektrum wirtschaftlich wichtiger mono- und dikotyler Schadpflanzen auf und auch unter den spezifischen Kulturbedingungen im Reis vorkommende Unkräuter, wie z. B.

Sagittaria, Alisma, Eleocharis, Scirpus, Cyperus etc., werden mit Hilfe von Wirkstoffen der allgemeinen Formel 1 bekämpft, zur Bekämpfung des in der landwirtschaftlichen Praxis vor allem in Getreide oder Mais, aber auch in anderen Kulturarten auftretenden Spektrums an mono- und dikotylen Unkräutern reichen die Einzelwirkstoffe jedoch oft nicht aus.

Angesichts des hierin angegebenen und diskutierten Standes der Technik war es mithin Aufgabe der Erfindung neue Mischungen mit herbizider Wirksamkeit anzugeben, um den Praktiker in die Lage zu versetzen, mit einer Applikation bzw. wenigen Applikationen von Herbiziden das Unkrautspektrum oder einzelne schwer zu bekämpfende Unkrautspezies in Getreide, Mais u. a. Kulturarten zu kontrollieren. Des weiteren sollen die Mischungen aus grundsätzlich bekannten herbiziden Wirkstoffen dazu beitragen, sogenannte "Wirkungslücken" zu schließen und nach Möglichkeit gleichzeitig die Aufwandmengen der Einzelwirkstoffe zu reduzieren.

Gelöst werden diese sowie weitere nicht einzeln aufgeführte Aufgaben durch herbizide Mittel mit den Merkmalen des Anspruchs 1. So sind Gegenstand der Erfindung herbizide Mittel, enthaltend

A) mindestens einen herbiziden Wirkstoff aus der Gruppe der substituierten Phenylsulfonylharnstoffe der allgemeinen Formel I und deren landwirtschaftlich akzeptierten, d.h. annehmbaren Salze

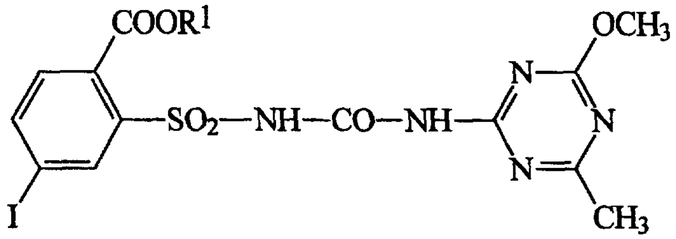

(I),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet

und

B) mindestens eine herbizid wirksame Verbindung aus der Gruppe der Verbindungen, welche aus

Ba) selektiv in Getreide und/oder in Mais gegen Gräser wirksamen Herbiziden Fenoxaprop, Fenoxaprop-P, Isoproturon, Diclofop, Clodinafop, Mischungen aus Clodinafop und Cloquintocet, Chlorotoluron, Methabenzthiazuron, Imazamethabenz, Tralkoxydim, Difenzoquat, Flamprop, Flamprop-M, Pendimethalin, Nicosulfuron, Rimsulfuron, Primisulfuron,

Bb) selektiv in Getreide und/oder Mais gegen Dikotyle wirksamen Herbiziden Mecoprop, Mecoprop-P, MCPA, Dichlorprop, Dichlorprop-P, 2,4-D, Dicamba, Fluroxypyr, Ioxynil, Bromoxynil, Bifenox, Fluoroglycofen, Acifluorfen, Lactofen, Fomesafen, Oxyfluorfen, ET-751, Azolen der allgemeinen Formel II

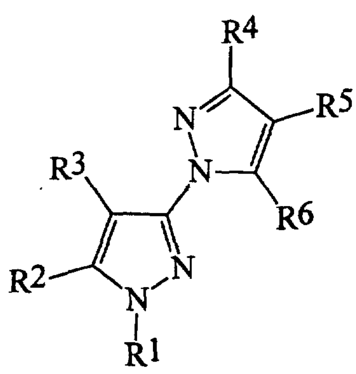

(II),

worin

$R^1$ $(C_1-C_4)$-Alkyl ist,
$R^2$ $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder
$R^1$ und $R^2$ zusammen die Gruppe $(CH_2)_m$ bilden mit m = 3 oder 4,
$R^3$ Wasserstoff oder Halogen ist,
$R^4$ Wasserstoff oder $(C_1-C_4)$-Alkyl ist,
$R^5$ Wasserstoff, Nitro, Cyano oder eine der Gruppen $-COOR^7$, $-C(=X)NR^7R^8$ oder $-C(=X)R^{10}$ ist,
$R^6$ Wasserstoff, Halogen, Cyano, $(C_1-C_4)$-Alkyl, $(C_1-C_4)$-Alkylthio oder $-NR^{11}R^{12}$ ist,
$R^7$ und $R^8$ gleich oder verschieden Wasserstoff oder $(C_1-C_4)$-Alkyl sind, oder
$R^7$ und $R^8$ zusammen mit dem Stickstoff, an den sie gebunden sind einen gesättigten 5 oder 6 gliedrigen carbozyklischen Ring bilden,
$R^{10}$ Wasserstoff oder $(C_1-C_4)$-Alkyl ist, wobei letztere gegebenenfalls mit einem oder mehreren Halogenatomen substituiert sein können, und
$R^{11}$ u. $R^{12}$ gleich oder verschieden Wasserstoff, $(C_1-C_4)$-Alkyl oder $(C_1-C_4)$-Alkoxycarbonyl sind, wobei
$R^{11}$ u. $R^{12}$ zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann;

Diflufenican, Bentazon,
Bc) selektiv in Getreide und/oder Mais gegen Gräser und Dikotyle wirksamen Herbiziden Metolachlor, Metribuzin, Atrazin, Terbuthylazin, Alachlor, Acetochlor, Dimethenamid, Amidosulfuron, Metsulfuron, Tribenuron, Thifensulfuron, Triasulfuron, Chlorsulfuron, Prosulfuron oder CGA-152005, Sulfonylharnstoffe der allgemeinen Formel III

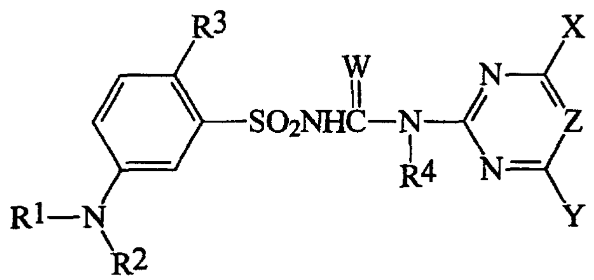

(III),

worin

$R^1$ Methyl, Ethyl, n-Propyl, i.Propyl oder Allyl ist,
$R^2$ $CO-R^5$, $COOR^6$, $CO-NR^8R^9$, $CS-NR^{10}R^{11}$, $SO_2R^{14}$ oder $SO_2NR^{15}R^{16}$
$R^3$ $COR^{17}$, $COOR^{18}$, $CONR^{19}R^{20}$ oder $CO-ON=CR^{22}R^{23}$ ist,
$R^4$ Wasserstoff oder $(C_1-C_4)$-Alkyl ist,
$R^5$ Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind,
$R^6$ $(C_1-C_4)$-Alkyl, Allyl, Propargyl oder Cyclopropyl ist,
$R^8$ Wasserstoff, $(C_1-C_4)$-Alkyl, $(C_1-C_4)$-Haloalkyl oder $(C_1-C_4$-Alkoxy)-carbonyl ist
$R^9$-$R^{11}$ unabhängig voneinander gleich oder verschieden H oder $(C_1-C_4)$-Alkyl sind,
$R^{14}$ $(C_1-C_4)$-Alkyl ist,
$R^{15}$ u. $R^{16}$ unabhängig voneinander gleich oder verschieden Wasserstoff oder $(C_1-C_4)$-Alkyl sind,
$R^{17}$ Wasserstoff, $(C_1-C_4)$-Alkyl, $(C_1-C_4)$-Haloalkyl, $(C_3-C_6)$-Cycloalkyl, Phenyl oder Heteroaryl ist, wobei die letztgenannten zwei Reste unsubstituiert oder substituiert sind,
$R^{18}$ Wasserstoff, $(C_1-C_4)$-Alkyl, $(C_2-C_6)$-Alkenyl oder $(C_2-C_6)$-Alkinyl , wobei die letztgenannten drei Reste unsubstituiert oder durch einen oder mehrere Reste aus der Gruppe Halogen, $(C_1-C_4)$-Alkoxy, $(C_1-C_4)$-Alkylthio und $NR^{31}R^{32}$ substituiert sind, oder $(C_3-C_6)$-Cycloalkyl oder $(C_3-C_6)$-Cycloalkyl- $(C_1-C_3)$-Alkyl,
$R^{19}$ analog $R^8$

| | |
|---|---|
| $R^{20}$ | analog $R^9$ |
| $R^{22}$ u. $R^{23}$ | unabhängig voneinander gleich oder verschieden Wasserstoff oder $(C_1-C_2)$-Alkyl sind, |
| $R^{31}$ u. $R^{32}$ | unabhängig voneinander gleich oder verschieden Wasserstoff oder $(C_1-C_4)$-Alkyl sind, |
| W | Sauerstoff oder Schwefel ist, |
| x | $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2$-alkyl)-amino ist, |
| Y | $(C_1-C_4)$-Alkyl, $(C_1-C_4)$-Alkoxy, $(C_1-C_4)$-Haloalkyl oder $(C_1-C_4)$-Alkylthio ist, und |
| Z | CH oder N |

bedeutet,
Flupyrsulfuron(DPX-KE459), Sulfosulfuron (MON37500), KIH-2023, und
Bd) im Nichtkulturland nichtselektiven und/oder in transgenen Kulturen selektiven Herbiziden mit Wirkung gegen Ungräser und Unkräuter Glufosinate, Glufosinate-P, Glyphosate,

besteht, wobei die Mittel die Verbindungen der Formel I oder deren Salze (Typ-A-Verbindungen) und die Verbindungen aus der Gruppe B in einem Gewichtsverhältnis von 1:2500 bis 20:1 enthalten.

Durch die erfindungsgemäßen Kombinationen aus herbiziden Wirkstoffen der Typen A und B gelingt es besonders vorteilhaft, die vom Praktiker geforderte Kontrolle des Unkrautspektrums zu erreichen, wobei auch einzelne schwer zu bekämpfende Arten erfasst werden. Darüberhinaus läßt sich mit den erfindungsgemäßen Kombinationen der Aufwand an Wirkstoffmengen der einzelnen in der Kombination enthaltenen Kombinationspartner reduzieren, was ökonomischere Lösungsansätze seitens der Anwender erlaubt. Schließlich konnten überraschenderweise Wirkungssteigerungen erzielt werden, die über das zu erwartende Maß hinausgehen, womit die herbiziden Mittel der Erfindung in breitem Umfang synergistische Aktivitäten zeigen.

Die in 4-Stellung des Phenylringes Iodsubstitution tragenden Phenylsulfonylharnstoffe der allgemeinen Formel I sind zwar grundsätzlich z. B. von der allgemeinen Formel 1 aus der WO 92/13845 umfaßt, deren herausragende Eignung als Kombinationspartner für synergistische Mischungen mit anderen Herbiziden ist dem Stand der Technik allerdings nicht entnehmbar. Insbesondere gibt es keine Anhaltspunkte in der bekannt gewordenen Literatur, daß der eng begrenzten und klar umrissenen Gruppe der gegebenenfalls in Form ihrer Salze vorliegenden 4-Iodo-2-[3-(4-methoxy-6-methyl-1,3,5-triazin-2-yl)ureidosulfonyl]-benzoesäureester eine solche Ausnahmestellung zukommt.

Von besonderem Interesse für die Kombinationen der Erfindung sind als Kombinationspartner vom Typ A Verbindungen der allgemeinen Formel I oder deren Salze, worin $R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet.

In besonders bevorzugter Ausführungsform enthalten erfindungsgemäße herbizide Mittel eine Typ A-Verbindung der allgemeinen Formel I oder deren Salz, worin $R^1$ Methyl bedeutet.

Die Verbindungen vom Typ A (allgemeine Formel I) können Salze bilden, bei denen der Wasserstoff der $-SO_2$-NH-Gruppe durch ein für die Landwirtschaft geeignetes Kation ersetzt wird. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel I erfolgen. Geeignet hierfür sind z. B. HCl, $HNO_3$, Trichloressigsäure, Essigsäure oder Palmitinsäure.

Besonders vorteilhafte Typ A Verbindungen sind solche, bei denen das Salz des Herbizids der Formel (I) durch Ersatz des Wasserstoffs der $-SO_2$-NH-Gruppe durch ein Kation aus der Gruppe der Alkalimetalle, Erdalkalimetalle und Ammonium, bevorzugt Natrium, gebildet wird.

Sofern die Verbindungen der Formel I ein oder mehrere asymetrische C-Atome oder auch Doppelbindungen enthalten, die in der allgemeinen Formel nicht gesondert angegeben sind, gehören diese doch zu den Typ-A Verbindungen. Die durch ihre spezifische Raumform definierten möglichen Stereoisomeren, wie Enantiomere, Diastereoisomere, Z- und E-Isomere sind alle von der Formel I umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

Die Kombinationspartner vom Typ B sind in der Regel Standardherbizide, die jedoch unter bestimmten Kriterien ausgewählt sind. So handelt es sich bis auf zwei Ausnahmen (Untergruppe Bd)) um selektiv in Getreide und/oder in Mais gegen unerwünschte Pflanzen wirkende Herbizide. Zu den zu bekämpfenden Schadpflanzen gehören dabei vor allem Gräser und/oder Dikotyle. Hinsichtlich der Wirksamkeit der Standardherbizide vom Typ B wiederum kann man eine Abstufung in Bezug auf den Schwerpunkt der bekämpften annähernd ausschließlich gegen Gräser wirksam, ein anderer Teil vorwiegend gegen Dikotyle, während die Herbizide vom Typ B aus der Untergruppe Bc) sowohl gegen Gräser als auch Dikotyle eingesetzt werden. In jedem Falle ergibt sich jedoch für die erfindungsgemäßen

Kombinationen ein optimiertes Wirkungsspektrum durch Ergänzung und Intensivierung der herbiziden Eigenschaften der Verbindungen vom Typ A. Dies gilt nicht zuletzt auch für die Typ B Verbindungen aus der Gruppe Bd), welche die im Nichtkulturland nichtselektiven und/oder in transgenen Kulturen selektiven Herbizide mit Wirkung gegen Ungräser und Unkräuter umfaßt.

In einer bevorzugten Variante kennzeichnet sich ein erfindungsgemäßes Mittel dadurch, daß es als Herbizide vom Typ B ein oder mehrere in Getreide und/oder in Mais selektiv gegen Gräser wirksame Herbizide aus der Gruppe B1) bis B15) enthält, die zu 2-(4-Aryloxyphenoxy)propionsäuren und deren Ester, Harnstoffen, Sulfonylharnstoffen, Cyclohexandionoximen, Arylalaninen, 2,6-Dinitroanilinen, Imidazolinonen und Difenzoquat gehören. Neben den erwähnten Einzelsubstanzen finden sich in den genannten chemischen Substanzklassen eine Reihe Gräserherbizide, die als Kombinationspartner für die Verbindungen vom Typ A geeignet sind.

Bevorzugte erfindungsgemäße Mittel enthalten als Herbizide vom Typ B ein oder mehrere selektiv in Getreide gegen Gräser wirksame Herbizide aus der Gruppe, die aus

B1) Fenoxaprop, Fenoxaprop-P

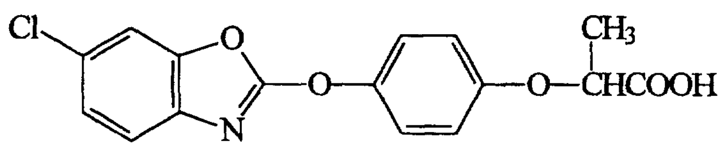

(±)-2-[4-(6-Chlor-1,3-benzoxazol-2-yloxy)phenoxy]propionsäure, umfassend u. a. die Anwendungsform als Fenoxaprop-ethyl,

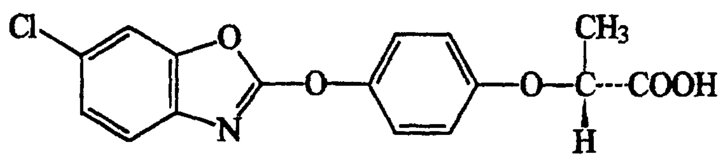

(*R*)-2-[4-(6-Chlor-1,3-benzoxazol-2-yloxy)phenoxy]propionsäure, umfassend u.a. die häufigste Anwendungsform Fenoxaprop-P-ethyl,
wobei die vorgenannten Verbindungen B1) aus Pesticide Manual, 10. Aufl. 1994, S.439-441 u. 441-442 bekannt sind,

B2) Isoproturon

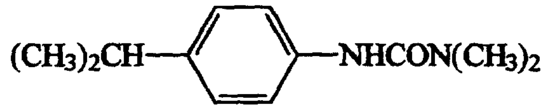

3-(4-Isopropylphenyl)-1,1-dimethylharnstoff Pesticide Manual, 10. Aufl. 1994, S.611-612,

B3) Diclofop,

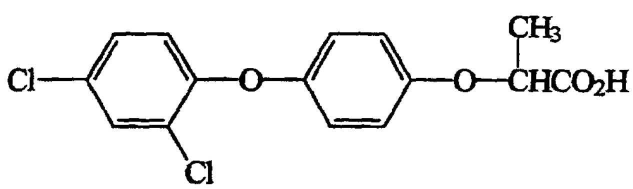

(*RS*) -2-[4-(2,4-Dichlorphenoxy)phenoxy]propionsäure umfassend u.a. als wichtigste Anwendungsform den Methylester, das Diclofop-methyl Pesticide Manual, 10. Aufl. 1994, S.315-317;

B4) Clodinafop,

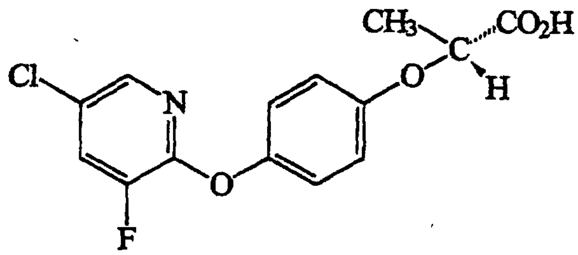

(*R*) -2-[4-(5-Chlor-3-fluor-2-pyridyloxy)phenoxy]propionsäure umfassend insbesondere auch die Anwendungsform als Clodinafop-propargyl Pesticide Manual, 10. Aufl. 1994, S.216-217

B5) Mischungen aus B4) und

Cloquintocet,

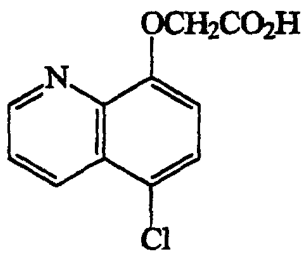

(5-Chlorchinolin-8-yloxy)essigsäure, welches auch als Cloquintocet-mexyl eingesetzt wird und einen besonders bevorzugten Safener für B4) darstellt, Pesticide Manual, 10. Aufl. 1994, S.226-227,

B6) Chlortoluron

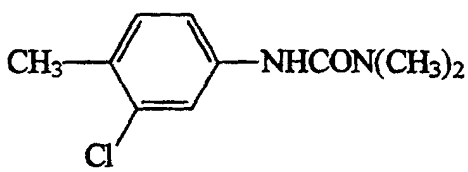

3-(3-Chlor-p-tolyl)-1,1-dimethylharnstoff Pesticide Manual, 10. Aufl. 1994, S.195-196,

B7) Methabenzthiazuron

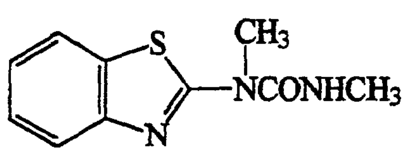

1-(1,3-Benzothiazol-2-yl)-1,3-dimethylharnstoff Pesticide Manual, 10. Aufl. 1994, S.670-671,

B8) Imazamethabenz,

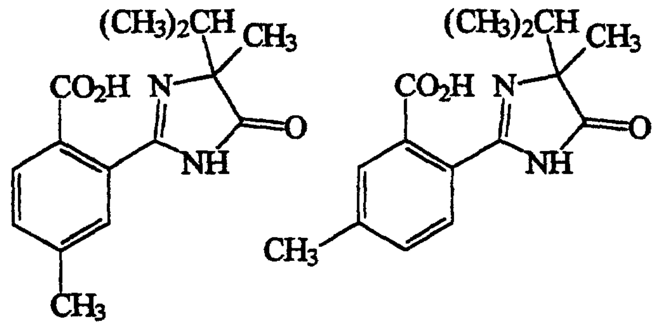

Reaktionsprodukt, aufweisend (±)-6-(4-Isopropyl-4-methyl-4-oxo-2-imidazolin-2-yl)-*m*-toluylsäure und (±)-6-(4-Isopropyl-4-methyl-4-oxo-2-imidazolin-2-yl)-*p*-toluylsäure,
wobei jeweils auch die unter der Bezeichnung Imazamethabenz-methyl bekannten Methylester eingesetzt werden können
Pesticide Manual, 10. Aufl. 1994, S.582-584,

B9) Tralkoxydim

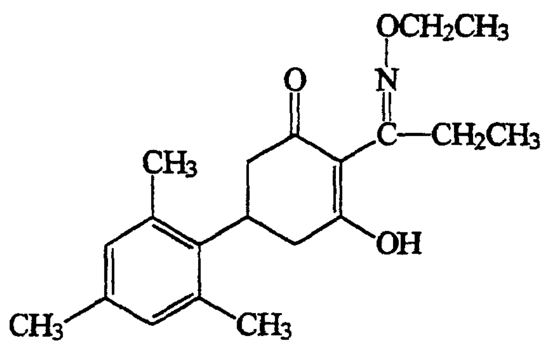

2-[1-(Ethoxyimino)propyl] -3-hydroxy-5-mesitylcyclohex-2-enon
Pesticide Manual, 10. Aufl. 1994, S.995-996,

B10)Difenzoquat,

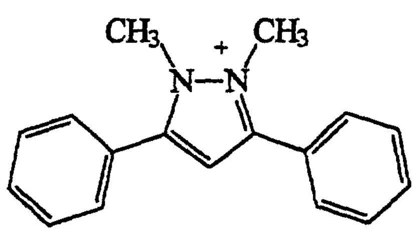

1,2-Dimethyl-3,5-diphenylpyrazolium z.B. auch als Difenzoquat-metilsulfat Pesticide Manual, 10. Aufl. 1994, S. 330-331

B11)Flamprop, Flamprop-M,

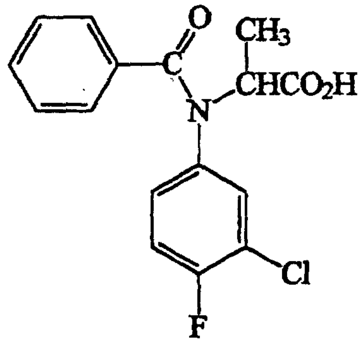 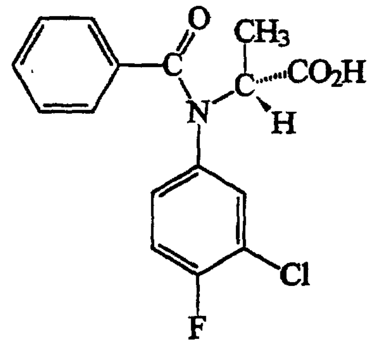

*N*-Benzoyl-*N*-(3-chlor-4-fluorophenyl)-DL-alanin *N*-Benzoyl-*N*-(3-chlor-4-fluorophenyl)-D-alanin umfassend u. a. auch Flamprop-methyl, Flamprop-M-methyl, Flamprop-M-isopropyl
Pesticide Manual, 10. Aufl. 1994, S.464-465 und 466-468 und

B12)Pendimethalin

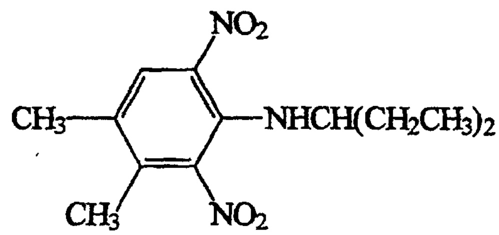

*N*-(1-Ethylpropyl)-2,6-dinitro-3,4-xylidin Pesticide Manual, 10. Aufl. 1994, S.779-780 besteht.

Bei den Verbindungen B1) bis B12) handelt es sich um beispielsweise aus der bei der jeweiligen Verbindung angegebenen Quelle bekannte, speziell in Getreide selektiv gegen Gräser wirksame Herbizide. Neben der Grundsubstanz, deren Formel regelmäßig zur Verdeutlichung mit angegeben ist, wird auch auf üblicherweise eingesetzte Abwandlungen der Grundsubstanzen hingewiesen. So wird beispielsweise B4) (Clodinafop) üblicherweise in Form des Propargylesters und Diclofop (B3)) als Methylester eingesetzt usw.. Sofern optische aktive Formen der Typ-B-Verbindungen üblich sind, wurde auch auf diese Formen Bezug genommen (z.B. Fenoxaprop-ethyl und Fenoxaprop-P-ethyl etc.).

Die Verbindungen B1), B3) und B4) gehören zur chemischen Substanzklasse der 2-(4-Aryloxyphenoxy)propionsäuren bzw. zu den Esterderivaten. B2), B6) und B7) sind Harnstoffe, während es sich bei B8) um einen Vertreter der Imidazolinone, bei B9) um ein Cyclohexandionoxim, bei B11) um ein Arylalanin und bei B12) um ein 2,6-Dinitroanilin handelt. Obwohl die Vertreter dieser Gruppe also durchaus relativ unterschiedliche chemische Strukturen aufweisen, bilden sie dennoch aufgrund ihres Wirkungsspektrums sowie der Tatsache, daß sie Synergisten für die Verbindungen der Formel I darstellen, eine zusammengehörige Untergruppe.

In weiterhin bevorzugter Ausführungsform der Erfindung enthalten die herbizid wirksamen Kombinationen als Herbizide vom Typ B ein oder mehrere selektiv in Mais vorwiegend gegen Gräser wirksame Herbizide aus der Gruppe, die aus

B13)Nicosulfuron

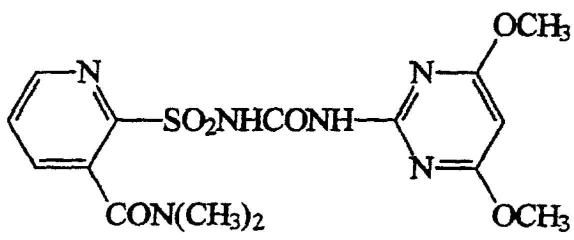

1-(4,6-Dimethoxypyrimidin-2-yl)-3-(3-dimethylcarbamoyl-2-pyridylsulfonyl)harnstoff Pesticide Manual, 10. Aufl. 1994, S.734-735,

B14)Rimsulfuron

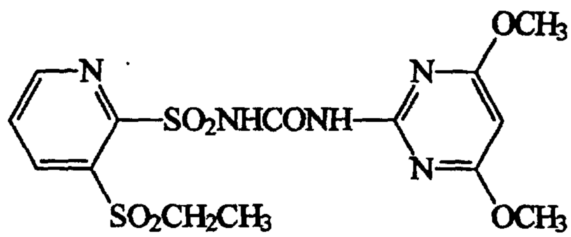

1-(4,6-Dimethoxypyrimidin-2-yl)-3-(3-ethylsulfonyl-2-pyridylsulfonyl)harnstoff Pesticide Manual, 10. Aufl. 1994, S. 904-905
und

B15)Primisulfuron

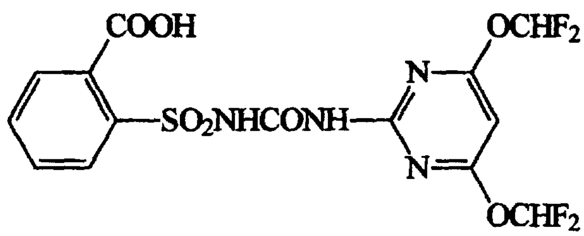

2-[4,6-bis(difluoromethoxy)pyrimidin-2-ylcarbamoylsulfamoyl]benzoesäure das vorwiegend als Primisulfuron-methyl eingesetzt wird, Pesticide Manual, 10. Aufl. 1994, S.829-830

besteht.

Die genannten Verbindungen B13) bis B15) gehören zur chemischen Gruppe der Sulfonylharnstoffe. Sie sind von den Sulfonylharnstoffen der allgemeinen Formel I strukturell verschieden.

Besonders vorteilhafte Mischungen ergeben sich im Rahmen der Erfindung, wenn als Typ-B-Verbindungen Diclofop-methyl, Fenoxaprop-P-ethyl, Isoproturon, Mischungen von Clodinafop-propargyl mit Cloquintocet-mexyl (bekannt unter der geschützten Bezeichnung Topik® ), Imazamethabenz-methyl, Nicosulfuron und/oder Rimsulfuron in der erfindungsgemäßen Kombination enthalten sind.

Weitere zur Erfindung gehörende Mittel sind solche, die Herbizide vom Typ B aus der Untergruppe Bb) enthalten. Hierbei finden besonders vorteilhaft ein oder mehrere selektiv in Getreide und/oder in Mais gegen Dikotyle wirksame Herbizide aus der Gruppe B16) bis B33) Anwendung, welche Aryloxyalkylcarbonsäuren, Hydroxybenzonitrile, Diphenylether, Azole und Pyrazole, Diflufenican und Bentazon umfaßt.

Unter den möglichen Aryloxyalkylcarbonsäuren wiederum sind solche Herbizide bevorzugt, die aus der Gruppe ausgewählt sind, die aus

B16)Mecoprop, Mecoprop-P

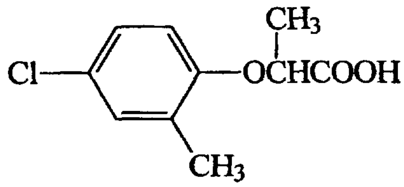

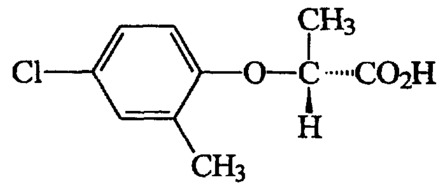

(*RS*) -2-(4-Chlor-o-tolyloxy)propionsäure
(*R*)-2-(4-Chlor-o-tolyloxy)propionsäure
Pesticide Manual, 10. Aufl. 1994, S.646-647 und 647-648,

B17)MCPA

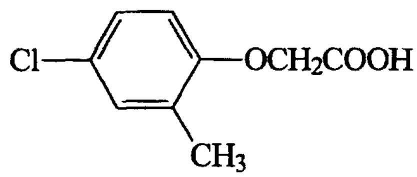

(4-Chlor-2-methylphenoxy)essigsäure,
vorwiegend eingesetzte Formen sind u. a. MCPA-butotyl, MCPA-dimethylammonium, MCPA-isoctyl, MCPA-Kalium, MCPA-Natrium,
Pesticide Manual, 10. Aufl. 1994, S.638-640,

B18)Dichlorprop, Dichlorprop-P

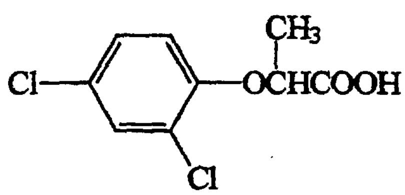

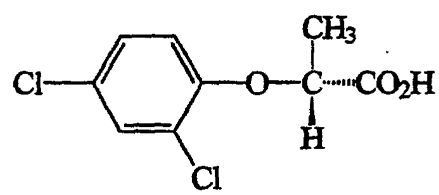

(*RS*)-2-(2,4-Dichlorphenoxy)propionsäure
(*R*)-2-(2,4-Dichlorphenoxy)propionsäure gebräuchlich sind u. a. auch Dichlorprop-butotyl, Dichlorprop-ethylammonium, Dichlorprop-iso-octyl, Dichlorprop-Kalium
Pesticide Manual, 10. Aufl. 1994, S.309-311 und 311-312,

B19)2,4-D

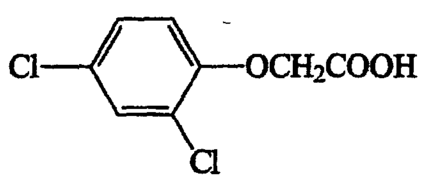

(2,4-Dichlorphenoxy)essigsäure
häufig eingesetzte Formen: 2,4-D-butotyl, 2,4-D-butyl, 2,4-D-dimethylammonium, 2,4-D-diolamin, 2,4-D-isooctyl, 2,4-D-isopropyl, 2,4-D-trolamin,
Pesticide Manual, 10. Aufl. 1994, S.271-273,

B20)Dicamba

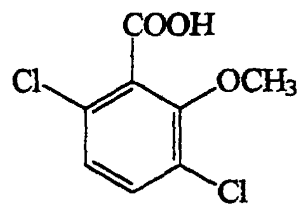

3,6-Dichlor-*o*-anissäure
angewendet u.a. als Dicamba-dimethylammonium, Dicamba-Kalium, Dicamba-Natrium, Dicamba-trolamin, Pesticide Manual, 10. Aufl. 1994, S.298-300 und

B21)Fluroxypyr

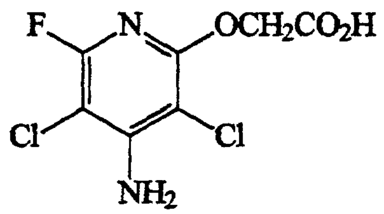

4-Amino-3,5-dichlor-6-fluor-2-pyridyloxyessigsäure, weitere Anwendungsform: Fluroxypyr-meptyl, Pesticide Manual, 10. Aufl. 1994, S.505-507

besteht.

Von besonderem Interesse sind auch herbizide Mittel mit selektiv in Getreide und/oder Mais gegen Dikotyle wirksamen Hydroxybenzonitrilen. Hierzu gehören bevorzugt

B22)Ioxynil

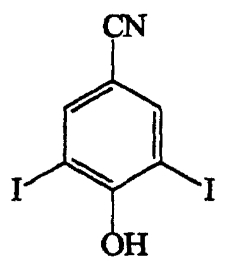

4-Hydroxy-3,5-di-iodobenzonitril,
häufige Anwendungsformen: Ioxynil-octanoat, Ioxynil-Natrium,
Pesticide Manual, 10. Aufl. 1994, S.598-600 und

B23)Bromoxynil

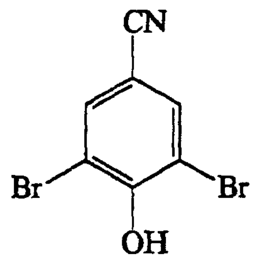

3,5-Dibromo-4-hydroxy-benzonitril
häufig angewendet als Bromoxynil-octanoat, Bromoxynil-Kalium,
Pesticide Manual, 10. Aufl. 1994, S.121-123.

Weitere vorteilhafte erfindungsgemäße Mittel zeichnen sich dadurch aus, daß sie als Herbizide vom Typ B) ein oder mehrere selektiv in Getreide und/oder Mais gegen Dikotyle wirksame Diphenylether enthalten, welche aus den Herbiziden B24)Bifenox

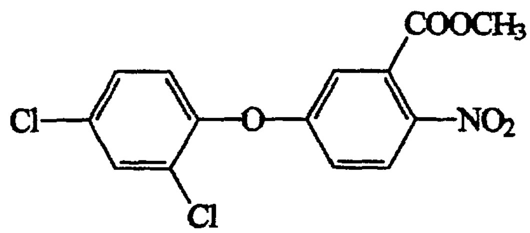

Methyl-5-(2,4-Dichlorphenoxy)-2-nitrobenzoat Pesticide Manual, 10. Aufl. 1994, S.94-96,

B25)Fluoroglycofen

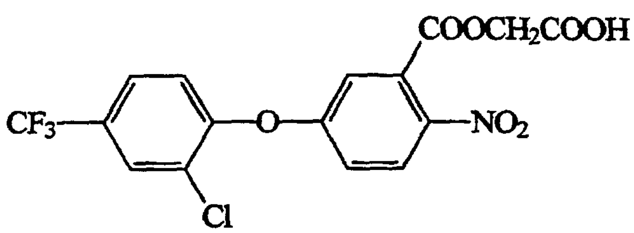

Ethyl-*O*-[5-(2-Chlor-α,α,α-trifluor-p-tolyloxy)-2-nitrobenzoyl]glycolsäure,
weitere Einsatzform: Fluoroglycofen-ethyl,
Pesticide Manual, 10. Aufl. 1994, S.492-494,

B26)Acifluorfen

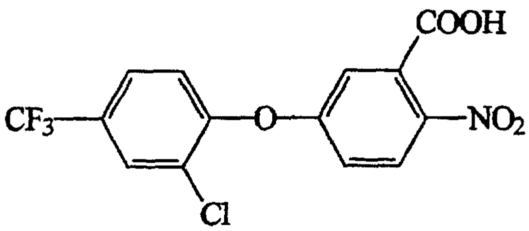

5-(2-Chlor-α,α,α-trifluor-p-tolyloxy)-2-nitrobenzoesäure,
auch verwendet als Acifluorfen-Natrium,
Pesticide Manual, 10. Aufl. 1994, S.12-13,

B27)Lactofen

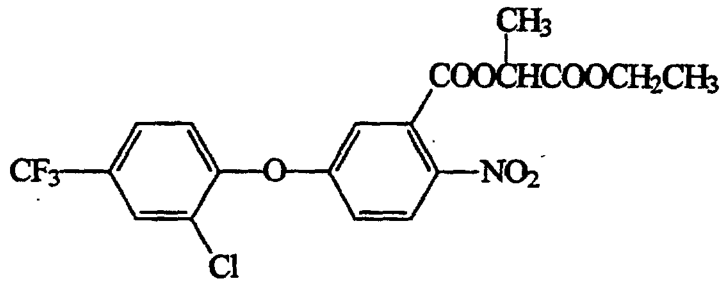

O-[5-(2-Chlor-α,α,α-trifluor-p-tolyloxy)-2-nitrobenzoyl]-DL-lactat
Pesticide Manual, 10. Aufl. 1994, S.623,

B28) Fomesafen

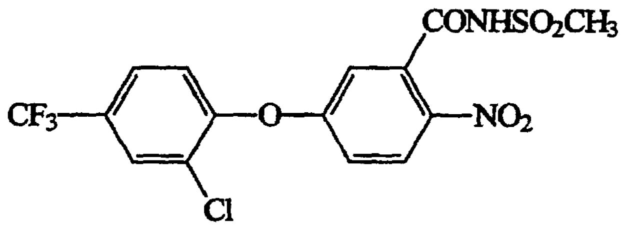

5- (2-Chlor-α,α,α-trifluor-p-tolyloxy) -N-methylsulfonyl-2-nitrobenzamid,
eingesetzt auch als Fomesafen-Natrium,
Pesticide Manual, 10. Aufl. 1994, S.520-521 und

B29)Oxyfluorfen

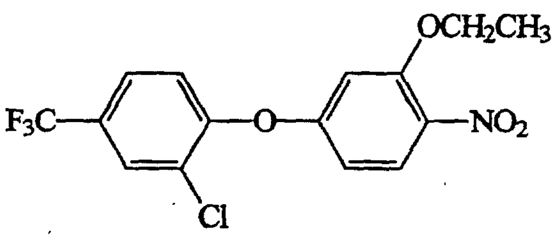

2-Chlor-α,α,α-trifluoro-p-tolyl-3-ethoxy-4-nitrophenylether
Pesticide Manual, 10. Aufl. 1994, S.764-765

ausgewählt sind.

Auch noch von besonderem Interesse sind herbizide Mittel, die als Verbindung vom Typ B ein oder mehrere selektiv in Getreide und/oder Mais gegen Dikotyle wirksame Azole und Pyrazole enthalten, welche aus der Gruppe ausgewählt sind, die aus den Herbiziden

B30)ET-751

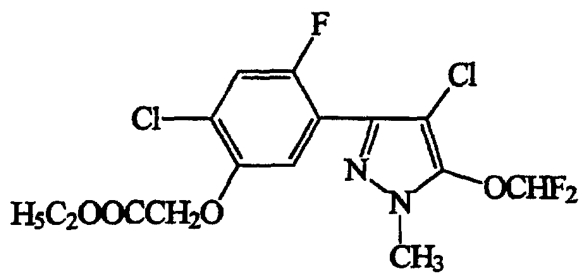

Ethyl 2-Chlor-5-(4-Chlor-5-difluoromethoxy-1-methylpyrazol-3-yl)-4-fluorophenoxyacetat
Pesticide Manual, 10. Aufl. 1994, S.400 und

B31)Azolen der allgemeinen Formel II

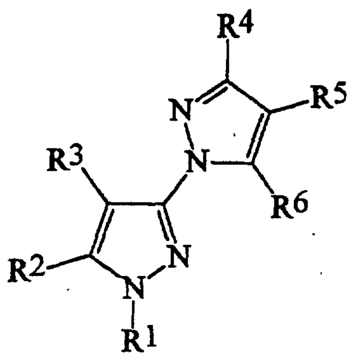

(II),

worin

| | |
|---|---|
| $R^1$ | $(C_1\text{-}C_4)$-Alkyl ist, |
| $R^2$ | $(C_1\text{-}C_4)$-Alkyl, $(C_1\text{-}C_4)$-Alkylthio oder $(C_1\text{-}C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1\text{-}C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1\text{-}C_4)$-Alkyl, $(C_1\text{-}C_4)$-Alkylthio oder $-NR^{11}R^{12}$ ist, |
| $R^7$ und $R^8$ | gleich oder verschieden Wasserstoff oder $(C_1\text{-}C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1\text{-}C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1\text{-}C_4)$-Alkyl oder $(C_1\text{-}C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

wobei die Azole der allgemeinen Formel II u. a. aus der WO 94/08999 bekannt sind,
besteht.

Bevorzugt als Typ B Verbindung ist auch
B32)Diflufenican

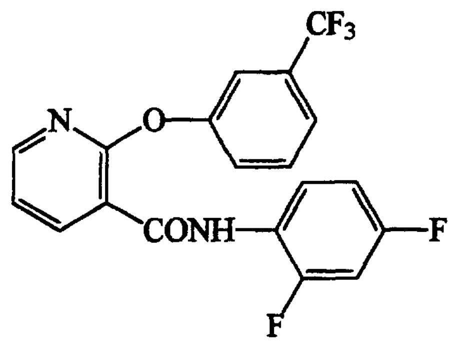

2',4'-Difluor-2-(α,α,α-trifluoro-m-tolyloxy)nicotinanilid
Pesticide Manual, 10. Aufl. 1994, S.335-336.

Eine weitere vorteilhafte Ausführungsform der Erfindung kennzeichnet sich dadurch, daß ein herbizides Mittel als Herbizid vom Typ B
B33)Bentazon

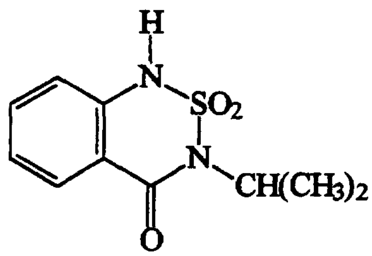

3-Isopropyl-1*H*-2,1,3-benzothiadiazin-4(3*H*)-on-2,2-dioxid
Pesticide Manual, 10. Aufl. 1994, S.90-91,
enthält.

Von den Typ B Verbindungen mit Selektivität in Getreide und/oder Mais und Wirksamkeit gegen Dikotyle {Untergruppe Bb) mit den herbiziden Wirkstoffen B16) - B33) sowie deren gebräuchlichen Abbkömmlingen} eignen sich MCPA, Mecoprop, Dicamba, Fluroxypyr, Diflufenican, Ioxynil und/oder Fluoroglycofen als Bestandteil eines erfindungsgemäßen herbiziden Mittels ganz besonders.

Eine dritte Untergruppe von Verbindungen, deren Zumischung zu Verbindungen des Typs A die Erzielung von herbiziden Mitteln mit herausragenden Eigenschaften gestattet ist die Untergruppe Bc) der selektiv in Getreide und/oder Mais gegen Gräser und Dikotyle wirksamen Herbizide mit den Typ-B-Verbindungen B34) bis B51). Typ-B-Substanzen mit diesem Wirkungsprofil finden sich bevorzugt in den chemischen Substanzklassen der Triazinderivate, Chloracetanilide und der Sulfonylharnstoffe, die von den in Formel I angegebenen Sulfonylharnstoffen verschieden sind.

Vertreter sind u. a. solche, die vorwiegend selektiv in Getreide und gegebenenfalls in Mais gegen Gräser und Dikotyle eingesetzt werden können. Hierzu gehören vor allem die herbizid wirksamen Triazinderivate und Chloracetanilide, die aus der Gruppe ausgewählt sind, welche die Wirkstoffe

B34)Metolachlor

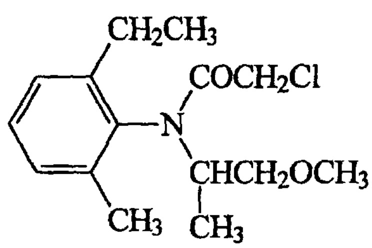

2-Chlor-6'-ethyl-*N*-(2-methoxy-1-methylethyl)acet-*o*-toluidid
Pesticide Manual, 10. Aufl. 1994, S.693-694,

B35)Metribuzin

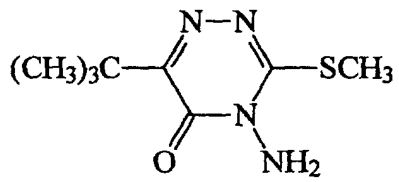

4-Amino-6-*tert*-butyl-4,5-dihydro-3-methylthio-1,2,4-triazin-5-on
Pesticide Manual, 10. Aufl. 1994, S.699-700,

B36)Atrazin

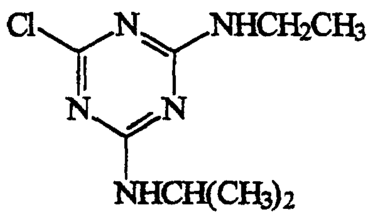

6-Chlor-$N^2$-ethyl-$N^4$-isopropyl-1,3,5-triazin-2,4-diamin
Pesticide Manual, 10. Aufl. 1994, S.51-52,

B37)Terbuthylazin

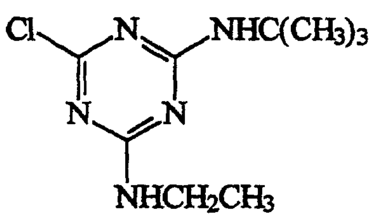

$N^2$-*tert*-butyl-6-chlor-$N^4$-ethyl-1,3,5-triazin-2,4-diamin
Pesticide Manual, 10. Aufl. 1994, S.960-961,

B38)Alachlor

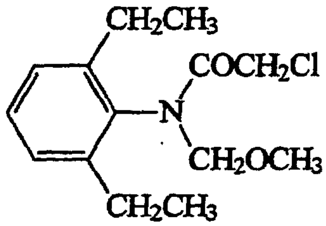

2-Chlor-2',6'-diethyl-*N*-methoxymethylacetanilid
Pesticide Manual, 10. Aufl. 1994, S.21-22,

B39)Acetochlor

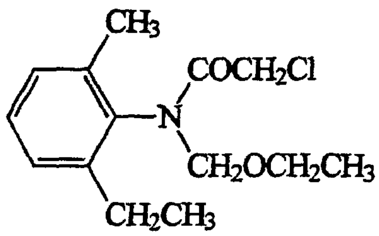

2-Chlor-*N*-ethoxymethyl-6'-ethylacet-*o*-toluidid
Pesticide Manual, 10. Aufl. 1994, S.10-11 und

B40)Dimethenamid

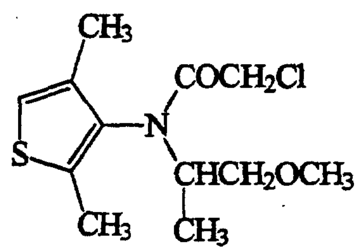

(*RS*) -2-Chlor-*N*-(2,4-dimethyl-3-thienyl) -*N*- (2-methoxy-1-methylethyl)acetamid
Pesticide Manual, 10. Aufl. 1994, S.345-346

umfaßt.

Ferner weisen die herbiziden Mittel der Erfindung in vorteilhafter Ausgestaltung als Komponente vom Typ B ein oder mehrere selektiv in Getreide und gegebenenfalls selektiv in Mais gegen Gräser und Dikotyle wirksame Sulfonylharnstoffe auf, die von den Typ A Verbindungen verschiedenen sind. Besonders bevorzugte Sulfonylharnstoffe dieser Art sind u. a.

B41)Amidosulfuron

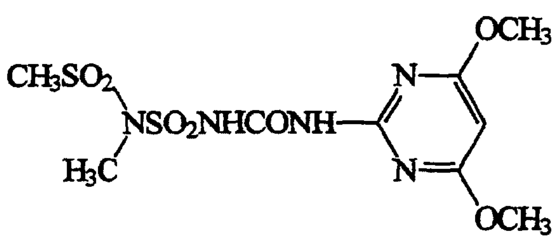

1-(4,6-Dimethoxypyrimidin-2-yl)-3-mesyl(methyl)sulfamoylharnstoff
Pesticide Manual, 10. Aufl. 1994, S.34-35,

B42)Metsulfuron

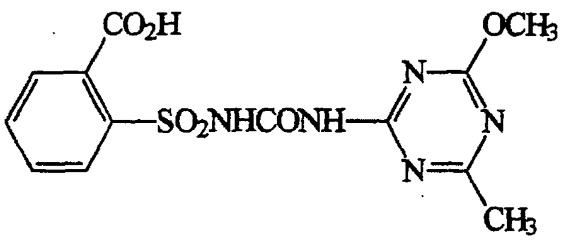

2-(4-Methoxy-6-methyl-1,3,5-triazin-2-ylcarbamoylsulfamoyl)benzoesäure, üblicherweise eingesetzt als Metsulfuron-methyl,

Pesticide Manual, 10. Aufl. 1994, S.701-702,

B43)Tribenuron

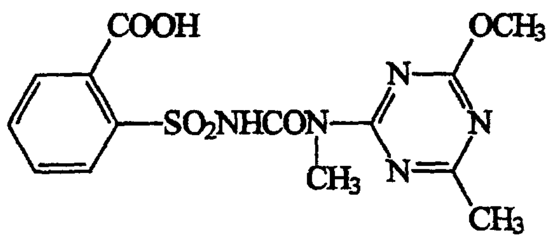

2-[4-Methoxy-6-methyl-1,3,5-triazin-2-yl(methyl)carbamoylsulfamoyl]benzoesäure, üblicherweise eingesetzt als Tribenuron-methyl

Pesticide Manual, 10. Aufl. 1994, S.1010-1011,

B44)Thifensulfuron

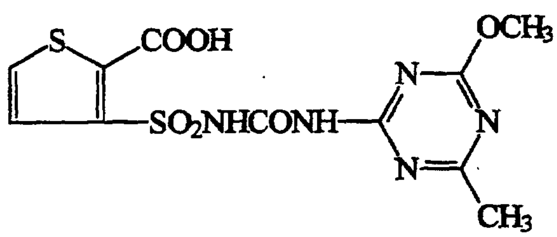

3-(4-Methoxy-6-methyl-1,3,5-triazin-2-ylcarbamoylsulfamoyl)thiophen-2-carbonsäure, meist verwendet als Thifensulfuron-methyl

Pesticide Manual, 10. Aufl. 1994, S.976-978,

B45)Triasulfuron

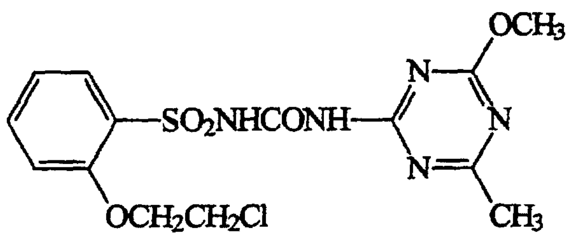

1-[2-(2-Chloroethoxy)phenylsulfonyl]-3-(4-methoxy-6-methyl-1,3,5-triazin-2-yl)harnstoff
Pesticide Manual, 10. Aufl. 1994, S.1005-1006,

B46)Chlorsulfuron

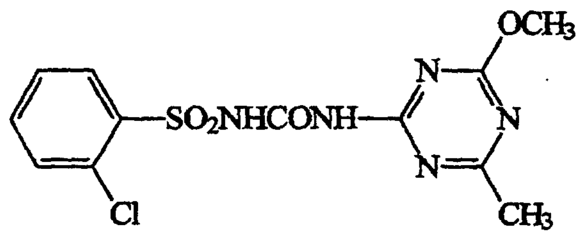

1-(2-Chlorphenylsulfonyl)-3- (4-methoxy-6-methyl-1,3,5-triazin-2-yl)harnstoff
Pesticide Manual, 10. Aufl. 1994, S.203-205,

B47)Prosulfuron oder CGA-152005

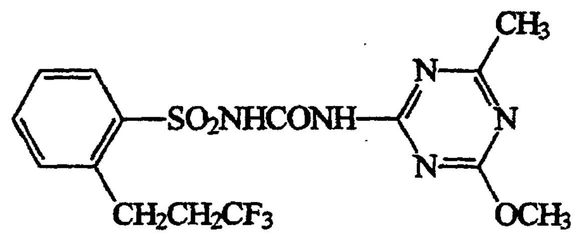

1-(4-Methoxy-6-methyl-1,3,5-triazin-2-yl)-3-[2-(3,3,3-trifluoropropyl)phenylsulfonyl]harnstoff
Pesticide Manual, 10. Aufl. 1994, S.865-866,

B48)Sulfonylharnstoffe der allgemeinen Formel III

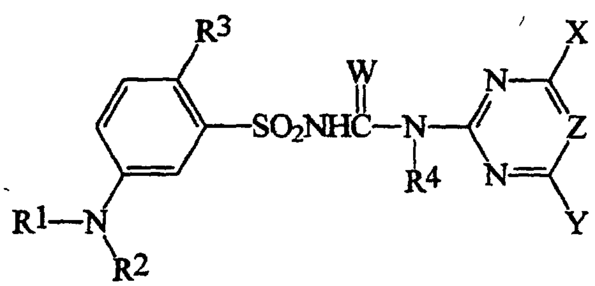 (III),

worin

| | |
|---|---|
| $R^1$ | $(C_1-C_4)$-Alkyl, $(C_2-C_4)$-Alkenyl oder $(C_2-C_4)$-Alkinyl, vorzugsweise $(C_1-C_4)$-Alkyl, Allyl oder Propargyl, |
| $R^2$ | CO-$R^5$, COO$R^6$, CO-N$R^8R^9$, CS-N$R^{10}R^{11}$, $SO_2R^{14}$ oder $SO_2NR^{15}R^{16}$ |
| $R^3$ | $COR^{17}$, $COOR^{18}$, $CONR^{19}R^{20}$ oder CO-ON=$CR^{22}R^{23}$, vorzugsweise $COOR^{18}$, |
| $R^4$ | Wasserstoff oder $(C_1-C_4)$-Alkyl, vorzugsweise Wasserstoff oder Methyl, |
| $R^5$ | Wasserstoff, $(C_1-C_6)$-Alkyl, das unsubstituiert oder durch einen oder mehrere Reste aus der Gruppe Halogen, $(C_1-C_4)$-Alkoxy, $(C_1-C_4)$-Alkylthio oder $NR^{31}R^{32}$ substituiert ist, oder $(C_3-C_6)$-Cycloalkyl, unsubstituiertes oder substituiertes Phenyl, unsubstituiertes oder substituiertes Benzyl oder unsubstituiertes oder substituiertes Heteroaryl, vorzugsweise H, $(C_1-C_6)$-Alkyl, $(C_1-C_4)$-Haloalkyl, Cyclopropyl, Cyclopentyl, Cyclohexyl, Phenyl oder Heteroaryl, wobei die |

letztgenannten zwei Reste unsubstituiert oder durch einen oder mehrere Reste aus der Gruppe ($C_1$-$C_4$)-Alkyl, ($C_1$-$C_4$)-Alkoxy und Halogen substituiert sind,

| | |
|---|---|
| $R^6$ | ($C_1$-$C_6$)-Alkyl, ($C_2$-$C_6$)-Alkenyl, ($C_2$-$C_6$)-Alkinyl, ($C_1$-$C_6$)-Haloalkyl oder ($C_3$-$C_6$)-Cycloalkyl, vorzugsweise ($C_1$-$C_4$)-Alkyl, ($C_1$-$C_4$)-Haloalkyl, Allyl, Propargyl oder ($C_3$-$C_6$)-Cyclopropyl, |
| $R^7$ | ($C_1$-$C_4$)-Alkyl, |
| $R^8$ | Wasserstoff, ($C_1$-$C_6$)-Alkyl, ($C_1$-$C_4$)-Haloalkyl, ($C_1$-$C_4$)-Alkoxy oder ($C_1$-$C_4$-Alkoxy)-carbonyl, |
| $R^9$ | Wasserstoff, ($C_1$-$C_6$)-Alkyl, das unsubstituiert oder durch einen oder mehrere Reste aus der Gruppe Halogen, ($C_1$-$C_4$)-Alkoxy und $NR^{31}R^{32}$ substituiert ist, oder $CO-R^{33}$, $CO-OR^{34}$ oder $CO-NR^{35}R^{36}$ oder |
| $R^8$ und $R^9$ | zusammengenommen einen bivalenten Rest der Formel $-(CH_2)_4-$, $-(CH_2)_5-$ oder $-CH_2CH_2-O-CH_2CH_2-$, |
| $R^{10}$ | analog $R^8$, |
| $R^{11}$ | analog $R^9$, |
| $R^{12}$ | analog $R^6$, |
| $R^{13}$ | analog $R^6$, |
| $R^{14}$ | ($C_1$-$C_6$)-Alkyl, ($C_1$-$C_6$)-Haloalkyl, vorzugsweise ($C_1$-$C_4$)-Alkyl oder ($C_1$-$C_4$)-Haloalkyl, |
| $R^{15}$, $R^{16}$ | unabhängig voneinander gleich oder verschieden Wasserstoff oder ($C_1$-$C_4$)-Alkyl, |
| $R^{17}$ | Wasserstoff, ($C_1$-$C_4$)-Alkyl, ($C_1$-$C_4$)-Haloalkyl, ($C_3$-$C_6$)-Cycloalkyl, Phenyl oder Heteroaryl, wobei die letztgenannten zwei Reste unsubstituiert oder substituiert sind, |
| $R^{18}$ | Wasserstoff, ($C_1$-$C_4$)-Alkyl, ($C_2$-$C_6$)-Alkenyl oder ($C_2$-$C_6$)-Alkinyl , wobei die letztgenannten drei Reste unsubstituiert oder durch einen oder mehrere Reste aus der Gruppe Halogen, ($C_1$-$C_4$)-Alkoxy, ($C_1$-$C_4$)-Alkylthio und $NR^{31}R^{32}$ substituiert sind, oder ($C_3$-$C_6$)-Cycloalkyl oder ($C_3$-$C_6$)-Cycloalkyl-($C_1$-$C_3$)-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder ($C_1$-$C_2$)-Alkyl sind, |
| $R^{29}$ | Wasserstoff, Hydroxy, Amino, $NHCH_3$, $N(CH_3)_2$, ($C_1$-$C_4$)-Alkyl oder ($C_1$-$C_4$)-Alkoxy, |
| $R^{30}$ | Wasserstoff oder ($C_1$-$C_4$)-Alkyl, |
| die $R^{31}$ u. $R^{32}$ | unabhängig voneinander gleich oder verschieden Wasserstoff oder ($C_1$-$C_4$)-Alkyl, |
| $R^{33}$ | Wasserstoff, ($C_1$-$C_4$)-Alkyl, ($C_1$-$C_4$)-Haloalkyl, ($C_3$-$C_6$)-Cycloalkyl oder Phenyl, das unsubstituiert oder durch einen oder mehrere Reste aus der Gruppe Halogen, ($C_1$-$C_4$)-Alkyl und ($C_1$-$C_4$)-Alkoxy substituiert ist, |
| $R^{34}$ | ($C_1$-$C_4$)-Alkyl, Allyl, Propargyl oder Cycloalkyl, |
| $R^{35}$ u. $R^{36}$ | unabhängig voneinander gleich oder verschieden Wasserstoff oder ($C_1$-$C_4$)-Alkyl, |
| W | Sauerstoff oder Schwefel, |
| X | ($C_1$-$C_4$)-Alkyl, ($C_1$-$C_4$)-Alkoxy, ($C_1$-$C_4$)-Haloalkyl, ($C_1$-$C_4$)-Alkylthio, Halogen oder Mono- oder Di-($C_1$-$C_2$-alkyl)-amino, vorzugsweise Methyl, Ethyl, Methoxy, Ethoxy, Methylthio, Ethylthio, Chlor, Chlor, $NHCH_3$ oder $N(CH_3)_2$, |
| Y | ($C_1$-$C_4$)-Alkyl, ($C_1$-$C_4$)-Alkoxy, ($C_1$-$C_4$)-Haloalkyl oder ($C_1$-$C_4$)-Alkylthio, vorzugsweise Methyl, Ethyl, Methoxy, Ethoxy und |
| Z | CH oder N |

bedeutet,

wobei die Sulfonylharnstoffe der allgemeinen Formel III aus WO 94/10154 bekannt sind,

wobei von besonderem Interesse als Kombinationspartner B) Verbindungen der allgemeinen Formel III sind, worin

| | |
|---|---|
| $R^1$ | Methyl, Ethyl, n-Propyl, i-Propyl oder Allyl, |
| $R^2$ | $CO-R^5$, $COOR^6$, $CO-NR^8R^9$, $CS-NR^{10}R^{11}$, $SO_2R^{14}$ oder $SO_2NR^{15}R^{16}$, |
| $R^3$ | $COR^{17}$, $COOR^{18}$, $CONR^{19}R^{20}$ oder $CO-ON=CR^{22}R^{23}$ ist, |
| $R^4$ | Wasserstoff oder ($C_1$-$C_4$)-Alkyl ist, |
| $R^5$ | Wasserstoff, ($C_1$-$C_4$) -Alkyl, ($C_1$-$C_2$)-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind, |
| $R^6$ | ($C_1$-$C_4$)-Alkyl, Allyl, Propargyl oder Cyclopropyl ist, |
| $R^8$ | Wasserstoff, ($C_1$-$C_4$)-Alkyl, ($C_1$-$C_4$)-Haloalkyl oder ($C_1$-$C_4$-Alkoxy)-carbonyl ist |
| $R^9$-$R^{11}$ | unabhängig voneinander gleich oder verschieden H oder ($C_1$-$C_4$)-Alkyl sind, |
| $R^{14}$ | ($C_1$-$C_4$)-Alkyl ist, |

$R^{15}$ u. $R^{16}$ unabhängig voneinander gleich oder verschieden Wasserstoff oder $(C_1-C_4)$-Alkyl sind,
$R^{17}$ Wasserstoff, $(C_1-C_4)$-Alkyl, $(C_1-C_4)$-Haloalkyl, $(C_3-C_6)$-Cycloalkyl, Phenyl oder Heteroaryl ist, wobei die letztgenannten zwei Reste unsubstituiert oder substituiert sind,
$R^{18}$ Wasserstoff, $(C_1-C_4)$-Alkyl, $(C_2-C_6)$-Alkenyl oder $(C_2-C_6)$-Alkinyl , wobei die letztgenannten drei Reste unsubstituiert oder durch einen oder mehrere Reste aus der Gruppe Halogen, $(C_1-C_4)$-Alkoxy, $(C_1-C_4)$-Alkylthio und $NR^{31}R^{32}$ substituiert sind, oder $(C_3-C_6)$-Cycloalkyl oder $(C_3-C_6)$-Cycloalkyl-$(C_1-C_3)$-Alkyl,
$R^{19}$ analog $R^8$
$R^{20}$ analog $R^9$
$R^{22}$ u. $R^{23}$ unabhängig voneinander gleich oder verschieden Wasserstoff oder $(C_1-C_2)$-Alkyl sind,
$R^{31}$ u. $R^{32}$ unabhängig voneinander gleich oder verschieden Wasserstoff oder $(C_1-C_4)$-Alkyl sind,
W Sauerstoff oder Schwefel ist,
X $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2\text{-alkyl})$-amino ist,
Y $(C_1-C_4)$-Alkyl, $(C_1-C_4)$-Alkoxy, $(C_1-C_4)$-Haloalkyl oder $(C_1-C_4)$-Alkylthio ist, und
Z CH oder N

bedeutet,
wobei von ganz besonderem Interesse als Kombinationspartner B) auch Verbindungen der allgemeinen Formel III sind,
worin

$R^1$ Methyl, Ethyl, n-Propyl, i-Propyl oder Allyl.
$R^2$ $CO-R^5$, $COOR^6$, $CO-NR^8R^9$, $CS-NR^{10}R^{11}$, $SO_2R^{14}$ oder $SO_2NR^{15}R^{16}$,
$R^5$ Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind,
$R^6$ $(C_1-C_4)$-Alkyl, Allyl, Propargyl oder Cyclopropyl,
$R^8$ Wasserstoff, $(C_1-C_4)$-Alkyl, $(C_1-C_4)$-Haloalkyl oder $(C_1-C_4\text{-Alkoxy})$-carbonyl
$R^9$-$R^{11}$ unabhängig voneinander gleich oder verschieden H oder $(C_1-C_4)$-Alkyl,
$R^{14}$ $(C_1-C_4)$-Alkyl und
$R^{15}$ u. $R^{16}$ unabhängig voneinander gleich oder verschieden Wasserstoff oder $(C_1-C_4)$-Alkyl,

bedeutet,
wobei außerordentlich zweckmäßige Kombinationspartner B) Verbindungen der allgemeinen Formel III sind,
worin

$R^5$ H, $CH_3$, $C_2H_5$, n- oder i-$C_3H_7$, n-, i-, t- oder 2-Butyl, n-Pentyl, $CF_3$, $CH_2Cl$, $CCl_3$, $CH_2Br$, $CH_2CCl_3$, Cyclopropyl, Phenyl, Thienyl, Furyl oder Pyridyl, wobei die letztgenannten vier Reste durch 1 bis 3 Halogenatome substituiert sein können,

bedeutet,

B49)Flupyrsulfuron (DPX-KE459)

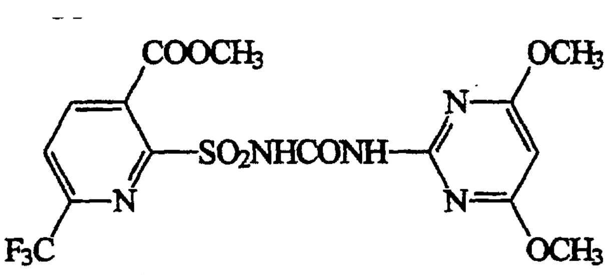
,

bevorzugt als Natriumsalz,
vorgestellt auf der Brighton Crop Protection Conference Weeds 1995,

und/oder

B50)Sulfosulfuron (MON37500)

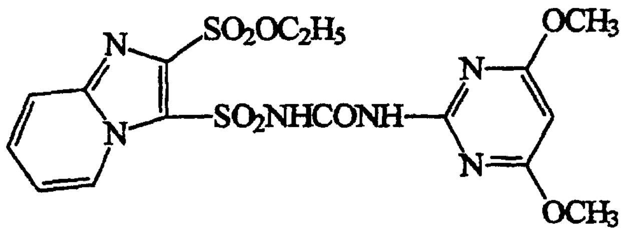

,

vorgestellt auf der Brighton Crop Protection Conference Weeds 1995.

Weiterhin weisen die herbiziden Mittel der Erfindung in noch einer weiteren bevorzugten Ausführungsform als Komponente vom Typ B
B51)KIH-2023

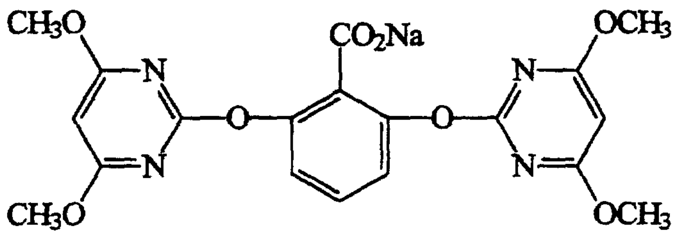

Natrium 2,6-Bis[(4,6-dimethoxypyrimidin-2-yl)oxy]benzoat
Pesticide Manual, 10. Aufl. 1994, S.620 auf.

Von den Typ B Verbindungen mit Selektivität in Getreide und/oder Mais und Wirksamkeit gegen Gräser und Dikotyle {Untergruppe Bc) mit den herbiziden Wirkstoffen B34) - B51) sowie deren gebräuchlichen Abbkömmlingen} eignen sich Atrazin, Metsulfuron-methyl, Tribenuron-methyl und/oder Amidosulfuron ganz besonders als Bestandteil eines erfindungsgemäßen herbiziden Mittels.

Eine vierte Untergruppe von Verbindungen, deren Zumischung zu Verbindungen des Typs A die Erzielung von herbiziden Mitteln mit überadditiver Wirksamkeit gestattet, ist die Untergruppe Bd) der im Nichtkulturland nichtselektiven und/oder in transgenen Kulturen selektiven Herbizide mit Wirkung gegen Ungräser und Unkräuter. Typ B Substanzen die diese Beschreibung erfüllen sind u. a.

B52)Glufosinate, Glufosinate-P

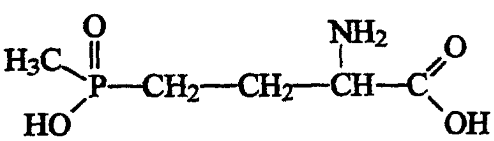

,

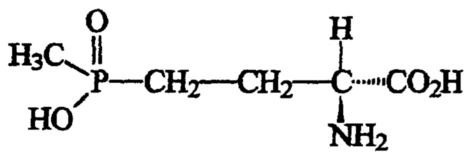

4-[Hydroxy(methyl)phosphinoyl]-DL-homoalanin,
4-[Hydroxy(methyl)phosphinoyl]-L-homoalanin,
die jeweils bevorzugt als Glufosinate-Ammonium oder Glufosinate-P-Ammonium verwendet werden,
Pesticide Manual, 10. Aufl. 1994, S.541-542 und/oder

B53)Glyphosate

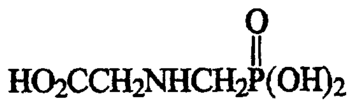

*N*-(Phosphonomethyl)glycin,
das bevorzugt als Glyphosate-isopropylammonium,
Glyphosate-sesquinatrium, Glyphosate-trimesium eingesetzt wird,
Pesticide Manual, 10. Aufl. 1994, S.542-544.

Kombinationen aus den Wirkstoffen A + B zeigen überadditive Effekte, d. h. bei gleicher Kontrolle der Schadpflanzen wird es durch die erfindungsgemäßen herbiziden Mittel möglich, die Aufwandmenge zu senken und/oder die Sicherheitsmarge auf vor allem Getreide und/oder Mais-Kulturen zu erhöhen. Beides ist sowohl ökonomisch als auch ökolgisch sinnvoll. Die Wahl der von den Komponenten A + B einzusetzenden Mengen, das Verhältnis der Komponenten A : B und die zeitliche Reihenfolge der Ausbringung sind dabei ebenso wie beispielsweise die zu wählende Formulierung von einer ganzen Reihe von Faktoren abhängig. In diesem Zusammenhang nicht unbedeutend sind u. a. die Art der Mischungspartner, das Entwicklungsstadium der Unkräuter oder Ungräser, das zu bekämpfende Unkrautspektrum, Umweltfaktoren, Klimabedingungen, Bodenverhältnisse etc.

In ganz besonders bevorzugter erfindungsgemäßer Ausführungsform kennzeichnen sich erfindungsgemäße herbizide Mittel dadurch, daß sie einen synergistisch wirksamen Gehalt einer Kombination der Verbindungen der Formel I oder deren Salze (Typ-A-Verbindungen) mit Verbindungen aus der Gruppe B aufweisen. Dabei ist vor allem hervorzuheben, daß selbst in Kombinationen mit Aufwandmengen oder Gewichtsverhältnissen von A:B, bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Gewichtsverhältnisse A:B der kombinierten Herbizide können wie erwähnt ebenso wie deren Aufwandmengen innerhalb weiter Grenzen schwanken. Im Rahmen der Erfindung werden Mittel eingesetzt, welche Verbindungen der Formel I oder deren Salze (Typ-A-Verbindungen) und Verbindungen aus der Gruppe B in einem Gewichtsverhältnis von 1:2500 bis 20:1 enthalten.

Vorzugsweise werden folgende Gewichtsverhältnisse angewendet:

| Typ-B-Verbindungen | Mischungsverhältnisse A:B | |
|---|---|---|
| | Standard | bevorzugt |
| Ba) Gräserherbizide in Getreide {z.B. B1) - B12)} | 1:500 bis 1:1 | 1:200 bis 1:2 |
| Ba) Gräserherbizide in Mais {z.B. B13) - B15)} | 1:30 bis 8:1 | 1:10 bis 1:1 |
| Bb) Dikotylenherbizide in Getreide u. Mais {z.B. B16) - B21)} | 1:1500 bis 1:1 | 1:500 bis 1:10 |
| Bb) Dikotylenherbizide in Getreide u. Mais {z.B. B22) u. B23)} | 1:500 bis 1:1 | 1:200 bis 1:3 |
| Bb) Dikotylenherbizide in Getreide u. Mais {z.B. B24) - B29)} | 1:500 bis 8:1 | 1:300 bis 2:1 |
| Bb) Dikotylenherbizide in Getreide u. Mais {z.B. B30) u. B31)} | 1:20 bis 20:1 | 1:10 bis 10:1 |
| Bb) Dikotylenherbizide in Getreide u. Mais {z.B. B32)} | 1:250 bis 1:1 | 1:100 bis 1:3 |
| Bb) Dikotylenherbizide in Getreide u. Mais {z.B. B33)} | 1:2500 bis 1:5 | 1:2000 bis 1:10 |
| BC) Gräser- u. Dikotylenherbizide in Getreide u./o. Mais {z.B. B34) - B40)} | 1:2500 bis 1:2 | 1:2000 bis 1:4 |
| BC) Gräser- u. Dikotylenherbizide in Getreide u./o. Mais {z.B. B41) - B51)} | 1:40 bis 20:1 | 1:20 bis 10:1 |
| Bd) Nichtselektive oder nur in transgenen Kulturen selektive Breitbandherbizide {z.B. B52) u. B53)} | 1:1500 bis 1:2 | 1:1000 bis 1:10 |

Die Aufwandmengen des Herbizids A in den erfindungsgemäßen Wirkstoffkombinationen liegen zwischen 0,1 und 100 g ai/ha (ai = active ingredients, d.h. Aufwandmenge bezogen auf den aktiven Wirkstoff), bevorzugt zwischen 2 und 40 g ai/ha.

Die Aufwandmengen von Verbindungen des Typs B betragen in den erfindungsgemäßen Mischungen in der

Regel:

| Typ-B-Verbindungen | Aufwandmengen g ai/ha | |
|---|---|---|
| | Standard | bevorzugt |
| Ba) Gräserherbizide in Getreide {z.B. B1) - B12)} | 10 bis 4000 | 50 bis 1000 |
| Ba) Gräserherbizide in Mais {z.B. B13) - B15)} | 5 bis 60 | 5 bis 30 |
| Bb) Dikotylenherbizide in Getreide u. Mais {z.B. B16) - B21)} | 50 bis 3000 | 100 bis 2000 |
| Bb) Dikotylenherbizide in Getreide u. Mais {z.B. B22) u. B23)} | 50 bis 1000 | 100 bis 500 |
| Bb) Dikotylenherbizide in Getreide u. Mais {z.B. B24) - B29)} | 5 bis 1000 | 10 bis 500 |
| Bb) Dikotylenherbizide in Getreide u. Mais {z.B. B30) u. B31)} | 3 bis 25 | 5 bis 20 |
| Bb) Dikotylenherbizide in Getreide u. Mais {z.B. B32)} | 50 bis 500 | 100 bis 250 |
| Bb) Dikotylenherbizide in Getreide u. Mais {z.B. B33)} | 500 bis 2500 | 750 bis 2000 |
| Bc) Gräser- u. Dikotylenherbizide in Getreide u./o. Mais {z.B. B34) - B40)} | 100 bis 5000 | 250 bis 2500 |
| Bc) Gräser- u. Dikotylenherbizide in Getreide u./o. Mais {z.B. B41) - B51)} | 2 bis 80 | 5 bis 50 |
| Bd) Nichtselektive oder nur in transgenen Kulturen selektive Breitbandherbizide {z.B. B52) u. B53)} | 100 bis 3000 | 100 bis 1000 |

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder auch als sogenannte Tankmischungen durch gemeinsame Verdünnung der getrennt formulierten Komponenten mit Wasser hergestellt werden

Die Wirkstoffe der Typen A und B können auf verschiedene Art formuliert werden, je nachdem welche biologischen und/oder chemisch-physikalischen Parameter vorgegeben sind. Als Formulierungsmöglichkeiten kommen beispielsweise in Frage:

> Spritzpulver (WP), emulgierbare Konzentrate (EC), wasserlösliche Pulver (SP), wasserlösliche Konzentrate (SL), konzentrierte Emulsionen (BW) wie Öl-in-Wasser und
> Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- oder Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N. Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N. J.; H. v. Olphen "Introduction to Clay Colloid Chemistry", 2nd Ed., J. Wiley & Sons, N. Y.; Marsden "Solvents Guide, 2nd Ed., Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesellschaft, Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Herbiziden, Insektiziden, Fungiziden, sowie Antidots, Safenern, Düngemitteln und/oder Wachstumsregulatoren herstellen, z. B. in Form einer Fertigformulierung oder als Tankmix.

Besonders vorteilhaft werden die Herbizid-Kombinationen der Erfindung hergestellt, indem man die Verbindungen der Formel I oder deren Salze (Typ-A-Verbindungen) mit einer oder mehreren Verbindungen des Typs B analog einer üblichen Pflanzenschutzformulierung aus der Gruppe enthaltend wasserlösliche Spritzpulver (WP), wasserdispergierbare Granulate (WDG), wasseremulgierbare Granulate (WEG), Suspoemulsionen (SE) und Öl-Suspensionskonzentrate (SC) formuliert.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z. B. polyoxyethylierte Alkylphenole, polyoxyethylierte Fettalkohole und Fettamine, Fettalkoholpolyglykolethersulfate, Alkansulfonate oder Alkylarylsulfonate, ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes oder der Wirkstoffe in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z. B.

Blockcopolymere), Alkylpolyether, Sorbitanfettsäureester, Polyoxyethylensorbitanfettsäureester oder andere Polyoxyethylensorbitanester.

Stäubemittel erhält man durch Vermahlen des Wirkstoffes oder der Wirkstoffe mit fein verteilten Stoffen, z. B. Talkum, natürlichen Tonen, wie Kaolin, Bentonit und Pyrophyllit, oder Diatomeenerde.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen gemäß der Erfindung enthalten in der Regel 0,1 bis 99 Gew.-%, insbesondere 2 bis 95 Gew.-%, Wirkstoffe der Typen A und B, neben üblichen Formulierungshilfsmitteln.

Die Konzentrationen der Wirkstoffe A + B können in den Formulierungen verschieden sein. In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% Wirkstoffe, versprühbare Lösungen etwa 0,2 bis 25 Gew.-%, vorzugsweise 2 bis 20 Gew.-% Wirkstoffe. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Aufgrund der relativ geringen Aufwandmenge der erfindungsgemäßen Kombinationen A + B ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs. Um die Verträglichkeit und/oder Selektivität der erfindungsgemäßen Herbizidkombinationen gewünschtenfalls noch zu steigern ist es allerdings von Vorteil, diese gemeinsam in Mischung oder zeitlich getrennt nacheinander zusammen mit Safenern oder Antidots anzuwenden. Als Safener oder Antidots für die erfindungsgemäßen Kombinationen in Frage kommenden Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91/08202) und PCT/EP 90/02020 (WO-91/078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

Günstigenfalls kennzeichnen sich die herbiziden Mischungen oder Anwendungskombinationen der Erfindung durch einen zusätzlichen Gehalt an

C)einer oder mehrerer Verbindungen der Formeln C1 und C2,

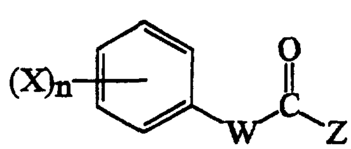

(C1)

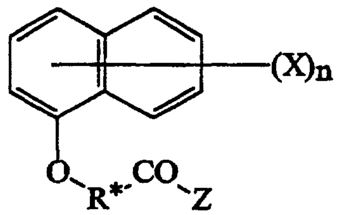

(C2)

worin

X Wasserstoff, Halogen, $(C_1-C_4)$-Alkyl, $(C_1-C_4)$-Alkoxy, Nitro oder $(C_1-C_4)$-Halogenalkyl bedeutet,

Z $OR^1$, $SR^1$, $NR^1R$, wobei R Wasserstoff, $(C_1-C_6)$-Alkyl, $(C_1-C_6)$-Alkoxy oder gegebenenfalls substituiertes Phenyl bedeutet, oder für einen gesättigten oder ungesättigten 3- bis 7-gliedrigen Heterozyklus mit mindestens einem N-Atom und bis zu drei Heteroatomen steht, der über das N-Atom mit der Carbonylgruppe verbunden ist und unsubstituiert oder durch Reste aus der Gruppe $(C_1-C_4)$-Alkyl, $(C_1-C_4)$ -Alkoxy oder gegebenenfalls substituiertes Phenyl substituiert ist, vorzugsweise einen Rest der Formel $OR^1$, $NHR^1$ oder $N(CH_3)_2$, insbesondere $OR^1$,

R* eine$(C_1-C_2)$-Alkylenkette ( = $(C_1-C_2)$-Alkandiylkette), die noch mit ein oder zwei $(C_1-C_4)$-Alkylresten oder mit [$(C_1-C_3)$-Alkoxy]carbonyl substituiert sein kann, vorzugsweise $-CH_2-$,

$R^1$ Wasserstoff, $(C_1-C_{18})$-Alkyl, $(C_3-C_{12})$-Cycloalkyl, $(C_2-C_8)$-Alkenyl oder $(C_2-C_8)$-Alkinyl,
wobei die vorstehenden C-haltigen Reste unsubstituiert oder ein- oder mehrfach, vorzgsweise bis zu dreifach, durch gleiche oder verschiedene Reste aus der Gruppe enthaltend Halogen, Hydroxy, $(C_1-C_8)$-Alkoxy, $(C_1-C_8)$-Alkylthio, $(C_2-C_8)$-Alkenylthio, $(C_2-C_8)$-Alkinylthio, $(C_2-C_8)$-Alkenyloxy, $(C_2-C_8)$-Alkinyloxy, $(C_3-C_7)$ -Cycloalkyl, $(C_3-C_7)$-Cycloalkoxy, Cyano, Mono- und Di-$(C_1-C_8)$-alkyl-amino, Carboxy, $(C_1-C_8)$-Alkoxycarbonyl, $(C_2-C_8)$-Alkenyloxy-carbonyl, $(C_1-C_8)$ -Alkylthio-carbonyl, $(C_2-C_8)$-Alkinyloxycarbonyl, $(C_1-C_8)$-Alkyl-carbonyl, $(C_2-C_8)$-Alkenyl-carbonyl, $(C_2-C_8)$-Alkinyl-carbonyl, 1-(Hydroxyimino) - $(C_1-C_6)$-alkyl, 1-[$(C_1-C_4)$-Alkylimino]-$(C_1-C_4)$-alkyl, 1-[$(C_1-C_4)$-Alkoxyimino] - $(C_1-C_6)$-alkyl, $(C_1-C_8)$-Alkylcarbonylamino, $(C_2-C_8)$-Alkenyl-carbonylamino, $(C_2-C_8)$-Alkinyl-carbonylamino, Aminocarbonyl, $(C_1-C_8)$-Alkyl-aminocarbonyl, Di- $(C_1-C_6)$-alkylaminocarbonyl, $(C_2-C_6)$-Alkenyl-aminocarbonyl, $(C_2-C_6)$-Alkinyl-aminocarbonyl, $(C_1-C_8)$-Alkoxycarbonylamino, $(C_1-C_8)$-Alkyl-aminocarbonylamino, $(C_1-C_6)$-Alkylcarbonyloxy, das unsubstituiert oder durch Halogen, $NO_2$, $(C_1-C_4)$-Alkoxy oder gegebenenfalls substituiertes Phenyl substituiert ist, $(C_2-C_6)$-Alkenylcarbonyloxy, $(C_2-C_6)$-Alkinyl-carbonyloxy, $(C_1-C_8)$-Alkylsulfonyl, Phenyl, Phenyl-$(C_1-C_6)$-alkoxy, Phenyl- $(C_1-C_6)$ -alkoxy-carbonyl, Phenoxy, Phenoxy-$(C_1-C_6)$-alkoxy, Phenoxy-$(C_1-C_6)$-alkoxy-carbonyl, Phenylcarbonyloxy, Phenylcarbonylamino, Phenyl- $(C_1-C_6)$-alkylcarbonylamino, wobei die letztgenannten neun Reste im Phenylring unsubstituiert oder ein- oder mehrfach, vorzugsweise bis zu dreifach durch gleiche oder verschiedene Reste aus der Gruppe Halogen, $(C_1-C_4)$-Alkyl, $(C_1-C_4)$-Alkoxy, $(C_1-C_4)$-Halogenalkyl, $(C_1-C_4)$-Halogenalkoxy und Nitro substituiert sind, und Reste der Formeln $SiR'_3$, $-O-SiR'_3$, $R'_3Si-(C_1-C_8)$-alkoxy,$-CO-O-NR'_2$, $-O-N=CR'_2$, $-N=CR'_2$, $-O-NR'_2$, $CH(OR')_2$ und $-O-(CH_2)_m-CH(OR'_2)_2$,
worin die R' in den genannten Formeln unabhängig voneinander Wasserstoff, $(C_1-C_4)$-Alkyl, Phenyl, das unsubstituiert oder ein- oder mehrfach, vorzugsweise bis zu dreifach durch gleiche oder verschiedene Reste aus der Gruppe Halogen, $(C_1-C_4)$-Alkyl, $(C_1-C_4)$-Alkoxy, $(C_1-C_4)$-Halogenalkyl, $(C_1-C_4)$-Halogenalkoxy und Nitro substituiert ist, oder paarweise eine $(C_2-C_6)$-Alkylenkette und m= 0 bis 6 bedeuten, und ein Rest der Formel R''O-CHR'''(OR'')- $(C_1-C_6)$-alkoxy,
worin die Reste R'' unabhängig voneinander $(C_1-C_4)$-Alkyl oder zusammen einen $(C_1-C_6)$-Alkylenrest und R''' Wasserstoff oder $(C_1-C_4)$-Alkyl bedeuten, substituiert sind,

R Wasserstoff, $(C_1-C_6)$-Alkyl, $(C_1-C_6)$-Alkoxy oder gegebenenfalls substituiertes Phenyl bedeutet,

n eine ganze Zahl von 1 bis 5, vorzugsweise 1 bis 3,

W ein divalenter heterozyklischer Rest mit 5 Ringatomen der Formeln W1 bis W4,

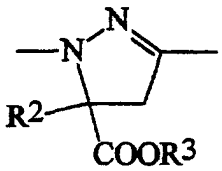

(W1)

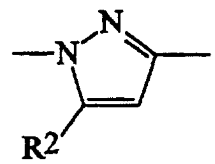

(W2)

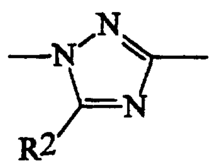

(W3)

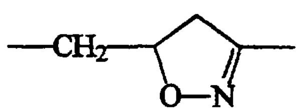

(W4) ,

worin

- $R^2$ Wasserstoff, $(C_1$-$C_8)$-Alkyl, $(C_1$-$C_8)$-Halogenalkyl, $(C_3$-$C_{12})$-Cycloalkyl oder gegebenenfalls substituiertes Phenyl und
- $R^3$ Wasserstoff, $(C_1$-$C_8)$-Alkyl, $(C_1$-$C_8)$-Halogenalkyl, $(C_1$-$C_4)$-Alkoxy-$(C_1$-$C_4)$-alkyl, $(C_1$-$C_6)$-Hydroxyalkyl, $(C_3$-$C_{12})$-Cycloalkyl oder Tri- ($(C_1$-$C_4)$-alkyl)-silyl sind,

bedeuten, oder die Salze der genannten Verbindungen.

Sofern es im einzelnen nicht anders definiert wird, gelten für die Reste in den Formel die folgenden Definitionen:

Alkyl, Alkenyl und Alkinyl sind geradkettig oder verzweigt und haben bis zu 8, vorzugsweise bis zu 4 C-Atome; entsprechendes gilt für den aliphatischen Teil substituierter Alkyl-, Alkenyl- und Alkinylreste oder davon abgeleitete Reste wie Haloalkyl (= Halogenalkyl), Hydroxyalkyl, Alkoxycarbonyl, Alkoxy, Alkanoyl, Halogenalkoxy etc.; Alkyl bedeutet zum Beispiel Methyl, Ethyl, n-Propyl, Isopropyl, n-Butyl, i-Butyl, t-Butyl und 2-Butyl, Pentyle, insbesondere n-Pentyl und neo-Pentyl, Hexyle, wie n-Hexyl und i-Hexyl und 1,3-Dimethylbutyl, Heptyle, wie n-Heptyl, 1-Methylhexyl und 1,4-Dimethylpentyl; Alkenyl bedeutet beispielsweise unter anderem Allyl, 1-Methylprop-2-en-1-yl, But-2-en-1-yl, But-3-en-1-yl, 1-Methyl-but-3-en und 1-Methyl-but-2-en; Alkinyl bedeutet unter anderem Propargyl, But-2-in-1-yl, But-3-in-1-yl, 1-Methyl-but-3-in;

Cycloalkyl hat vorzugsweise 3 bis 8 C-Atome und steht z. B. für Cyclobutyl, Cyclopentyl, Cyclohexyl oder Cycloheptyl. Cycloalkyl kann gegebenenfalls bis zu zwei $(C_1$-$C_4)$-Alkylreste als Substituenten tragen.

Halogen bedeutet Fluor, Chlor, Brom oder Jod, vorzugsweise Fluor, Chlor oder Brom, insbesondere Fluor oder Chlor; Halogenalkyl ( = Haloalkyl), -alkenyl und -alkinyl bedeuten durch Halogen mono-, di- oder polysubstituiertes Alkyl, Alkenyl beziehungsweise Alkinyl, zum Beispiel wie $CF_3$, $CHF_2$, $CH_2F$, $CF_3CF_2$, $CH_2FCHCl$, $CCl_3$, $CHCl_2$, $CH_2CH_2Cl$; Halogenalkoxy ( = Haloalkoxy) ist zum Beispiel unter anderem $OCF_3$, $OCHF_2$, $OCH_2F$, $CF_3CF_2O$, $CF_3CH_2O$;

Aryl weist vorzugsweise 6 bis 12 C-Atome auf und ist z. B. Phenyl, Naphthyl oder Biphenyl, vorzugsweise Phenyl. Entsprechendes gilt für davon abgeleitete Reste wie Aryloxy, Aroyl, oder Aroylalkyl;

gegebenenfalls substituiertes Phenyl steht beispielsweise für Phenyl, das unsubstituiert ist oder ein- oder mehrfach, vorzugsweise ein-, zwei- oder dreifach, durch gleiche oder verschiedene Reste aus der Gruppe Halogen, $(C_1$-$C_4)$-Alkyl, $(C_1$-$C_4)$-Alkoxy, $(C_1$-$C_4)$-Halogenalkyl, $(C_1$-$C_4)$-Halogenalkoxy, $(C_1$-$C_4)$ -Alkylthio, $(C_2$-$C_5)$ -Alkoxycarbonyl, $(C_2$-$C_5)$-Alkylcarbonyloxy, Carbonamid, $(C_2$-$C_5)$-Alkylcarbonylamino, Di[$(C_1$-$C_4)$-Alkyl]aminocarbonyl und Nitro substituiert ist, zum Beispiel o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl oder o-, m- und p-Methoxyphenyl. Entsprechendes gilt für gegebenenfalls substituiertes Aryl.

Von besonderem Interesse sind erfindungsgemäße herbizide Mittel, wobei in den Verbindungen der Formel C1 und C2,

$R^1$ Wasserstoff, $(C_1$-$C_8)$-Alkyl, $(C_3$-$C_7)$-Cycloalkyl, $(C_2$-$C_8)$-Alkenyl oder $(C_2$-$C_8)$-Alkinyl, wobei die vorstehenden C-haltigen Reste unsubstituiert oder ein- oder mehrfach durch Halogen oder ein- oder zweifach, vorzugsweise einfach Reste aus der Gruppe Hydroxy, $(C_1$-$C_4)$-Alkoxy, $(C_1$-$C_4)$-Alkylthio, $(C_2$-$C_4)$-Alkenyloxy, $(C_2$-$C_6)$-Alkinyloxy, Mono- und Di-($(C_1$-$C_2)$-alkyl)-amino, $(C_1$-$C_4)$-Alkoxycarbonyl, $(C_2$-$C_4)$-Alkenyloxy-carbonyl, $(C_2$-$C_4)$-Alkinyloxy-carbonyl, $(C_1$-$C_4)$-Alkylcarbonyl, $(C_2$-$C_4)$-Alkenyl-carbonyl, $(C_2$-$C_4)$-Alkinyl-carbonyl, $(C_1$-$C_4)$-Alkylsulfonyl, Phenyl, Phenyl-$(C_1$-$C_4)$-alkoxy-carbonyl, Phenoxy, Phenoxy- $(C_1$-$C_4)$-alkoxy, Phenoxy-$(C_1$-$C_4)$-alkoxy-carbonyl, wobei die letztgenannten sechs Reste im Phenylring unsubstituiert oder ein- oder mehrfach durch Reste aus der Gruppe Halogen, $(C_1$-$C_2)$-Alkyl, $(C_1$-$C_2)$-Alkoxy, $(C_1$-$C_2)$-Halogenalkyl, $(C_1$-$C_2)$-Halogenalkoxy und Nitro substituiert sind, und Reste der Formeln $SiR'_3$, $-O-N=CR'_2$, $-N=CR'_2$ und $-O-NR'_2-CH(OR')_2$, worin die R' in den genannten Formeln unabhängig voneinander Wasserstoff, $(C_1$-$C_2)$-Alkyl, Phenyl, das unsubstituiert oder ein- oder mehrfach durch Reste aus der Gruppe Halogen, $(C_1$-$C_2)$-Alkyl, $(C_1$-$C_2)$-Alkoxy, $(C_1$-$C_2)$-Halogenalkyl, $(C_1$-$C_2)$-Halogenalkoxy und Nitro substituiert ist, oder paarweise eine $(C_4$-$C_5)$-Alkandiylkette bedeuten, substituiert sind,

$R^2$ Wasserstoff, $(C_1$-$C_8)$-Alkyl, $(C_1$-$C_6)$-Haloalkyl, $(C_3$-$C_7)$-Cycloalkyl oder Phenyl und

$R^3$ Wasserstoff, $(C_1$-$C_8)$-Alkyl, $(C_1$-$C_8)$ -Haloalkyl, ($(C_1$-$C_4)$-Alkoxy)-$(C_1$-$C_4)$-alkyl, $(C_1$-$C_6)$-Hydroxyalkyl, $(C_3$-$C_7)$ -Cycloalkyl oder Tri-($(C_1$-$C_4)$-alkyl)-silyl

bedeutet.

Von besonderem Interesse sind auch erfindungsgemäße herbizide Mittel, wobei in den Verbindungen der Formeln C1 und C2,

X Wasserstoff, Halogen, Methyl, Ethyl, Methoxy, Ethoxy, $(C_1$-$C_2)$-Halogenalkyl, vorzugsweise Wasserstoff, Halogen oder $(C_1$-$C_2)$-Halogenalkyl

bedeutet.

Bevorzugt sind erfindungsgemäße herbizide Mittel, wobei in den Verbindungen der Formel C1,

X Wasserstoff, Halogen, Nitro oder $(C_1$-$C_4)$-Halogenalkyl,

Z ein Rest der Formel $OR^1$,

n eine ganze Zahl von 1 bis 3,

$R^1$ Wasserstoff, $(C_1$-$C_8)$-Alkyl, $(C_3$-$C_7)$-Cycloalkyl, wobei die vorstehenden C-haltigen Reste unsubstituiert sind oder ein- oder mehrfach durch Reste aus der Gruppe Halogen oder ein- oder zweifach, vorzugsweise unsubstituiert oder einfach, durch Reste aus der Gruppe Hydroxy, $(C_1$-$C_4)$-Alkoxy, ($(C_1$-$C_4)$-Alkoxy)carbonyl, $(C_2$-$C_6)$-Alkenyloxy-carbonyl, ($(C_2$-$C_6)$-Alkinyloxy)-carbonyl und Reste der Formeln $SiR'_3$, $-O-N=CR'_2$, $-N=CR'_2$, $-O-NR'_2$, worin die Reste R' in den genannten Formeln unabhängig voneinander Wasserstoff oder $(C_1$-$C_4)$-Alkyl oder paarweise eine $(C_4$-$C_5)$-Alkylenkette bedeuten, substituiert sind,

$R^2$ Wasserstoff, $(C_1$-$C_8)$-Alkyl, $(C_1$-$C_6)$-Haloalkyl, $(C_3$-$C_7)$-Cycloalkyl oder Phenyl und

$R^3$ Wasserstoff, $(C_1$-$C_8)$-Alkyl, $(C_1$-$C_8)$-Haloalkyl, $(C_1$-$C_4)$-Alkoxy)-$(C_1$-$C_4)$-alkyl, $(C_1$-$C_6)$-Hydroxyalkyl, $(C_3$-$C_7)$-Cycloalkyl oder Tri-($(C_1$-$C_4)$-alkyl)-silyl

bedeuten.

Bevorzugt sind auch erfindungsgemäße herbizide Mittel, wobei in den Verbindungen der Formel C2,

X Wasserstoff, Halogen oder $(C_1$-$C_4)$-Halogenalkyl und n eine ganze Zahl von 1 bis 3, vorzugsweise $(X)_n$ = 5-C1,

Z ein Rest der Formel $OR^1$,

R* $CH_2$ und

$R^1$ Wasserstoff, $(C_1$-$C_8)$-Alkyl, $(C_1$-$C_8)$-Haloalkyl, ($(C_1$-$C_4)$-Alkoxy)-$(C_1$-$C_4)$-alkyl oder ($(C_1$-$C_4)$-Alkenyloxy) - $(C_1$-$C_4)$-alkyl, vorzugsweise $(C_1$-$C_8)$-Alkyl,

bedeuten.

Besonders bevorzugt sind erfindungsgemäße herbizide Mittel mit Verbindungen der Formel C1, worin

W W1

X Wasserstoff, Halogen oder $(C_1$-$C_2)$-Halogenalkyl und n = 1 - 3, insbesondere $(X)_n$= 2,4-$Cl_2$,

Z ein Rest der Formel $OR^1$,
$R^1$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$-Alkoxy)-$(C_1-C_4)$-alkyl, Tri- $((C_1-C_2)$-alkyl)-silyl, vorzugsweise $(C_1-C_4)$-Alkyl,
$R^2$ Wasserstoff, $(C_1-C_8)$-Alkyl, $(C_1-C_4)$-Haloalkyl oder $(C_3-C_7)$-Cycloalkyl, vorzugsweise Wasserstoff oder $(C_1-C_4)$-Alkyl und
$R^3$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$-Alkoxy)-$(C_1-C_4)$-alkyl oder Tri- $((C_1-C_2)$-alkyl)-silyl, vorzugsweise H oder $(C_1-C_4)$-Alkyl,

bedeuten.

Besonders bevorzugt sind auch erfindungsgemäße herbizide Mittel mit Verbindungen der Formel C1, worin

W W2
x Wasserstoff, Halogen oder $(C_1-C_2)$-Halogenalkyl und n= 1 - 3, insbesondere $(X)_n = 2,4\text{-}Cl_2$,
Z ein Rest der Formel $OR^1$,
$R^1$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$-Alkoxy)-$(C_1-C_4)$-alkyl, Tri-$((C_1-C_2)$-alkyl)-silyl, vorzugsweise $(C_1-C_4)$-Alkyl, und
$R^2$ Wasserstoff, $(C_1-C_8)$-Alkyl, $(C_1-C_4)$-Haloalkyl, $(C_3-C_7)$-Cycloalkyl oder Phenyl, vorzugsweise Wasserstoff oder $(C_1-C_4)$-Alkyl,

bedeuten.

Besonders bevorzugt sind auch erfindungsgemäße herbizide Mittel mit Verbindungen der Formel C1, worin

W W3
X Wasserstoff, Halogen oder $(C_1-C_2)$-Halogenalkyl und n= 1 - 3, insbesondere $(X)_n = 2,4\text{-}Cl_2$,
Z ein Rest der Formel $OR^1$,
$R^1$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$ -Alkoxy) - $(C_1-C_4)$-alkyl, Tri- ( $(C_1-C_2)$-alkyl)-silyl, vorzugsweise $(C_1-C_4)$-Alkyl, und
$R^2$ $(C_1-C_8)$-Alkyl oder $(C_1-C_4)$-Haloalkyl, vorzugsweise, $C_1$-Haloalkyl,

bedeuten.

Besonders bevorzugt sind auch erfindungsgemäße herbizide Mittel mit Verbindungen der Formel C1, worin

W W4
X Wasserstoff, Halogen, Nitro, $(C_1-C_4)$-Alkyl, $(C_1-C_4)$-Alkoxy oder $(C_1-C_2)$-Halogenalkyl und n= 1 - 3,
Z vorzugsweise $CF_3$ oder $(C_1-C_4)$-Alkoxy, ein Rest der Formel $OR^1$ und
$R^1$ Wasserstoff, $(C_1-C_4)$-Alkyl oder $((C_1-C_4)$-Alkoxy)-carbonyl-$(C_1-C_4)$-alkyl, vorzugsweise $((C_1-C_4)$-Alkoxy)-CO-$CH_2$-, $((C_1-C_4)$-Alkoxy)-CO-$C(CH_3)$H-, HO-CO-$CH_2$- oder HO-CO-$C(CH_3)$H-,

bedeuten.

Die Verbindungen der Formeln C1 sind aus EP-A-0 333 131, EP-A-0 269 806, EP-A-0 346 620, Internationale Patentanmeldung PCT/EP 90/01966 und Internationale Patentanmeldung PCT/EP 90/02020 und dort zitierter Literatur bekannt oder können nach oder analog den dort beschriebenen Verfahren hergestellt werden. Die Verbindungen der Formel C2 sind aus EP-A-0 086 750, EP-A-0 094 349 und EP-A-0 191 736 und dort zitierter Literatur bekannt oder können nach oder analog den dort beschriebenen Verfahren hergestellt werden. Sie werden ferner in der DE-A-40 41 121.4 vorgeschlagen.

Besonders bevorzugte Antidots oder Safener oder Gruppen von Verbindungen die sich als Safener oder Antidots für die vorbeschriebenen Produktkombinationen der Erfindung bewährt haben sind unter anderem:

a)Verbindungen vom Typ der Dichlorphenylpyrazolin-3-carbonsäure (d.h. der Formel C1, worin W = W1 und $(X)_n = 2,4\text{-}Cl_2$), vorzugsweise Verbindungen wie 1-(2,4-Dichlorphenyl)-5-(ethoxycarbonyl)-5-methyl-2-pyrazolin-3-carbonsäureethylester (Verbindung C1-1) und verwandte Verbindungen, wie sie in der internationalen Anmeldung WO 91/07874 (PCT/EP 90/02020) beschrieben sind;

b)Derivate der Dichlorphenylpyrazolcarbonsäure (d. h. der Formel C1, worin W = W2 und und $(X)_n = 2,4\text{-}Cl_2$), vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)pyrazol-3-carbonsäureethylester (Verbindung C1-4), 1-(2,4-Dichlorphenyl)-5-phenyl-pyrazol-3-carbonsäureethylester (Verbindung C1-5) und verwandte Verbindungen, wie sie in EP-A-0 333 131 und

EP-A-0 269 806 beschrieben sind;

c)Verbindungen vom Typ der Triazolcarbonsäuren (d. h. der Formel C1, worin W = W3 und $(X)_n$ = 2,4-$Cl_2$), vorzugsweise Verbindungen wie 1-(2,4-Dichlorphenyl)-5-trichlormethyl-(1H)-1,2,4-triazol-3-carbonsäureethylester (Verbindung C1-6, Fenchlorazol) und verwandte Verbindungen (siehe EP-A-0 174 562 und EP-A-0 346 620);

d)Verbindungen vom Typ der Dichlorbenzyl-2-isoxazolin-3-carbonsäure (d. h. der Formel C1, worin W = W4 und $(X)_n$ = 2,4-$Cl_2$), Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1-7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;

e)Verbindungen vom Typ der 8-Chinolinoxyessigsäure (d. h. der Formel C2, worin $(X)_n$ = 5-C1, Wasserstoff, Z = $OR^1$, R* = $CH_2$),
vorzugsweise Verbindungen wie

(5-Chlor-8-chinolinoxy)-essigsaure-(1-methyl-hex-1-yl)-ester (C2-1),
(5-Chlor-8-chinolinoxy)-essigsäure-(1,3-dimethyl-but-1-yl)-ester (C2-2),
(5-Chlor-8-chinolinoxy)-essigsäure-4-allyl-oxy-butylester (C2-3),
(5-Chlor-8-chinolinoxy)-essigsäure-1-allyl-oxy-prop-2-ylester (C2-4),
(5-Chlor-8-chinolinoxy)-essigsäureethylester (C2-5),
(5-Chlor-8-chinolinoxy)-essigsäuremethylester (C2-6),
(5-Chlor-8-chinolinoxy)-essigsäureallylester (C2-7),
(5-Chlor-8-chinolinoxy)-essigsäure-2-(2-prpylideniminoxy)-1-ethylester (C2-8),
(5-Chlor-8-chinolinoxy)-essigsäure-2-oxo-prop-1-ylester (C2-9)

und verwandte Verbindungen wie sie in EP-A-0 086 750, EP-A-0 094 349 und EP-A-0 191 736 oder EP-A-0 492 366 beschrieben sind;

f)Verbindungen vom Typ der (5-Chlor-8-chinolinoxy)-malonsäure, d. h. der Formel C2, worin $(X)_n$ = 5-C1, Wasserstoff, Z = $OR^1$, R* = -CH(COO-Alkyl)-, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung P 40 41 121.4 beschrieben und vorgeschlagen worden sind;

g) sowie Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

Die genannten Verbindungen sind außerdem zumindest teilweise in der EP-A-0 640 587 beschrieben, auf die hiermit zu Offenbarungszwecken bezug genommen wird.

Neben den beschriebenen Safenern und Antidots für Verbindungen der Formel I werden in der genannten Offenlegungsschrift auch Mischungen mit Standardherbiziden erwähnt. Hierbei mangelt es jedoch zum einen einer notwendigen Individualisierung der Verbindungen der Formel I, da diese von einer sehr viel breiteren allgemeinen Formel in der EP-A-0 640 587 mitumfaßt werden, zum anderen gibt es dort keinerlei Hinweise auf die überraschende überadditive Wirkungssteigerung der hierin offenbarten Kombinationen.

Die Safener (Antidote) der vorstehenden Gruppen a) bis g) (insbesondere Verbindungen der Formeln C1 und C2) reduzieren oder unterbinden phytotoxische Effekte, die beim Einsatz der Produktkombinatinen gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen Mischungen von Herbiziden ganz erheblich erweitert werden und insbesondere ist durch die Verwendung von Safenern der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mischungen gemäß der Erfindung und die erwähnten Safener können zusammen ( als fertige Formulierung oder im Tank-mix-Verfahren) oder in beliebiger Reihenfolge nacheinander ausgebracht werden. Das Gewichtsverhältnis Safener:Herbizid (Gruppe A, i.e. Verbindungen der Formel I) kann innerhalb weiter Grenzen variieren und ist vorzugsweise im Bereich von 1 : 10 bis 10 : 1, insbesondere von 1 : 10 bis 5 : 1. Die jeweils optimalen

Mengen an Herbiziden (Typ-A- und Typ-B-Verbindungen) und Safener sind vom Typ der verwendeten Herbizidmischung und/oder vom verwendeten Safener sowie von der Art des zu behandelnden Pflanzenbestandes abhängig und lassen sich von Fall zu Fall durch entsprechende Vorversuche ermitteln.

Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verqwendetem Herbizid innerhalb weiter Grenzen schwanken und sind in der Regel im Bereich von 0,001 bis 1 kg, vorzugsweise 0,005 bis 0,2 kg Wirkstoff je Hektar.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Gegenstand der Erfindung ist auch ein Verfahren zur Bekämpfung von unerwünschten Pflanzen, daß dadurch gekennzeichnet ist, daß man auf diese oder die Anbaufläche eine herbizid wirksame Menge einer erfindungsgemäßen Kombination von Wirkstoffen A + B appliziert. Die Wirkstoffe können auf die Pflanzen, Pflanzenteile, Pflanzensamen oder die Anbaufläche ausgebracht werden. In bevorzugter Verfahrensvariante werden die Verbindungen der Formel (I) oder deren Salze (Typ-A-Verbindungen) in Aufwandmengen von 0,1 bis 100 g ai/ha, bevorzugt von 2 bis 40 g ai/ha ausgebracht, während die Aufwandmengen für die Verbindungen vom Typ B von 1 bis 5000 g ai/ha betragen. Bevorzugt ist die Ausbringung der Wirkstoffe der Typen A und B gleichzeitig oder zeitlich getrennt im Gewichtsverhältnis 1:2500 bis 20:1. Weiterhin besonders bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Da die Kulturverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Besonders günstig gestaltet sich das Verfahren zur selektiven Bekämpfung von Schadpflanzen bei Einsatz der Kombinationspartner vom Typ B) aus den Untergruppen Ba) bis Bc), wenn die herbiziden Mittel der Erfindung in Nutzpflanzenkulturen wie Getreide, Mais, Reis, Zuckerrohr, in Plantagenkulturen, auf Grün- oder Weideland eingesetzt werden.

Die Kombinationspartner vom Typ A bekämpfen alleine angewendet im Vorauflauf- wie im Nachauflaufverfahren in Getreide sowie Mais, in Nichtkulturland und Plantagenkulturen bereits ein recht breites Spektrum an annuellen und perrenierenden Unkräutern, Ungräsern und Cyperaceen.

Das Wirkungsspektrum der Typ A Verbindungen wird durch die Kombination mit den in der Erfindung genannten Typ-B-Partnern noch weiter verbessert.

So ergänzen und verstärken die Verbindungen B1) bis B12) u. a. die Wirkung bei der Bekämpfung von Ungräsern in Getreide und teilweise auch die Wirkung gegen Unkräuter in Getreide, jeweils sowohl im Vorauflauf- als auch im Nachauflaufverfahren.

Die Sulfonylharnstoffe aus der Untergruppe Ba) (Verbindungen B13) bis B15)) dienen vor allem zur wirkungsvolleren Bekämpfung von Ungräsern und Unkräutern vornehmlich im Nachauflaufverfahren in Mais.

Die Kombinationspartner B16) bis B21) aus der Gruppe Bb) gehören meist zu den Wuchsstoffherbiziden, die die Wirkung der Typ-A Verbindungen in einer Vielzahl landwirtschaftlich genutzter Kulturarten (bevorzugt Getreide und Mais) vor allem bei der Bekämpfung von Unkräutern und Cyperaceen verbessern. Angewendet werden sie bevorzugt im Nachauflaufverfahren.

Die Verbindungen B22) und B23) sind herbizide Wirkstoffe, die vornehmlich die Wirksamkeit der Unkrautbekämpfung in Mais und Getreide verbessern. Sie werden hauptsächlich im Nachauflaufverfahren eingesetzt. Die Nitrodiphenylether B24) bis B29) werden sowohl im Vor- als auch Nachauflaufverfahren eingesetzt. Sie dienen zur Wirkungsverbesserung in Getreide, Mais aber auch Reis oder Soja.

Die Azole und Pyrazole aus der Untergruppe Bb) (z. B. B30) und B31)) können besonders vorteilhaft mit vergleichsweise niedrigen Aufwandmengen im Nachauflaufverfahren zur Bekämpfung von dikotylen Unkräutern in Getreide eingesetzt werden. B33) verbessert das Wirkungsspektrum der erfindungsgemäßen Kombinationen im Vor- und Nachauflaufverfahren bei der Bekämpfung von Unkräutern in Getreide und anderen Kulturarten, während B33) ein herbizider Wirkstoff ist, der in einer Vielzahl landwirtschaftlicher Kulturpflanzen im Nachauflaufverfahren zur Unkrautbekämpfung eingesetzt wird.

Die Triazine und Chloracetanilide aus der Untergruppe Bc) (z.B. B34) bis B40)) sind weitverbreitete Wirkstoffe, die sowohl im Vorauflauf als auch im Nachauflauf zur Steigerung der Wirksamkeit der Typ-A-Verbindungen bei der Bekämpfung von Ungräsern und Unkräutern vorallem in Mais aber teilweise auch in Getreide, Nichtkulturlaund oder Plantagenkulturen eingesetzt werden können.

Die Verbindungen B41) bis B51) schließlich (Untergruppe Bc)) dienen in der Erfindung bevorzugt zur Bekämpfung von Unkraut - teilweise auch Ungras - in Getreide und teilweise im Mais sowie in Kartoffeln, im Grünland oder im Nichtkulturland im Nach- aber teilweise auch im Vorauflaufverfahren.

Je nach Natur des Kombinationspartners B können die erfindungsgemäßen herbiziden Kombinationen vorteilhaft zur Bekämpfung von unerwünschten Pflanzen auch im Nichtkulturland und/oder in transgenen Kulturen, wie Mais, Reis, Soja, Getreide u.a., eingesetzt werden. Hierfür eignen sich insbesondere die Partner aus der Gruppe Bd) (Verbindungen B52) und B53)).

Dabei umfaßt der Begriff Nichtkulturland nicht nur Wege, Plätze, Industrie- und Gleisanlagen, die regelmäßig von Unkraut freizuhalten sind, vielmehr fallen auch Plantagenkulturen im Rahmen der Erfindung unter diesen Oberbegriff. Demnach lassen sich die erfindungsgemäßen Kombinationen (vor allem mit den Kombinationspartnern aus der Untergruppe Bd)), die ein breites Unkrautspektrum erfassen, was von annuellen und perennierenden Unkräutern wie beispielsweise Agropyron, Paspalum, Cynodon, Imperata über Pennisetum, Convolvulus und Cirsium bis hin zu Rumex und anderen reicht, zur selektiven Bekämpfung von Schadpflanzen in Plantagenkulturen wie Ölpalme, Kokospalme, Gummibaum (Hevea brasiliensis), Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"-Verfahren eingesetzt werden. Sie können aber auch wie bereits erwähnt im eigentlichen Nichtkulturland, d.h. nichtselektiv auf Wegen, Plätzen etc. angewendet werden, um diese Flächen von unerwünschtem Pflanzenwuchs freizuhalten. Die an sich nichtselektiven Kombinationspartner der Gruppe Bd) werden aber nicht nur bei entsprechender Widerstandsfähigkeit der Kulturpflanzen zu selektiven Herbiziden, auch bei Einsatz in sogenannten transgenen Kulturen sind Kombinationen gemäß der Erfindung selektiv. Transgene Kulturen sind solche, in denen die Pflanzen durch genetische Manipulation gegen an sich nichtselektive Herbizide resistent gemacht werden. Dergestalt veränderte Kulturpflanzen, wie z.B. Mais, Getreide oder Soya lassen dann den selektiven Einsatz von Kombinationen mit B52) und/oder B53) zu.

Zusammenfassend kann gesagt werden, daß bei gemeinsamer Anwendung von 4-Iodo-2-[3-(4-methoxy-6-methyl-1,3,5-triazin-2-yl)ureidosulfonyl]-benzoesäureestern und/oder ihren Salzen mit einem oder mehreren Wirkstoffen aus der Gruppe B, otionell und besonders bevorzugt zusätzlich mit einem oder mehreren Safenern aus der Gruppe C, überadditive (= synergistische) Effekte auftreten. Dabei ist die Wirkung in den Kombinationen stärker als die der eingesetzten Einzelprodukte bei alleiniger Anwendung. Diese Effekte erlauben

- ♦ eine Reduzierung der Aufwandmenge,
- ♦ die Bekämpfung eines breiteren Spektrums von Unkräutern und Ungräsern,
- ♦ eine schnellere und sicherere Wirkung,
- ♦ eine längere Dauerwirkung,
- ♦ eine komplette Kontrolle der Schadpflanzen mit nur einer oder wenigen Applikationen, und
- ♦ eine Ausweitung des Anwendungszeitraumes der Wirkstoffe in Kombination.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen.

Folgende Beispiele dienen zu Erläuterung der Erfindung:

1. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoffe A + B, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile Wirkstoffe

A + B mit 6 Gew.-Teilen Alkylphenolpolyglykolether (® Triton X 207), 3 Gew.-Teilen Isotridecanolpolyglykolether (8 EO) und 71 Gew.-Teilen paraffinischem Mineralöl (Siedebereich z. B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen Cyclohexanon als Lösemittel und 10 Gew.-Teilen oxethyliertes Nonylphenol als Emulgator.

e) Ein in Wasser dispergierbares Granulat wird erhalten, indem man

75 Gew.-Teile Wirkstoffe A + B,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile Wirkstoffe A + B
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und

vorzerkleinert, anschließend auf einer Perlmühle mahlt und die so erhaltene Suspension in einem Sprühturm mittels einer Einstoffdüse zerstäubt und trocknet.

g) Ein Extruder-Granulat erhält man, indem man 20 Gew.-Teile der Wirkstoffe A + B, 3 Gewichtsteile ligninsulfonsaures Natrium, 1 Gewichtsteil Carboxymethylcellulose und 76 Gewichtsteile Kaolin vermischt, vermahlt und mit Wasser anfeuchtet. Dieses Gemisch wird extrudiert und anschließend im Luftstrom getrocknet.

2. Biologische Beispiele

Die nachfolgend genannten Beispiele wurden im Gewächshaus und teilweise in Feldversuchen erarbeitet.

Feldversuche

Dabei wurden im Getreide nach natürlichem Auflaufen der Unkräuter die Herbizide bzw. die Kombinationen mit Parzellenspritzgeräten appliziert. Nach der Anwendung wurden die Effekte, wie Schädigung der Kulturpflanzen und Wirkung auf Unkräuter/Ungräser durch visuelle Bonituren bewertet. Die herbizide Wirkung wurde durch den Vergleich von unbehandelten zu behandelten Parzellen bzgl. der Beeinflußung des Pflanzenwachstums und chlorotischer und nekrotischer Effekte bis zum totalen Absterben der Unkräuter qualitativ und quantitativ bewertet (0-100%). Die Anwendung erfolgte im 2-4 Blattstadium der Kulturpflanzen und Unkräuter. Die Auswertung erfolgte ca. 4 Wochen nach Applikation.

Gewächshausversuche

In den Gewächshausversuchen wurden die Kulturpflanzen und Unkräuter/Ungräser in 13er Töpfen angezogen und im 2-4 Blattstadium behandelt. Anschließend wurden die Töpfe bei guten Wachstumsbedingungen (Temperatur, Luftfeuchtigkeit, Wasserversorgung) im Gewächshaus aufgestellt.

Die Auswertungen erfolgten vergleichbar denen in den Feldversuchen, d.h. visuelle Bonituren der behandelten Pflanzen im Vergleich zu unbehandelten Kontroll-Varianten. Diese Auswertungen wurden 3 Wochen nach der Applikation der Prüfpräparate und deren Kombinationen durchgeführt. Die Versuche waren mit zweifacher Wiederholung angelegt worden.

Bewertung der Kombinationseffekte in den Beispielen

Bei der Bewertung der Kombinationseffekte wurde die Wirkung der Einzelkomponenten addiert und mit der Wirksamkeit der dosierungsgleichen Mischungen verglichen. Oft zeigte sich, daß die Kombinationen höhere Wirkungsgrade als die Summe der Einzelwirkungen zeigte.

In Fällen mit weniger deutlichen Effekten wurde nach der COLBY-Formel der Erwartungswert errechnet und mit dem empirisch ermittelten Ergebnis verglichen. Der errechnete, theoretisch zu erwartende Wirkungsgrad einer Kombination wird ermittelt nach der Formel von S. R. Colby: "Calculation of synergistic and antagonistic responses of herbicide combinations", Weeds 15 (1967), Seiten 20 bis 22.

Die Formel lautet für Zweierkombinationen:

$$E = X + Y - \frac{X \bullet Y}{100}$$

und für die Kombination von drei herbiziden Wirkstoffen entsprechend:

$$E = X + Y + Z + \frac{X \bullet Y \bullet Z}{10000} - \frac{XY + XZ + YZ}{100}$$

wobei

X = % Schädigung durch Herbizid A bei x kg ai/ha Aufwandmege;
Y = % Schädigung durch Herbizid B bei y kg ai/ha Aufwandmenge;
Z = % Schädigung durch ein weiteres Herbizid C bei z kg ai/ha Aufwandmenge;
E = Erwartungswert, d.h. zu erwartende Schädigung durch die Herbizide A + B (oder A+B+C) bei x + y (oder x + y + z) kg ai/ha

Dabei konnte von synergistischen Effekten ausgegangen werden, wenn der empirische Wert grösser als der Erwartungswert war. Bei Kombinationen mit wirkstoffgleichen Einzelkomponenten konnten auch Vergleiche über die Summenformel angestellt werden.

In der Mehrzahl der Fälle ist die synergistische Wirkungssteigerung jedoch so hoch, daß auf das Kriterium nach Colby verzichtet werden kann; die Wirkung der Kombination übersteigt dann deutlich die formale (zahlenmäßige) Summe der Wirkungen der Einzelstoffe.

Es sei besonders darauf hingewiesen, daß eine Beurteilung des Synergismus bei den hier eingesetzten Wirkstoffen die stark unterschiedlichen Aufwandmengen der Einzelwirkstoffe berücksichtigen muß. Es ist somit nicht sinnvoll, die Wirkungen der Wirkstoffkombinationen und die Einzelwirkstoffe jeweils bei gleichen Aufwandmengen zu vergleichen. Die erfindungsgemäß einzusparenden Wirkstoffmengen werden nur durch die überadditive Wirkungssteigerung bei Einsatz der kombinierten Aufwandmengen oder durch die Verringerung der Aufwandmengen beider Einzelwirkstoffe in den Kombinationen im Vergleich zu den Einzelwirkstoffen bei jeweils gleicher Wirkung erkennbar.

Tabelle 1

| Wirkstoff(e) | g ai/ha | PHACA | APESV | TRZAW |
|---|---|---|---|---|
| | | % Bekämpfung | | % Schäden |
| A) | 3 | 0 | 85 | 0 |
| | 5 | 15 | 93 | 0 |
| | 10 | 35 | 97 | 0 |
| | 20 | 53 | 98 | 0 |
| B3) | 225 | 0 | 0 | 0 |
| | 450 | 0 | 0 | 0 |
| | 900 | 0 | 8 | 0 |
| A) + B3) | 3 +450 | 90 ( 0+0) | 97 (85+0) | 0 |
| | 5 +450 | 90 (15+0) | 97 (93+0) | 0 |

Tabelle 1 (fortgesetzt)

| Wirkstoff(e) | g ai/ha | PHACA | APESV | TRZAW |
|---|---|---|---|---|
| | | % Bekämpfung | | % Schäden |
| PHACA = Phalaris canariensis<br>APESV = Apera spica venti<br>TRZAW = Triticum aestivum<br>A) = Natriumsalz des 4-Iodo-2-[3-(4-methoxy-6-methyl-1,3,5-triazin-2-yl)ureidosulfonyl]-benzoesäuremethylesters<br>B3) = Diclofop-methyl<br>( ) = % Wirkung der Einzelwirkstoffe | | | | |

Tabelle 2

| Wirkstoff(e) | g ai/ha | LOLMU | PHACA | TRZAW |
|---|---|---|---|---|
| | | % Bekämpfung | | % Schäden |
| A) | 3 | 0 | 0 | 0 |
| | 5 | 5 | 15 | 0 |
| | 10 | 10 | 35 | 0 |
| | 20 | 48 | 53 | 0 |
| B1) | 18 | 0 | 0 | 0 |
| | 37 | 0 | 0 | 0 |
| | 75 | 8 | 60 | 0 |
| A) + B1) | 3 + 37 | 58 ( 0+0) | 88 ( 0+0) | 0 |
| | 5 + 37 | 83 ( 5+0) | 97 (15+0) | 0 |
| | 10 + 37 | 85 (10+0) | 99 (35+0) | 0 |
| B5) | 10 | 0 | 0 | 0 |
| | 20 | 0 | 0 | 0 |
| | 40 | 5 | 5 | 0 |
| A) + B5) | 3 + 20 | 75 ( 0+0) | 70 ( 0+0) | 0 |
| | 5 + 20 | 85 ( 5+0) | 80 (15+0) | 0 |
| | 10 + 10 | 81 (10+0) | 78 (35+0) | 0 |
| LOLMU = Lolium multiflorum<br>PHACA = Phalaris canariensis<br>TRZAW = Triticum aestivum<br>A) = Natriumsalz des 4-Iodo-2-[3-(4-methoxy-6-methyl-1,3,5-triazin-2-yl)ureidosulfonyl]-benzoesäuremethylesters<br>B1) = Puma S® = Mischung aus Fenoxaprop-P-ethyl und dem Safener Fenchlorazol-ethyl = 1-(2,4-Dichlorphenyl)-5-(trichloromethyl)-1*H*-1,2,4-triazol-3 carboxyethylester im Verhältnis 2:1<br>B5) = Topik = Mischung aus Clodinafop-propargyl und den Safener Cloquintocet-methyl im verhältnis 4:1<br>( ) = % Wirkung der Einzelwirkstoffe | | | | |

Tabelle 3

| Wirkstoff(e) | g ai/ha | LOLMU | PHACA | TRZAW |
|---|---|---|---|---|
| | | % Bekämpfung | | % Schäden |
| A) | 3 | 0 | 0 | 0 |
| | 5 | 5 | 15 | 0 |
| | 10 | 10 | 35 | 0 |
| | 20 | 48 | 53 | 0 |
| B2) | 375 | 0 | 0 | 0 |
| | 750 | 0 | 0 | 0 |

Tabelle 3 (fortgesetzt)

| Wirkstoff(e) | g ai/ha | LOLMU | PHACA | TRZAW |
|---|---|---|---|---|
| | | % Bekämpfung | | % Schäden |
| | 1500 | 0 | 50 | 0 |
| A) + B2) | 3 +1500<br>5 +1500<br>10 +1500 | 20 ( 0+0)<br>43 ( 5+0)<br>55 (10+0) | 80( 0+50)<br>85(15+50)<br>83(35+50) | 0<br>0<br>0 |
| B8) | 375<br>750<br>1500 | 0<br>0<br>20 | 0<br>0<br>13 | 0<br>0<br>5 |
| A) + B8) | 3 +750<br>10 +375 | 93 ( 0+0)<br>93 (10+0) | 99 ( 0+0)<br>99 (35+0) | 5<br>5 |

LOLMU = Lolium multiflorum
PHACA = Phalaris canariensis
TRZAW = Triticum aestivum
A) = Natriumsalz des 4-Iodo-2-[3-(4-methoxy-6-methyl-1,3,5-triazin-2-yl)ureidosulfonyl]-benzoesäuremethylesters
B2) = Isoproturon (Arelon® )
B8) = Imazamethabenz-methyl (Assert® )
( ) = % Wirkung der Einzelwirkstoffe

Tabelle 4

| Wirkstoff(e) | g ai/ha | ECHCR % Bekämpfung | ZEAMA % Schäden |
|---|---|---|---|
| A) | 10<br>20<br>40<br>80 | 65<br>75<br>80<br>88 | 0<br>0<br>0<br>0 |
| B13) | 15<br>30<br>60 | 0<br>73<br>75 | 0<br>0<br>2 |
| A) + B13) | 10 + 15 | 97 (65+0) | 3 |
| B14) | 5<br>10<br>20 | 15<br>60<br>85 | 0<br>2<br>3 |
| A) + B14) | 10 + 5<br>10 + 10 | 80 (65+15)<br>{70}<br>92 (65+60)<br>{86} | 0<br>0 |

ECHCR = Echinochloa crus galli
ZEAMA = Zea Mays
A) = Natriumsalz des 4-Iodo-2-[3-(4-methoxy-6-methyl-1,3,5-triazin-2-yl)ureidosulfonyl]-benzoesäuremethylesters
B13) = Nicosulfuron
B14) = Rimsulfuron
( ) = % Wirkung der Einzelwirkstoffe
{ } = Erwartungswert nach Colby

Tabelle 5

| Wirkstoff(e) | g ai/ha | LOLMU | FALCO | TRZAW |
|---|---|---|---|---|
| | | % Bekämpfung | | % Schäden |
| A) | 2,5<br>5<br>10<br>20<br>40<br>80<br>160 | 68<br>75<br>83 | 73<br>85<br>88<br>97<br>98<br>99<br>99 | 0<br>0<br>0<br>10<br>15<br>18<br>28 |
| B17) | 150<br>500<br>1000 | | 0<br>68<br>75 | 0<br>3<br>0 |
| A) + B17) | 10 +250<br>5 +500 | | 94(88+ 0)<br>98(85+68)<br>{95} | 0<br>0 |
| B16) | 125<br>250<br>500<br>1000 | | 0<br>15<br>55<br>68 | 0<br>0<br>0<br>0 |
| A) + B16) | 10 +125 | | 91(88+ 0) | 0 |
| B20) | 50<br>100<br>200<br>400 | 5<br>10<br>18<br>40 | | 0<br>0<br>0<br>10 |
| A) + B20) | 5 + 50<br>10 + 100 | 78 (75+ 5)<br>{76}<br>94 (93+10)<br>{86} | | 0<br>0 |
| B21) | 50<br>100<br>200 | | 73<br>80<br>95 | 0<br>0<br>0 |
| A) + B21) | 5 + 100<br>10 + 50<br>10 + 100 | | 99 {97}<br>98 {97}<br>100 {98} | 0<br>0<br>0 |

LOLMU = Lolium multiflorum
FALCO = Fallopia convolvulus
TRZAW = Triticum aestivum
A) = Natriumsalz des 4-Iodo-2-[3-(4-methoxy-6-methyl-1,3,5-triazin-2-yl)ureidosulfonyl]-benzoesäuremethylesters
B17) = MCPA-Natriumsalz
B16) = Mecoprop-P
B20) = Dicamba
B21) = Fluroxypyr (Starane® )
( ) = % Wirkung der Einzelwirkstoffe
{ } = Erwartungswert nach Colby

Tabelle 6

| Wirkstoff(e) | g ai/ha | CENCY % Bekämpfung | SECCW % Schäden |
|---|---|---|---|
| A) | 5<br>10<br>15 | 0<br>30<br>60 | 0<br>0<br>5 |
| B16) | 600<br>2500 | 30<br>70 | 0<br>0 |
| A) + B16) | 10 +600 | 100 (30+30) | 0 |

CENCY = Centaurea cyanus
SECCW = Secale cereale
A) = Natriumsalz des 4-Iodo-2-[3-(4-methoxy-6-methyl-1,3,5-triazin-2-yl)ureidosulfonyl]-benzoesäuremethylesters
B16) = Mecoprop-P
( ) = % Wirkung der Einzelwirkstoffe

Tabelle 7

| Wirkstoff(e) | g ai/ha | GALAP | VIOAR | TRZAW |
|---|---|---|---|---|
| | | % Bekämpfung | | % Schäden |
| A) | 2,5<br>5<br>10<br>20 | 35<br>58<br>60<br>99 | 58<br>75<br>95<br>98 | 0<br>0<br>2<br>10 |
| B22) | 62,5<br>125<br>250<br>500 | 0<br>3<br>10<br>18 | | 0<br>0<br>0<br>0 |
| A) + B22) | 10 + 125<br>10 + 250 | 68 (60+ 3)<br>85 (60+10) | | 0<br>0 |
| B25) | 4<br>8<br>15<br>30 | | 3<br>18<br>38<br>62 | 0<br>0<br>0<br>0 |
| A) + B25) | 5 + 15 | | 93(75+38)<br>{85} | 0 |
| B32) | 13<br>25<br>50<br>100 | 0<br>0<br>5<br>5 | | 0<br>0<br>0<br>0 |
| A) + B32) | 10 +13 | 98 (60+ 0) | | 0 |

LOLMU = Lolium multiflorum
VIOAR = Viola arvensis
TRZAW = Triticum aestivum
A) = Natriumsalz des 4-Iodo-2-[3-(4-methoxy-6-methyl-1,3,5-triazin-2-yl)ureidosulfonyl]-benzoesäuremethylesters
B22) = Ioxynil
B25) = Fluoroglycofen-ethyl (Compete® )
B32) = Diflufenican
( ) = % Wirkung der Einzelwirkstoffe
{ } = Erwartungswert nach Colby

Tabelle 8

| Wirkstoff(e) | g ai/ha | ECHCR % Bekämpfung | ZEAMA % Schäden |
|---|---|---|---|
| A) | 10<br>20<br>40<br>80 | 65<br>73<br>80<br>88 | 0<br>0<br>0<br>0 |
| B36) | 375<br>750<br>1500<br>3000 | 0<br>0<br>3<br>3 | 0<br>0<br>0<br>0 |
| A) + B36) | 10 + 375<br>10 + 750 | 88 (65+0)<br>93 (65+0) | 0<br>0 |

ECHCR = Echinochloa crus galli
ZEAMA = Zea Mays
A) = Natriumsalz des 4-Iodo-2-[3-(4-methoxy-6-methyl-1,3,5-triazin-2-yl)ureidosulfonyl]-benzoesäuremethylesters
B36) = Atrazin
( ) = % Wirkung der Einzelwirkstoffe

Tabelle 9

| Wirkstoff(e) | g ai/ha | FALCO | CENCY | TRZAW |
|---|---|---|---|---|
| | | % Bekämpfung | | % Schäden |
| A) | 2,5<br>5<br>10<br>20<br>40 | 73<br>85<br>88<br>97<br>98 | 30<br>43<br>58<br>78 | 0<br>0<br>2<br>10<br>15 |
| B42) | 1<br>3<br>5<br>10 | | 0<br>0<br>0<br>0 | 0<br>0<br>0<br>0 |
| A) + B42) | 2,5 + 3<br>5 + 3<br>10 + 3 | | 50(30+ 0)<br>75(43+ 0)<br>78(58+ 0) | 0<br>0<br>0 |
| B43) | 5<br>10<br>20<br>40 | 88<br>93<br>95<br>97 | | 0<br>0<br>0<br>0 |
| A) + B43) | 5 + 5 | 100(85+88)<br>{98} | | 0 |

CENCY = Centaurea cyanus
FALCO = Fallopia convolvulus
TRZAW = Triticum aestivum A) = Natriumsalz des 4-Iodo-2-[3-(4-methoxy-6-methyl-1,3,5-triazin-2-yl)ureidosulfonyl]-benzoesäuremethylesters
B42) = Metsulfuron-methyl (Gropper® )
B43) = Tribenuron-methyl (Pointer® )
( ) = % Wirkung der Einzelwirkstoffe
{ } = Erwartungswert nach Colby

Tabelle 10

| Wirkstoff(e) | g ai/ha | CENCY % Bekämpfung | SECCW % Schäden |
|---|---|---|---|
| A) | 5<br>10<br>15 | 0<br>30<br>60 | 0<br>0<br>5 |
| B41) | 20 | 25 | 0 |
| A) + B41) | 10 + 20 | 95 (30+25) | 0 |

CENCY = Centaurea cyanus
SECCW = Secale cereale
A) = Natriumsalz des 4-Iodo-2-[3-(4-methoxy-6-methyl-1,3,5-triazin-2-yl)ureidosulfonyl]-benzoesäuremethylesters
B41) = Amidosulfuron
( ) = % Wirkung der Einzelwirkstoffe

Tabelle 11

| Wirkstoff(e) | g ai/ha | GALAP | AVEFA | MERAN |
|---|---|---|---|---|
| | | % Bekämpfung | | |
| A) | 5<br>10 | 75<br>98 | 60<br>80 | 70<br>94 |
| B52) | 150<br>300<br>450 | 55<br>73<br>85 | 60<br>70<br>80 | 65<br>78<br>90 |
| A) + B52) | 5 + 150 | 99(75+55)<br>{89} | 90(60+60)<br>{84} | 98(70+65)<br>{98} |

GALAP = Gallium aparine
AVEFA = Avena fatua
MERAN = Mercurialis annua
A) = Natriumsalz des 4-Iodo-2-[3-(4-methoxy-6-methyl-1,3,5-triazin-2-yl)ureidosulfonyl]-benzoesäuremethylesters
B52) = Glufosinate-ammonium
( ) = % Wirkung der Einzelwirkstoffe
{ } = Erwartungswert nach Colby

Die Beispiele zeigen, daß durch die Einzelwirkstoffe einzelne Unkräuter nur in hohen Dosierungen gut bekämpft werden. Die Kombinationspartner in niedrigen Dosierungen appliziert, zeigen in der Regel nur geringe, bei weitem nicht die in der Praxis geforderte Wirksamkeit. Nur durch die gemeinsame Anwendung der Wirkstoffe lassen sich gute Effekte gegen alle geprüften Unkrautarten erzielen. Dabei wurde die additive Wirkung aus den Einzelkomponenten deutlich übertroffen, d. h., daß das geforderte Bekämpfungsniveau durch deutlich niedrigere Aufwandmengen erzielt wird. Durch diese Effekte wird das Wirkungsspektrum deutlich breiter.

Die Kulturverträglichkeit, in Form von Schädigungen bewertet, wird nicht negativ beeinflußt, d. h. daß die Kombinationen als voll selektiv bewertet werden können.

Weitere Vorteile und Ausführungsformen der Erfindung ergeben sich aus den nachfolgenden Patentansprüchen.

**Patentansprüche**

**1.** Herbizide Mittel, enthaltend

A) mindestens eine Verbindung aus der Gruppe der substituierten Phenylsulfonylharnstoffe der allgemeinen Formel I und deren landwirtschaftlich akzeptierten Salze

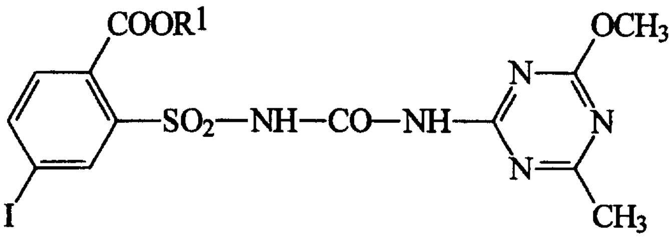

(I),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet

und

B) mindestens eine herbizid wirksame Verbindung aus der Gruppe der Verbindungen, welche aus

Ba) selektiv in Getreide und/oder in Mais gegen Gräser wirksamen Herbiziden Fenoxaprop, Fenoxaprop-P, Isoproturon, Diclofop, Clodinafop, Mischungen aus Clodinafop und Cloquintocet, Chlorotoluron, Methabenzthiazuron, Imazamethabenz, Tralkoxydim, Difenzoquat, Flamprop, Flamprop-M, Pendimethalin, Nicosulfuron, Rimsulfuron, Primisulfuron,
Bb) selektiv in Getreide und/oder Mais gegen Dikotyle wirksamen Herbiziden Mecoprop, Mecoprop-P, MCPA, Dichlorprop, Dichlorprop-P, 2,4-D, Dicamba, Fluroxypyr, Ioxynil, Bromoxynil, Bifenox, Fluoroglycofen, Acifluorfen, Lactofen, Fomesafen, Oxyfluorfen, ET-751, Azolen der allgemeinen Formel II

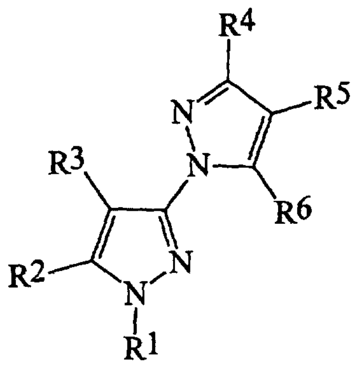

(II),

,

worin

| | |
|---|---|
| $R^1$ | $(C_1-C_4)$-Alkyl ist, |
| $R^2$ | $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1-C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1-C_4)$-Alkyl, $(C_1-C_4)$-Alkylthio oder $-NR^{11}R^{12}$ ist, |
| $R^7$ und $R^8$ | gleich oder verschieden Wasserstoff oder $(C_1-C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1-C_4)$-Alkyl ist, wobei letztere gegebenenfalls mit einem oder mehreren Halogenatomen substituiert sein können, und |

| | |
|---|---|
| $R^{11}$ u. $R^{12}$ | gleich oder verschieden Wasserstoff, $(C_1-C_4)$-Alkyl oder $(C_1-C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

Diflufenican, Bentazon,

Bc) selektiv in Getreide und/oder Mais gegen Gräser und Dikotyle wirksamen Herbiziden Metolachlor, Metribuzin, Atrazin, Terbuthylazin, Alachlor, Acetochlor, Dimethenamid, Amidosulfuron, Metsulfuron, Tribenuron, Thifensulfuron, Triasulfuron, Chlorsulfuron, Prosulfuron oder CGA-152005, Sulfonylharnstoffe der allgemeinen Formel III

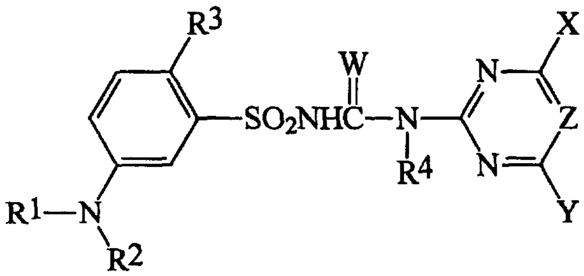

(III),

worin

| | |
|---|---|
| $R^1$ | Methyl, Ethyl, n-Propyl, i.Propyl oder Allyl ist, |
| $R^2$ | $CO-R^5$, $COOR^6$, $CO-NR^8R^9$, $CS-NR^{10}R^{11}$, $SO_2R^{14}$ oder $SO_2NR^{15}R^{16}$ |
| $R^3$ | $COR^{17}$, $COOR^{18}$, $CONR^{19}R^{20}$ oder $CO-ON=CR^{22}R^{23}$ ist, |
| $R^4$ | Wasserstoff oder $(C_1-C_4)$-Alkyl ist, |
| $R^5$ | Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind, |
| $R^6$ | $(C_1-C_4)$-Alkyl, Allyl, Propargyl oder Cyclopropyl ist, |
| $R^8$ | Wasserstoff, $(C_1-C_4)$-Alkyl, $(C_1-C_4)$-Haloalkyl oder $(C_1-C_4$-Alkoxy)-carbonyl ist |
| $R^9$-$R^{11}$ | unabhängig voneinander gleich oder verschieden H oder $(C_1-C_4)$-Alkyl sind, |
| $R^{14}$ | $(C_1-C_4)$-Alkyl ist, |
| $R^{15}$ u. $R^{16}$ | unabhängig voneinander gleich oder verschieden Wasserstoff oder $(C_1-C_4)$-Alkyl sind, |
| $R^{17}$ | Wasserstoff, $(C_1-C_4)$-Alkyl, $(C_1-C_4)$-Haloalkyl, $(C_3-C_6)$-Cycloalkyl, Phenyl oder Heteroaryl ist, wobei die letztgenannten zwei Reste unsubstituiert oder substituiert sind, |
| $R^{18}$ | Wasserstoff, $(C_1-C_4)$-Alkyl, $(C_2-C_6)$-Alkenyl oder $(C_2-C_6)$-Alkinyl, wobei die letztgenannten drei Reste unsubstituiert oder durch einen oder mehrere Reste aus der Gruppe Halogen, $(C_1-C_4)$-Alkoxy, $(C_1-C_4)$-Alkylthio und $NR^{31}R^{32}$ substituiert sind, oder $(C_3-C_6)$-Cycloalkyl oder $(C_3-C_6)$-Cycloalkyl- $(C_1-C_3)$-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder $(C_1-C_2)$-Alkyl sind, |
| $R^{31}$ u. $R^{32}$ | unabhängig voneinander gleich oder verschieden Wasserstoff oder $(C_1-C_4)$-Alkyl sind, |
| W | Sauerstoff oder Schwefel ist, |
| X | $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2$-alkyl)-amino ist, |
| Y | $(C_1-C_4)$-Alkyl, $(C_1-C_4)$-Alkoxy, $(C_1-C_4)$-Haloalkyl oder $(C_1-C_4)$-Alkylthio ist, und |
| z | CH oder N |

bedeutet, Flupyrsulfuron(DPX-KE459), Sulfosulfuron (MON37500), KIH-2023, und

Bd) im Nichtkulturland nichtselektiven und/oder in transgenen Kulturen selektiven Herbiziden mit Wirkung gegen Ungräser und Unkräuter Glufosinate, Glufosinate-P, Glyphosate,

besteht, wobei die Mittel die Verbindungen der Formel I oder deren Salze (Typ-A-Verbindungen) und die Verbindungen aus der Gruppe B in einem Gewichtsverhältnis von 1:2500 bis 20:1 enthalten.

**2.** Mittel nach Anspruch 1,
**dadurch gekennzeichnet,**
**daß** im Herbizid der Formel (I) oder dessen Salz

$R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet.

**3.** Mittel nach Anspruch 1 oder 2,
**dadurch gekennzeichnet,**
**daß** im Herbizid der Formel (I) oder dessen Salz $R^1$ Methyl bedeutet.

**4.** Mittel nach einem oder mehreren der vorhergehenden Ansprüche,
**dadurch gekennzeichnet,**
**daß** das Salz des Herbizids der Formel (I) durch Ersatz des Wasserstoffs der $-SO_2$-NH-Gruppe durch ein Kation aus der Gruppe der Alkalimetalle, Erdalkalimetalle und Ammonium, bevorzugt Natrium, gebildet wird.

**5.** Mittel nach einem oder mehreren der vorhergehenden Ansprüche,
**dadurch gekennzeichnet,**
**daß** es als Herbizide vom Typ B ein oder mehrere selektiv in Getreide gegen Gräser wirksame Herbizide aus der Gruppe enthält, die aus

B1) Fenoxaprop, Fenoxaprop-P

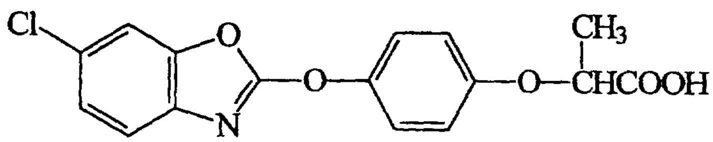

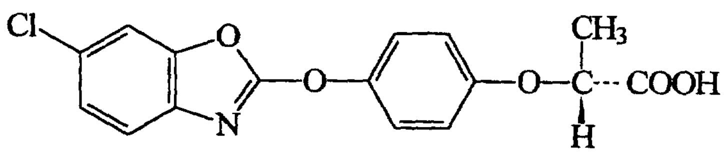

,

B2) Isoproturon

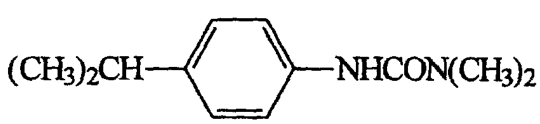

,

B3) Diclofop

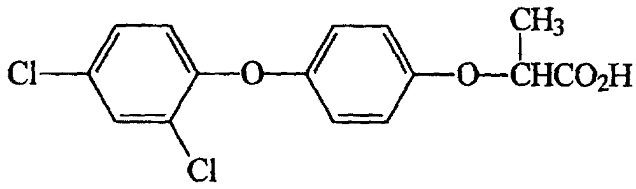

,

B4) Clodinafop

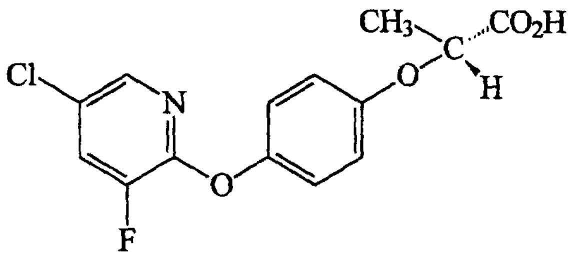

,

B5) Mischungen aus B4) und Cloquintocet

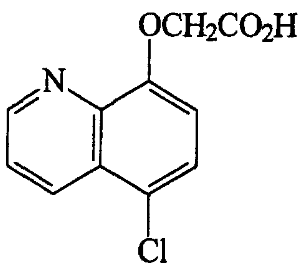

,

B6) Chlorotoluron

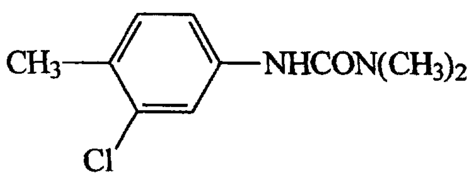

,

B7) Methabenzthiazuron

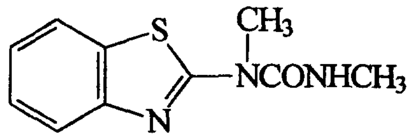

,

B8) Imazamethabenz

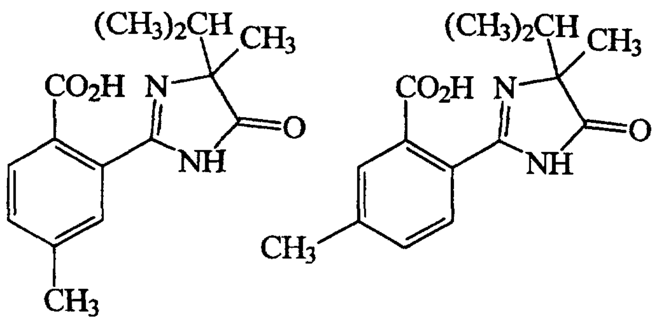

,

B9) Tralkoxydim

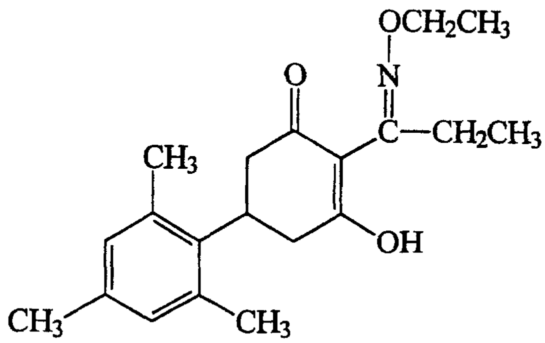

,

B10) Difenzoquat

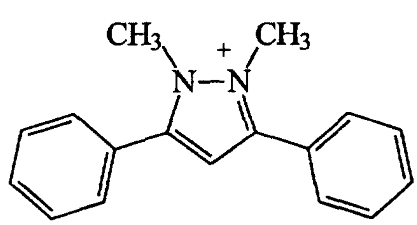

,

B11) Flamprop, Flamprop-M

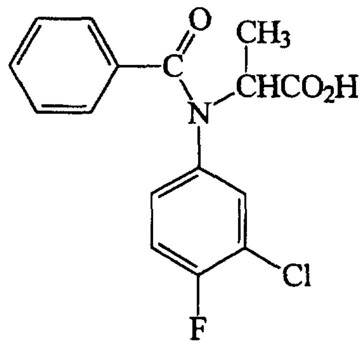 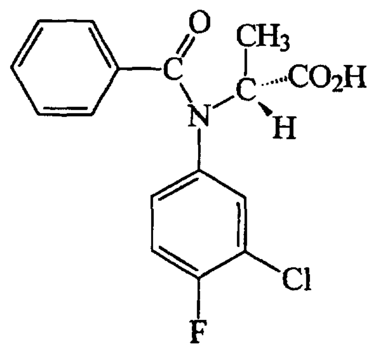

und

B12) Pendimethalin

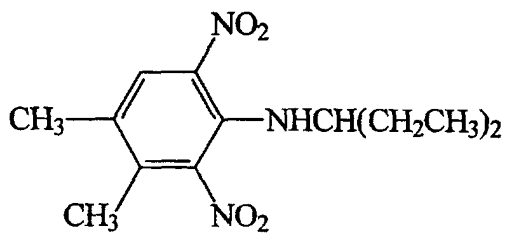

besteht.

**6.** Mittel nach einem oder mehreren der Ansprüche 1 bis 4, **dadurch gekennzeichnet, daß** es als Herbizide vom Typ B ein oder mehrere selektiv in Mais gegen Gräser wirksame Herbizide aus der Gruppe enthält, die aus

B13) Nicosulfuron

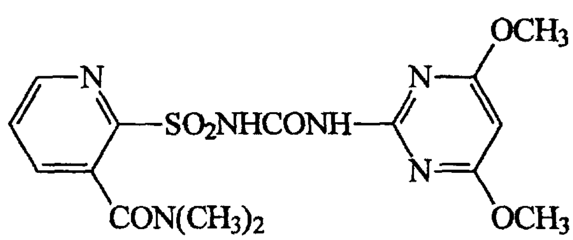 ,

B14) Rimsulfuron

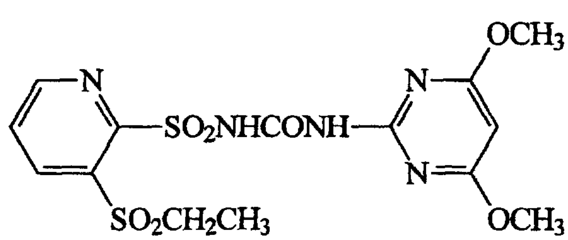

und

B15) Primisulfuron

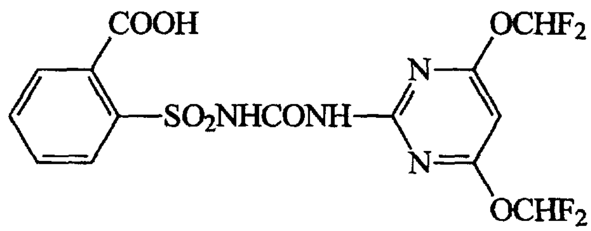

besteht.

**7.** Mittel nach einem der Ansprüche 5 oder 6,
**dadurch gekennzeichnet,**
**daß** es als Herbizide vom Typ B Diclofop-methyl, Fenoxaprop-P-ethyl, Isoproturon, Mischungen von Clodinafop-propargyl mit Cloquintocet-mexyl, Imazamethabenz-methyl, Nicosulfuron und/oder Rimsulfuron enthält.

**8.** Mittel nach einem oder mehreren der Ansprüche 1 bis 4,
**dadurch gekennzeichnet,**
**daß** es als Herbizide vom Typ B ein oder mehrere selektiv in Getreide und/oder Mais gegen Dikotyle wirksame Herbizide aus der Gruppe enthält, die aus B16)Mecoprop, Mecoprop-P

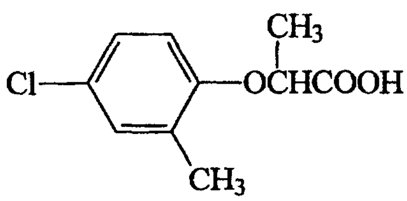 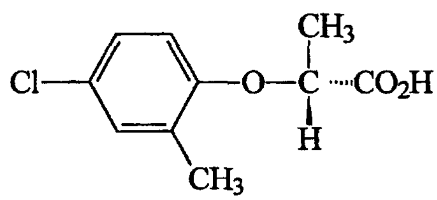

,

B17) MCPA

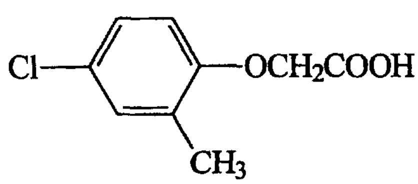

,

B18) Dichlorprop, Dichlorprop-P

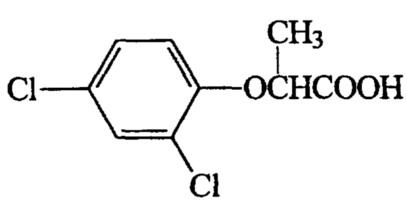 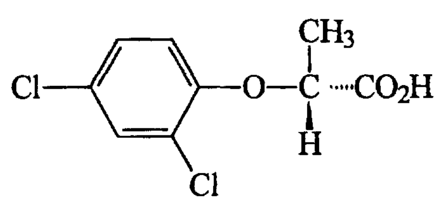

,

B19) 2,4-D

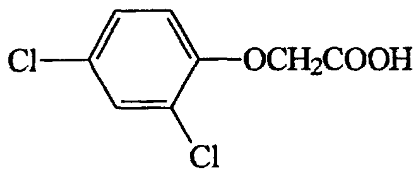

,

B20) Dicamba

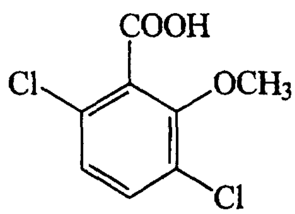

und

B21) Fluroxypyr

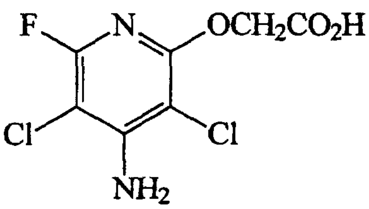

besteht.

**9.** Mittel nach einem oder mehreren der Ansprüche 1 bis 4,
**dadurch gekennzeichnet,**
**daß** es als Herbizide vom Typ B ein oder mehrere selektiv in Getreide und/oder Mais gegen Dikotyle wirksame Herbizide aus der Gruppe enthält, die aus

B22) Ioxynil

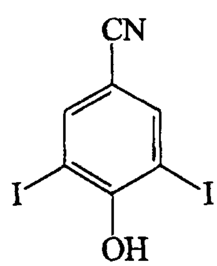

und

B23) Bromoxynil

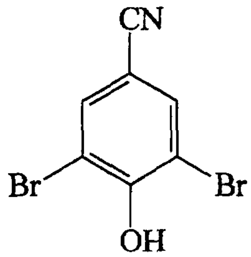

besteht.

**10.** Mittel nach einem oder mehreren der Ansprüche 1 bis 4,
**dadurch gekennzeichnet,**
**daß** es als Herbizide vom Typ B ein oder mehrere selektiv in Getreide und/oder Mais gegen Dikotyle wirksame Herbizide aus der Gruppe enthält, die aus

B24) Bifenox
Methyl-5-(2,4-Dichlorphenoxy)-2-nitrobenzoat

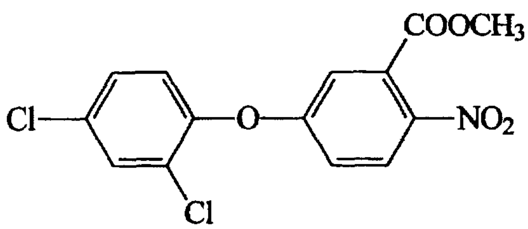

,

B25) Fluoroglycofen

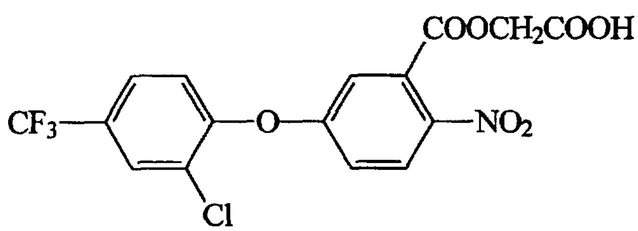

,

B26) Acifluorfen

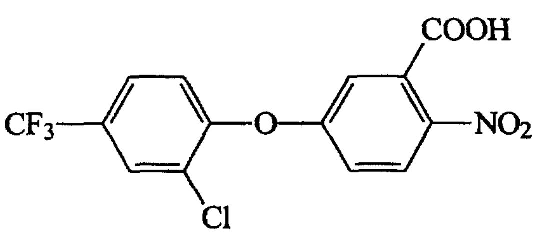

,

B27) Lactofen

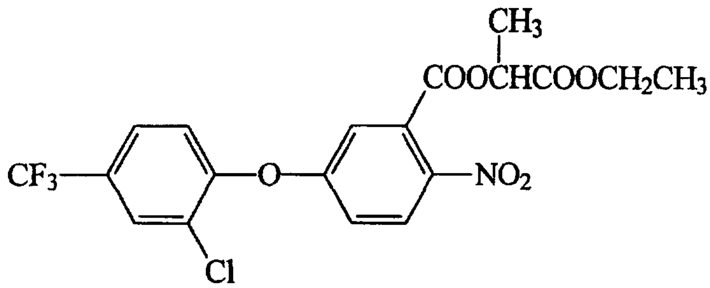

,

B28) Fomesafen

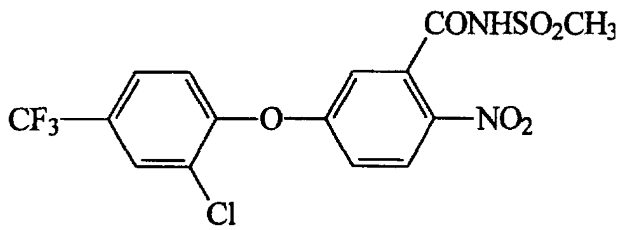

und

B29) Oxyfluorfen

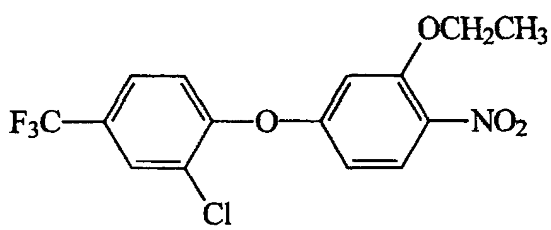

besteht.

**11.** Mittel nach einem oder mehreren der Ansprüche 1 bis 4,
**dadurch gekennzeichnet,**
**daß** es als Herbizide vom Typ B ein oder mehrere selektiv in Getreide und/oder Mais gegen Dikotyle wirksame Herbizide aus der Gruppe enthält, die aus

B30) ET-751

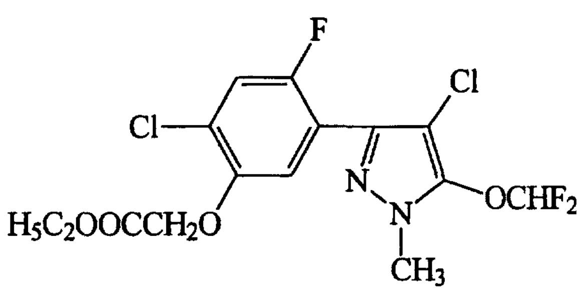

und

B31) Azolen der allgemeinen Formel II

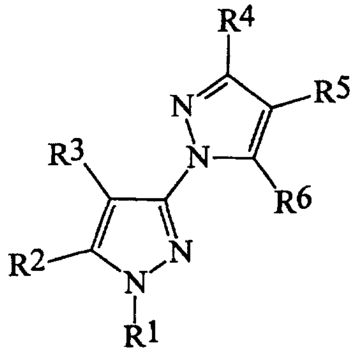

(II),

worin

| | |
|---|---|
| $R^1$ | $(C_1\text{-}C_4)$-Alkyl ist, |
| $R^2$ | $(C_1\text{-}C_4)$-Alkyl, $(C_1\text{-}C_4)$-Alkylthio oder $(C_1\text{-}C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1\text{-}C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1\text{-}C_4)$-Alkyl, $(C_1\text{-}C_4)$-Alkylthio oder $-NR^{11}R^{12}$ ist, |
| $R^7$ und $R^8$ | gleich oder verschieden Wasserstoff oder $(C_1\text{-}C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1\text{-}C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1\text{-}C_4)$-Alkyl oder $(C_1\text{-}C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

besteht.

**12.** Mittel nach einem oder mehreren der Ansprüche 1 bis 4,
**dadurch gekennzeichnet,**
**daß** es als Herbizid vom Typ B das selektiv in Getreide und/oder Mais gegen Dikotyle wirksame
B32)Diflufenican

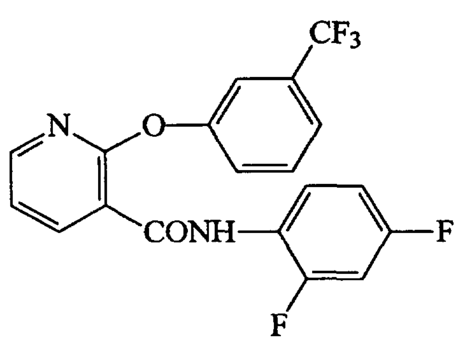

enthält.

**13.** Mittel nach einem oder mehreren der Ansprüche 1 bis 4, **dadurch gekennzeichnet,** **daß** es als Herbizid vom Typ B das selektiv in Getreide und/oder Mais gegen Dikotyle wirksame B33)Bentazon

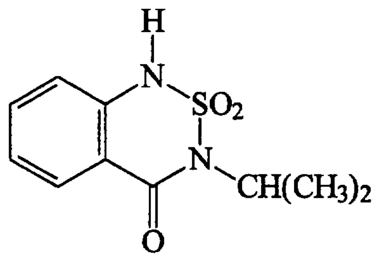

,

enthält.

**14.** Mittel nach einem oder mehreren der Ansprüche 8 bis 13, **dadurch gekennzeichnet,** **daß** es als Herbizide vom Typ B MCPA, Mecoprop, Dicamba, Fluroxypyr, Diflufenican, Ioxynil und/oder Fluoroglycofen enthält.

**15.** Mittel nach einem oder mehreren der Ansprüche 1 bis 4, **dadurch gekennzeichnet,** **daß** es als Herbizide vom Typ B ein oder mehrere Herbizide aus der Gruppe enthält, die

B34) Metolachlor

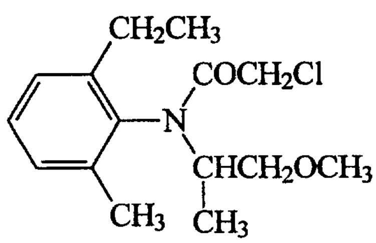

,

B35) Metribuzin

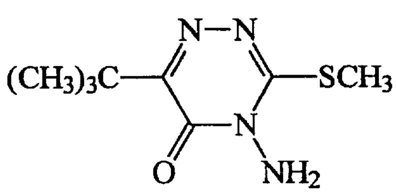

,

B36) Atrazin

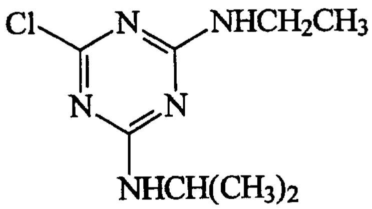

,

B37) Terbuthylazin

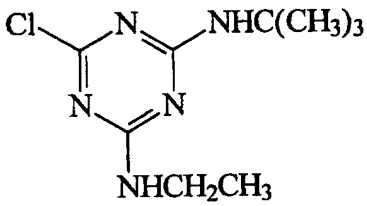

,

B38) Alachlor

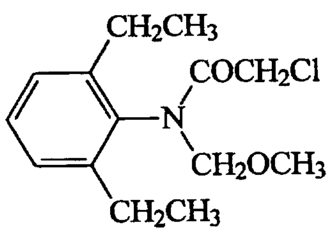

B39) Acetochlor

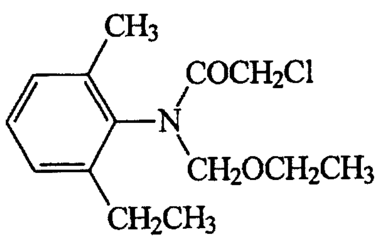

und
B40) Dimethenamid

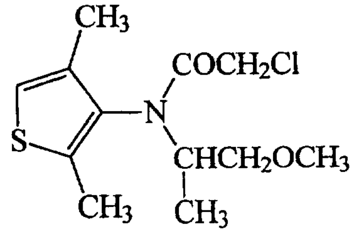

umfaßt.

**16.** Mittel nach einem oder mehreren der Ansprüche 1 bis 4,
**dadurch gekennzeichnet,**
**daß** es als Herbizide vom Typ B ein oder mehrere Herbizide aus der Gruppe enthält, die

B41) Amidosulfuron

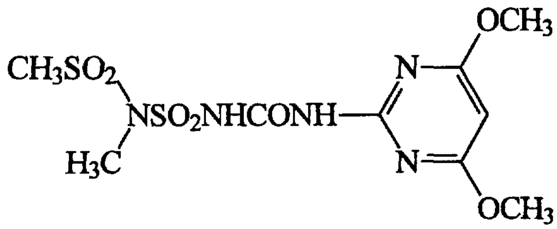

,

B42) Metsulfuron

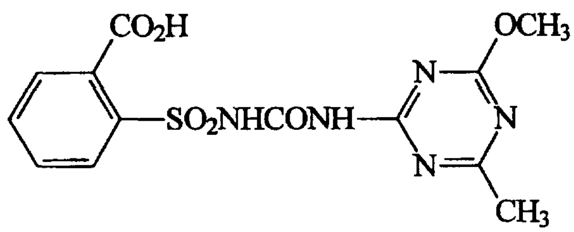

,

B43) Tribenuron

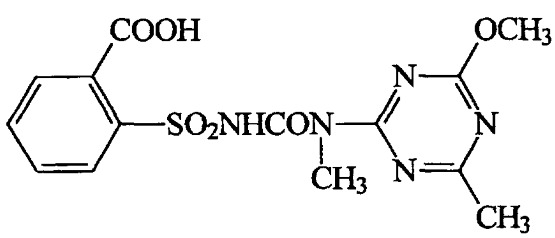

,

B44) Thifensulfuron

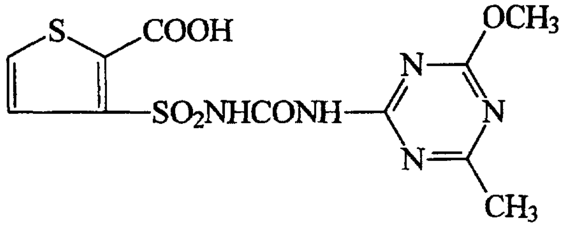

,

B45) Triasulfuron

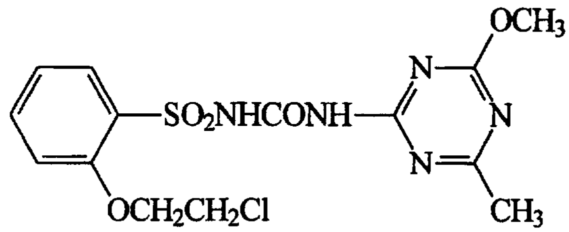

,

B46) Chlorsulfuron

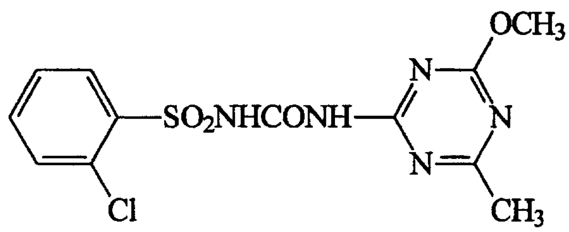

,

B47) Prosulfuron oder CGA-152005

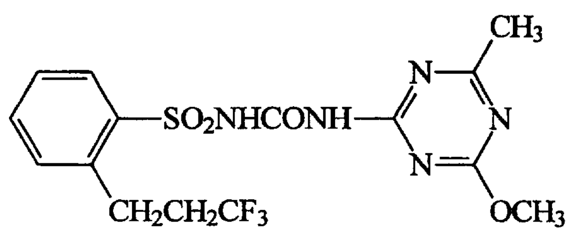

,

B48) Sulfonylharnstoffe der allgemeinen Formel III

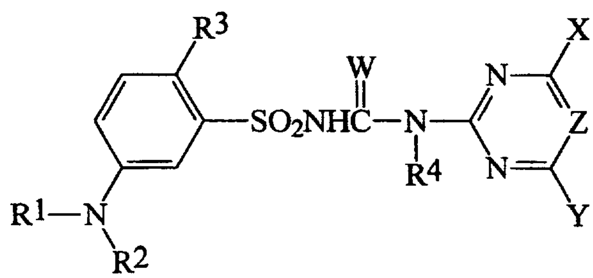

(III),

worin

| | |
|---|---|
| $R^1$ | Methyl, Ethyl, n-Propyl, i.Propyl oder Allyl ist, |
| $R^2$ | CO-$R^5$, COO$R^6$, CO-N$R^8R^9$, CS-N$R^{10}R^{11}$, $SO_2R^{14}$ oder $SO_2NR^{15}R^{16}$ |
| $R^3$ | COR$^{17}$, COOR$^{18}$, CONR$^{19}$R$^{20}$ oder CO-ON=CR$^{22}$R$^{23}$ ist, |
| $R^4$ | Wasserstoff oder ($C_1$-$C_4$)-Alkyl ist, |

| | |
|---|---|
| $R^5$ | Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind, |
| $R^6$ | $(C_1-C_4)$-Alkyl, Allyl, Propargyl oder Cyclopropyl ist, |
| $R^8$ | Wasserstoff, $(C_1-C_4)$-Alkyl, $(C_1-C_4)$-Haloalkyl oder $(C_1-C_4$-Alkoxy)-carbonyl ist |
| $R^9$-$R^{11}$ | unabhängig voneinander gleich oder verschieden H oder $(C_1-C_4)$-Alkyl sind, |
| $R^{14}$ | $(C_1-C_4)$-Alkyl ist, |
| $R^{15}$ u. $R^{16}$ | unabhängig voneinander gleich oder verschieden Wasserstoff oder $(C_1-C_4)$-Alkyl sind, |
| $R^{17}$ | Wasserstoff, $(C_1-C_4)$-Alkyl, $(C_1-C_4)$-Haloalkyl, $(C_3-C_6)$-Cycloalkyl, Phenyl oder Heteroaryl ist, wobei die letztgenannten zwei Reste unsubstituiert oder substituiert sind, |
| $R^{18}$ | Wasserstoff, $(C_1-C_4)$-Alkyl, $(C_2-C_6)$-Alkenyl oder $(C_2-C_6)$-Alkinyl, wobei die letztgenannten drei Reste unsubstituiert oder durch einen oder mehrere Reste aus der Gruppe Halogen, $(C_1-C_4)$-Alkoxy, $(C_1-C_4)$-Alkylthio und $NR^{31}R^{32}$ substituiert sind, oder $(C_3-C_6)$-Cycloalkyl oder $(C_3-C_6)$-Cycloalkyl-$(C_1-C_3)$-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder $(C_1-C_2)$-Alkyl sind, |
| $R^{31}$ u. $R^{32}$ | unabhängig voneinander gleich oder verschieden Wasserstoff oder $(C_1-C_4)$-Alkyl sind, |
| W | Sauerstoff oder Schwefel ist, |
| X | $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2$-alkyl)-amino ist, |
| Y | $(C_1-C_4)$-Alkyl, $(C_1-C_4)$-Alkoxy, $(C_1-C_4)$-Haloalkyl oder $(C_1-C_4)$-Alkylthio ist, und |
| Z | CH oder N |

bedeutet,

B49) Flupyrsulfuron (DPX-KE459)

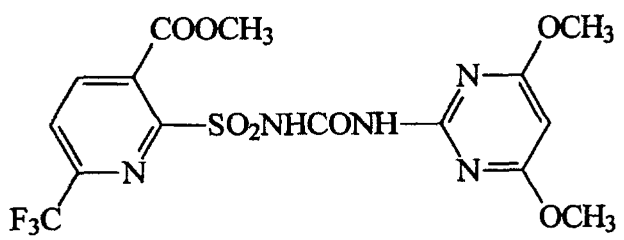

und/oder

B50) Sulfosulfuron (MON37500)

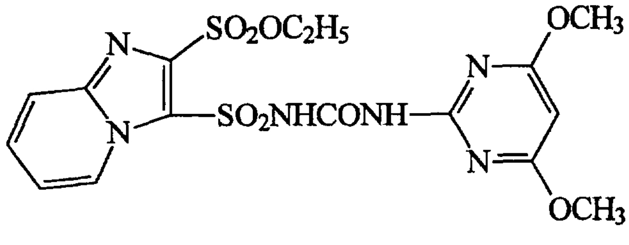

einschließt.

**17.** Mittel nach einem oder mehreren der Ansprüche 1 bis 4,
**dadurch gekennzeichnet,**
**daß** es als Herbizid vom Typ B
B51)KIH-2023

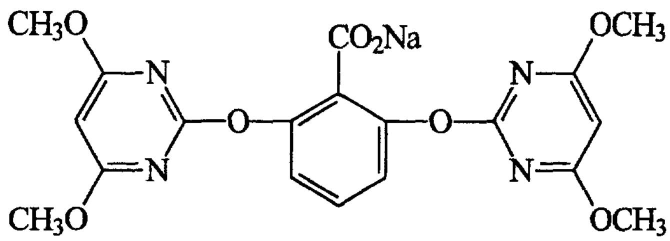

enthält.

**18.** Mittel nach einem der Ansprüche 15 oder 16,
**dadurch gekennzeichnet,**
**daß** es als Herbizid vom Typ B Atrazin, Metsulfuron-methyl, Tribenuron-methyl und/oder Amidosulfuron enthält.

**19.** Mittel nach einem oder mehreren der Ansprüche 1 bis 4,
**dadurch gekennzeichnet,**
**daß** es als Herbizide vom Typ B ein oder mehrere nichtselektiv im Nichtkulturland und/oder selektiv in transgenen Kulturen gegen Ungräser und Unkräuter wirkende Herbizide aus der Gruppe enthält, die

B52)Glufosinate, Glufosinate-P

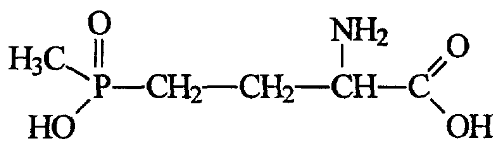

,

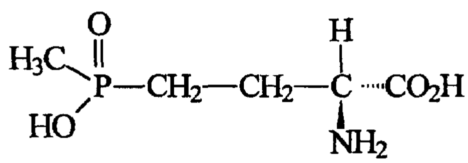

und

B53)Glyphosate

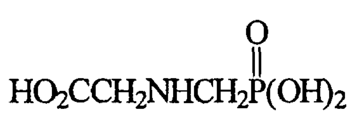

umfaßt.

**20.** Mittel nach Anspruch 19,
**dadurch gekennzeichnet,**
**daß** es als Herbizid vom Typ B Glufosinate-Ammonium enthält.

**21.** Mittel nach einem oder mehreren der vorhergehenden Ansprüche,
**dadurch gekennzeichnet,**

**daß** sie einen synergistisch wirksamen Gehalt einer Kombination der Verbindungen der Formel I oder deren Salze (Typ-A-Verbindung) mit Verbindungen aus der Gruppe B aufweisen.

**22.** Mittel nach einem oder mehreren der vorhergehenden Ansprüche,
**dadurch gekennzeichnet,**
**daß** sie 0,1 bis 99 Gew.-% der Wirkstoffe A und B neben üblichen Formulierungshilfsmitteln enthalten.

**23.** Verfahren zur Herstellung eines Mittels nach einem oder mehreren der vorhergehenden Ansprüche,
**dadurch gekennzeichnet,**
**daß** man die Verbindungen der Formel I oder deren Salze (Typ-A-Verbindungen) mit einer oder mehreren Verbindungen des Typs B und gegebenenfalls mit einer oder mehreren Verbindungen des Typs C analog einer üblichen Pflanzenschutzformulierung aus der Gruppe enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

**24.** Verfahren zur Bekämpfung von unerwünschten Pflanzen,
**dadurch gekennzeichnet,**
**daß** man auf diese oder die Anbaufläche eine herbizid wirksame Menge einer der in einem oder mehreren der Ansprüche 1 bis 22 definierten Kombinationen von Wirkstoffen A + B appliziert.

**25.** Verfahren nach Anspruch 24,
**dadurch gekennzeichnet,**
**daß** die Aufwandmenge für die Verbindungen der Formel (I) oder deren Salze (Typ-A-Verbindungen) von 0,1 bis 100 g ai/ha, bevorzugt von 2 bis 40 g ai/ha, und die Aufwandmengen für die Verbindungen vom Typ B von 1 bis 5000 g ai/ha betragen.

**26.** Verfahren nach Anspruch 24 oder 25,
**dadurch gekennzeichnet,**
**daß** die Wirkstoffe der Typen A und B gleichzeitig oder zeitlich getrennt im Gewichtsverhältnis 1:2500 bis 20:1 appliziert werden.

**27.** Verfahren nach einem der Ansprüche 24 bis 26,
**dadurch gekennzeichnet,**
**daß** die Kombinationen zur selektiven Bekämpfung unerwünschter Pflanzen eingesetzt werden.

**28.** Verfahren nach Anspruch 27,
**dadurch gekennzeichnet,**
**daß** die Kombinationen in transgenen Kulturen eingesetzt werden.

**29.** Verfahren nach Anspruch 28,
**dadurch gekennzeichnet,**
**daß** die Kombinationen in Getreide, Mais, Reis, Zuckerrohr, Plantagenkulturen, Grün- oder Weideland eingesetzt werden.

**30.** Verfahren nach einem der Ansprüche 24 bis 26,
**dadurch gekennzeichnet,**
**daß** die Kombinationen in Nutzpflanzenkulturen eingesetzt werden.

**31.** Verfahren nach einem der Ansprüche 24 bis 26,
**dadurch gekennzeichnet,**
**daß** die Kombinationen auf Nichtkulturland eingesetzt werden.

## Claims

**1.** A herbicidal composition comprising

A) at least one compound from the group of the substituted phenylsulfonylureas of the formula I and their agriculturally acceptable salts

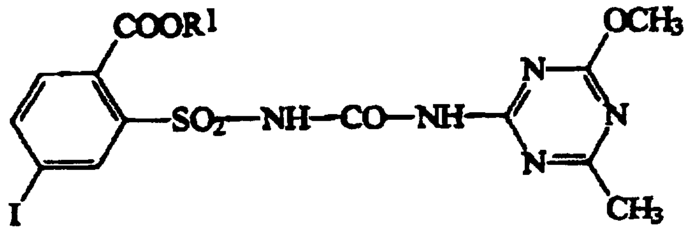

(I),

in which

$R^1$ is $(C_1-C_8)$alkyl, $(C_3-C_4)$alkenyl, $(C_3-C_4)$alkynyl or $(C_1-C_4)$alkyl which is mono- to tetra-substituted by radicals selected from the group consisting of halogen and $(C_1-C_2)$alkoxy,

and

B) at least one herbicidally active compound from the group of compounds composed of

Ba) herbicides which act selectively against grasses in cereals and/or maize: fenoxaprop, fenoxaprop-P, isoproturon, diclofop, clodinafop, mixtures of clodinafop and cloquintocet, chlortorulon, methabenzthiazuron, imazamethabenz, tralkoxydim, difenzoquat, flamprop, flamprop-M, pendimethalin, nicosulfuron, rimsulfuron, primisulfuron,
Bb) herbicides which act selectively against dicots in cereals and/or maize: mecoprop, mecoprop-P, MCPA, dichlorprop, dichlorprop-P, 2,4-D, dicamba, fluroxypyr, ioxynil, bromoxynil, bifenox, fluoroglycofen, acifluorfen, lactofen, fomesafen, oxyfluorfen, ET-751, azoles of the formula II

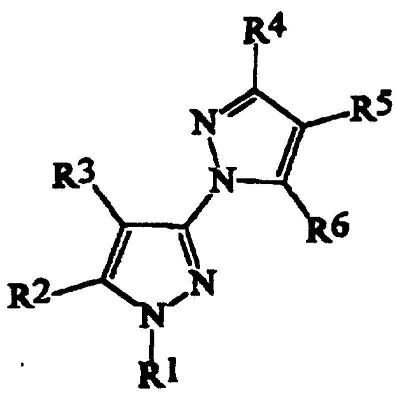

(II),

where

| | |
|---|---|
| $R^1$ | is $(C_1-C_4)$alkyl, |
| $R^2$ | is $(C_1-C_4)$alkyl, $(C_1-C_4)$alkylthio or $(C_1-C_4)$alkoxy, it being possible for each radical to be substituted by one or more halogen atoms, or |
| $R^1$ and $R^2$ | together form the group $(CH_2)_m$ where m = 3 or 4, |
| $R^3$ | is hydrogen or halogen, |
| $R^4$ | is hydrogen or $(C_1-C_4)$alkyl, |
| $R^5$ | is hydrogen, nitro, cyano or one of the groups $-COOR^7$, $-C(=X)NR^7R^8$ or $-C(=X)R^{10}$, |
| $R^6$ | is hydrogen, halogen, cyano, $(C_1-C_4)$alkyl, $(C_1-C_4)$alkylthio or $-NR^{11}R^{12}$, |
| $R^7$ and $R^8$ | are identical or different and are hydrogen or $(C_1-C_4)$alkyl, or |

$R^7$ and $R^8$ together with the nitrogen to which they are bonded form a saturated 5- or 6-membered carbocyclic ring,
$R^{10}$ is hydrogen or $(C_1-C_4)$alkyl, it being possible for the latter to be optionally substituted by one or more halogen atoms, and
$R^{11}$ and $R^{12}$ are identical or different and are hydrogen, $(C_1-C_4)$alkyl or $(C_1-C_4)$alkoxycarbonyl, it being possible for
$R^{11}$ and $R^{12}$ together with the nitrogen to which they are bonded to form a 3-, 5- or 6- membered carbocyclic or aromatic ring in which one carbon atom can optionally be replaced by an oxygen atom;

diflufenican, bentazone,
Bc) herbicides which act selectively against grasses and dicots in cereals and/or maize: metolachlor, metribuzin, atrazine, terbuthylazine, alachlor, acetochlor, dimethenamid, amidosulfuron, metsulforun, tribenuron, thifensulfuron, triasulfuron, chlorsulfuron, prosulfuron or CGA-152005, sulfonylureas of the formula III

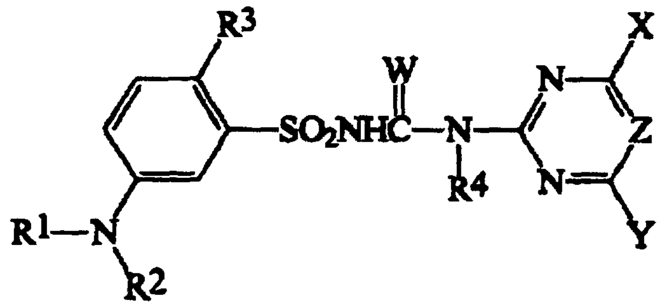

(III),

in which

| | |
|---|---|
| $R^1$ | is methyl, ethyl, n-propyl, i-propyl or allyl, |
| $R^2$ | is CO-$R^5$, COOR$^6$, CO-NR$^8$R$^9$, CS-NR$^{10}$R$^{11}$, $SO_2R^{14}$ or $SO_2NR^{15}R^{16}$, |
| $R^3$ | is COR$^{17}$, COOR$^{18}$, CONR$^{19}$R$^{20}$ or CO-ON=CR$^{22}$R$^{23}$, |
| $R^4$ | is hydrogen or $(C_1-C_4)$alkyl, |
| $R^5$ | is hydrogen, $(C_1-C_4)$alkyl, $(C_1-C_2)$haloalkyl, cyclopropyl, phenyl, benzyl or heteroaryl having 5 or 6 ring atoms, the last-mentioned 3 radicals being unsubstituted or substituted by one or more halogen atoms, |
| $R^6$ | is $(C_1-C_4)$alkyl, allyl, propargyl or cyclopropyl, |
| $R^8$ | is hydrogen, $(C_1-C_4)$alkyl, $(C_1-C_4)$ haloalkyl or $(C_1-C_4$-alkoxy)carbonyl, |
| $R^9$-$R^{11}$ | independently of one another are identical or different and are H or $(C_1-C_4)$alkyl, |
| $R^{14}$ | is $(C_1-C_4)$alkyl, |
| $R^{15}$ and $R^{16}$ | independently of one another are identical or different and are hydrogen or $(C_1-C_4)$alkyl, |
| $R^{17}$ | is hydrogen, $(C_1-C_4)$alkyl, $(C_1-C_4)$haloalkyl, $(C_3-C_6)$cycloalkyl, phenyl or heteroaryl, the last-mentioned two radicals being unsubstituted or substituted, |
| $R^{18}$ | is hydrogen, $(C_1-C_4)$alkyl, $(C_2-C_6)$alkenyl or $(C_2-C_6)$alkynyl, the last-mentioned three radicals being unsubstituted or substituted by one or more radicals selected from the group consisting of halogen, $(C_1-C_4)$alkoxy, $(C_1-C_4)$alkylthio and NR$^{31}$R$^{32}$, or is $(C_3-C_6)$cycloalkyl or $(C_3-C_6)$cycloalkyl- $(C_1-C_3)$alkyl, |
| $R^{19}$ | is analogous to $R^8$, |
| $R^{20}$ | is analogous to $R^9$, |
| $R^{22}$ and $R^{23}$ | independently of one another are identical or different and are hydrogen or $(C_1-C_2)$alkyl, |
| $R^{31}$ and $R^{32}$ | independently of one another are identical or different and are hydrogen or $(C_1-C_4)$alkyl, |
| W | is oxygen or sulfur, |
| X | is $(C_1-C_4)$alkyl, $(C_1-C_4)$alkoxy, $(C_1-C_4)$haloalkyl, $(C_1-C_4)$alkylthio, halogen or mono- or di $(C_1-C_2$-alkyl)amino, |
| Y | is $(C_1-C_4)$alkyl, $(C_1-C_4)$alkoxy, $(C_1-C_4)$haloalkyl or $(C_1-C_4)$alkylthio, and |
| Z | is CH or N, |

flupyrsulfuron (DPX-KE459), sulfosulfuron (MON37500), KIH-2023,
Bd) non-selective herbicides which act against grass weeds and broad-leaved weeds in non-crop areas and/or selective herbicides which act against grass weeds and broad-leaved weeds in transgenic crops: glufosinate, glufosinate-P, glyphosate,

the compositions comprising the compounds of the formula I or the salts thereof (type A compounds) and the compounds from group B in a weight ratio of from 1:2500 to 20:1.

**2.** A composition as claimed in claim 1, wherein, in the herbicide of the formula (I) or in the salt thereof,

$R^1$ is methyl, ethyl, n- or isopropyl, n-, tert-, 2-butyl or isobutyl, n-pentyl, isopentyl, n-hexyl, isohexyl, 1,3-dimethylbutyl, n-heptyl, 1-methylhexyl or 1,4-dimethylpentyl.

**3.** A composition as claimed in claim 1 or 2, wherein, in the herbicide of the formula (I) or the salt thereof, $R^1$ is methyl.

**4.** A composition as claimed in one or more of the preceding claims, wherein the salt of the herbicide of the formula (I) is formed by replacing the hydrogen of the $-SO_2-NH-$ group by a cation from the group of the alkali metals, alkaline earth metals and ammonium, preferably sodium.

**5.** A composition as claimed in one or more of the preceding claims, which comprises, as type B herbicides, one or more herbicides which act selectively against grasses in cereals and which are from the group consisting of

B1) fenoxaprop, fenoxaprop-P

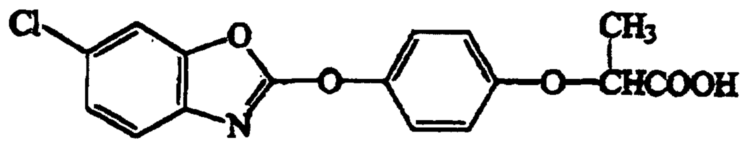

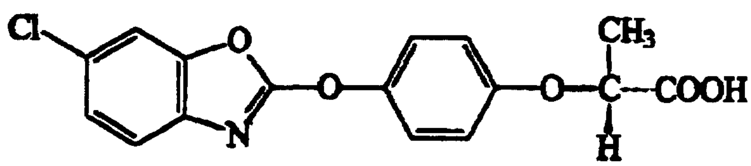
,

B2) isoproturon

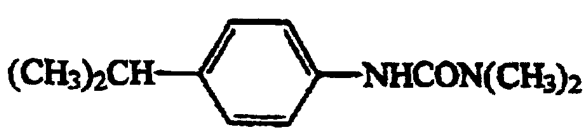
,

B3) diclofop

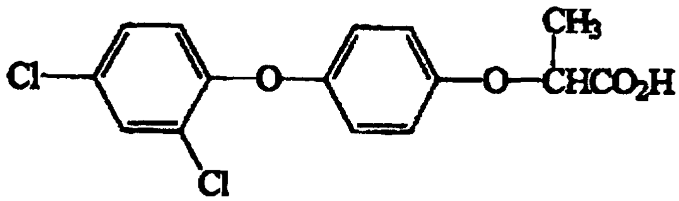

,

B4) clodinafop

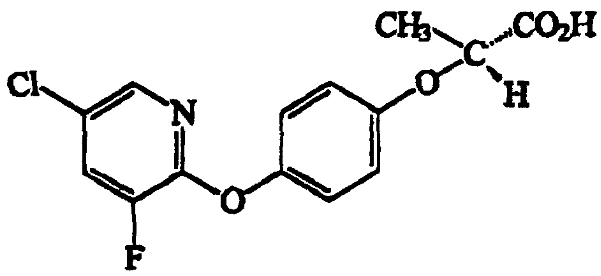

,

B5) mixtures of B4) and cloquintocet

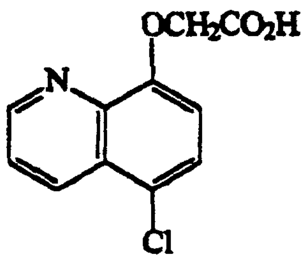

,

B6) chlortoluron

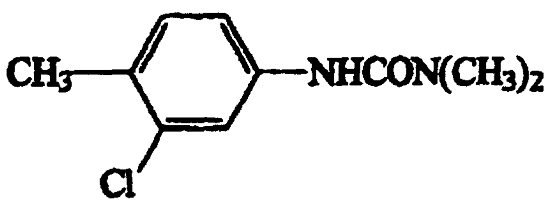

,

B7) methabenzthiazuron

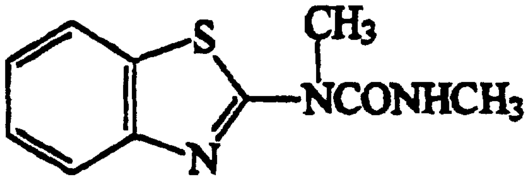

,

B8) imazamethabenz

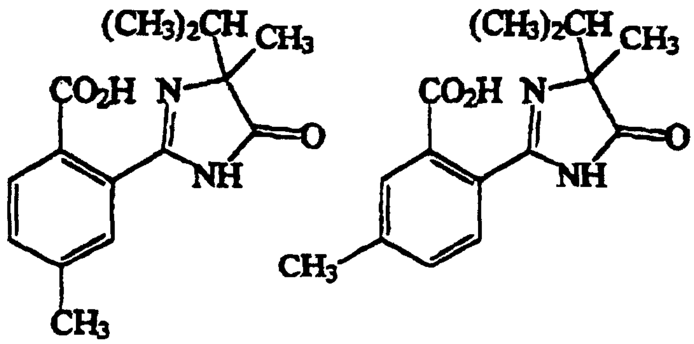

,

B9) tralkoxydim

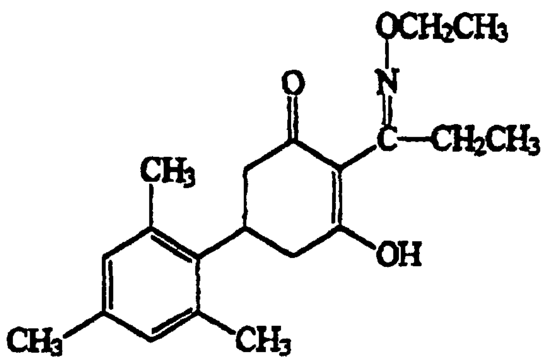

,

B10) difenzoquat

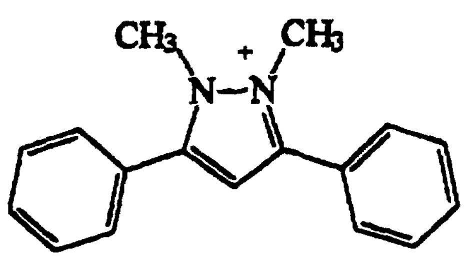

,

B11) flamprop, flamprop-M

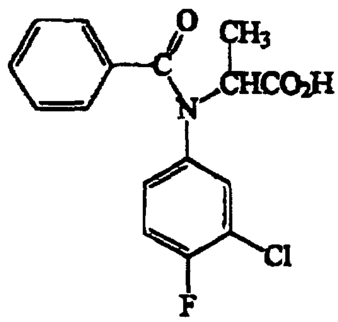

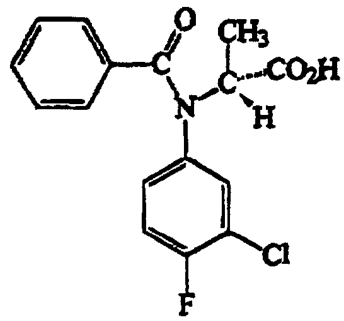

and

B12) pendimethalin

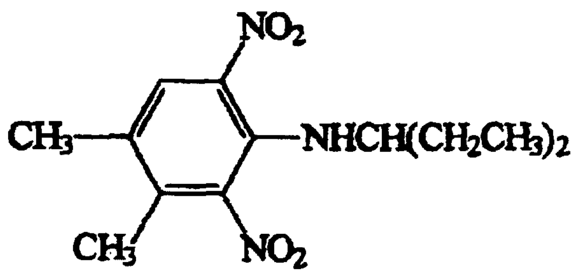

**6.** A composition as claimed in one or more of claims 1 to 4, which comprises, as type B herbicides, one or more herbicides which act selectively against grasses in maize and which are from the group consisting of

B13) nicosulfuron

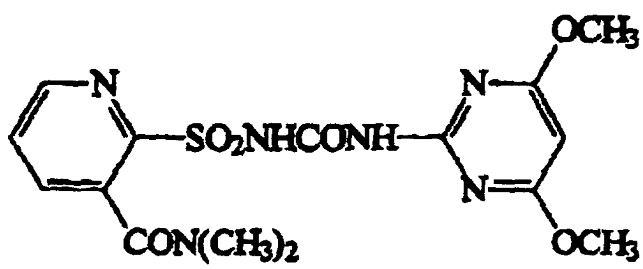

B14) rimsulfuron

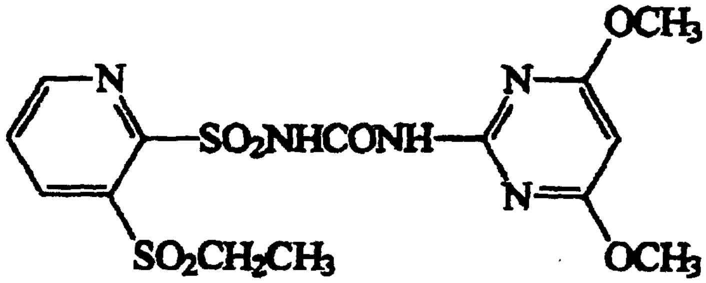

and

B15) primisulfuron

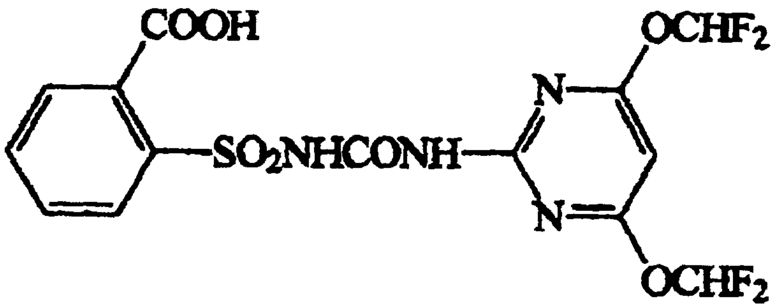

7. A composition as claimed in one of claims 5 or 6, which comprises, as type B herbicides, diclofopmethyl, fenoxaprop-P-ethyl, isoproturon, mixtures of clodinafop-propargyl with cloquintocet-mexyl, imazamethabenz-methyl, nicosulfuron and/or rimsulfuron.

8. A composition as claimed in one or more of claims 1 to 4, which comprises, as type B herbicides, one or more herbicides which act selectively against dicots in cereals and/or in maize and which are from the group consisting of

B16) mecoprop, mecoprop-P

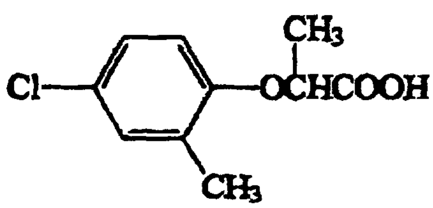 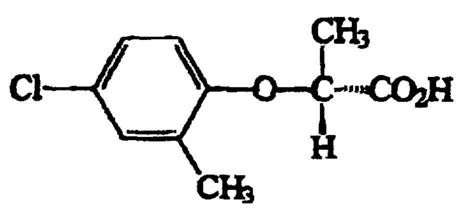

,

B17) MCPA

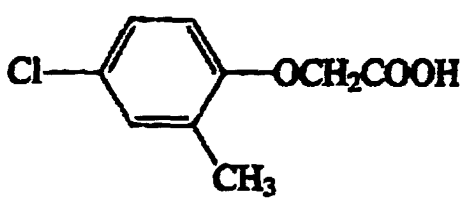

,

B18) dichlorprop, dichlorprop-P

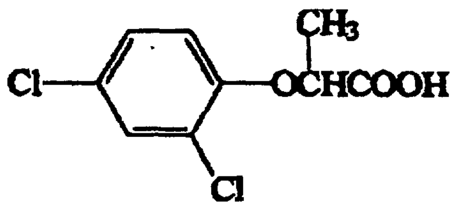

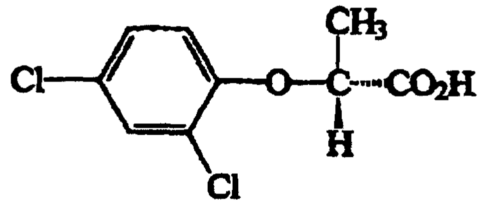

,

B19) 2,4-D

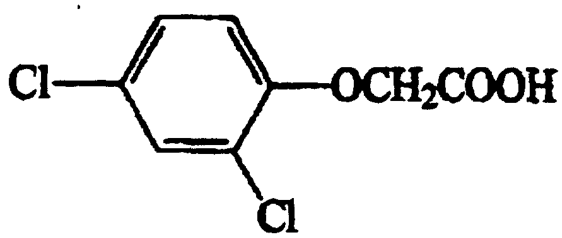

,

B20) dicamba

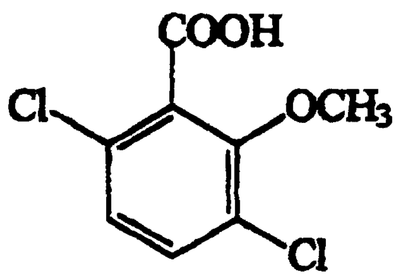

and

B21) fluroxypyr

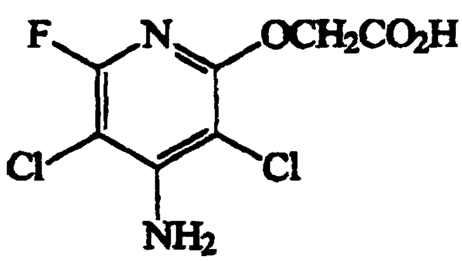

9. A composition as claimed in one or more of claims 1 to 4, which comprises, as type B herbicides, one or more herbicides which act selectively against dicots in cereals and/or in maize and which are from the group consisting of

B22) ioxynil

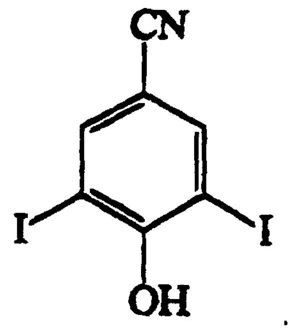

and
B23) bromoxynil

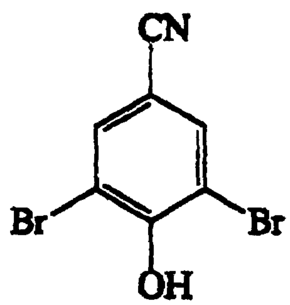

**10.** A composition as claimed in one or more of claims 1 to 4, which comprises, as type B herbicides, one or more herbicides which act selectively against dicots in cereals and/or in maize and which are from the group consisting of

B24) bifenox
methyl 5-(2,4-dichlorophenoxy)-2-nitrobenzoate

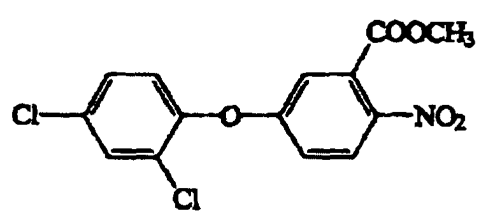

B25) fluoroglycofen

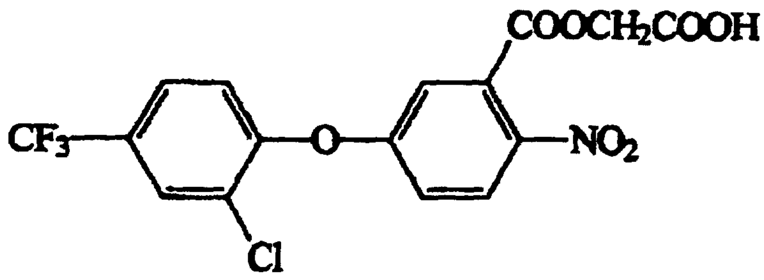

,

B26) acifluorfen

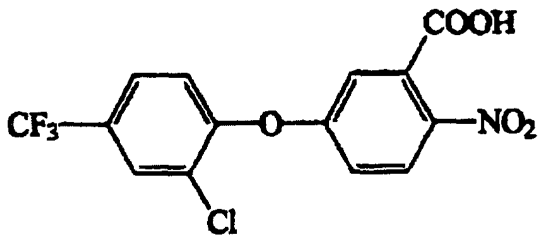

,

B27) lactofen

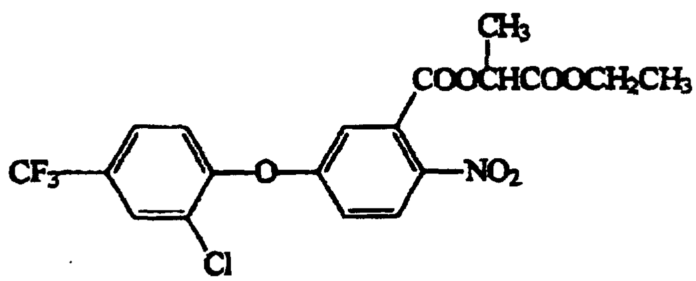

B28) fomesafen

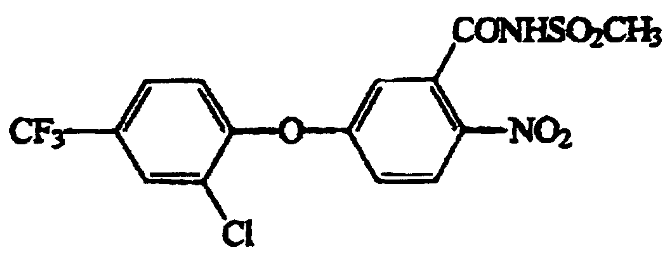

and

B29) oxyfluorfen

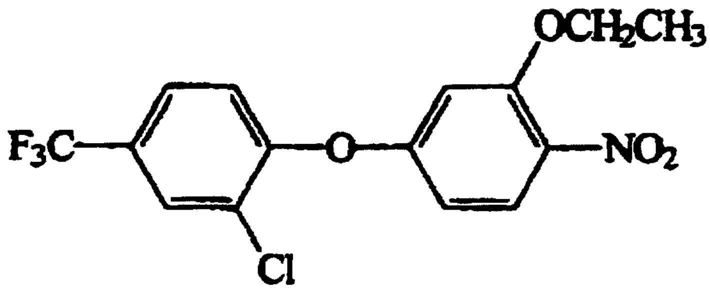

11. A composition as claimed in one or more of claims 1 to 4, which comprise, as type B herbicides, one or more herbicides which act selectively against dicots in cereals and/or in maize and which are from the group consisting of

B30) ET-751

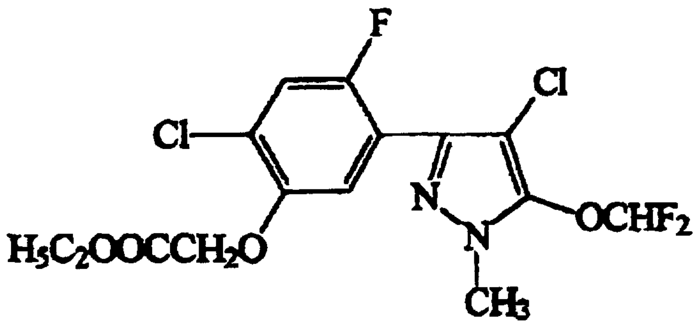

and

B31) azoles of the formula II

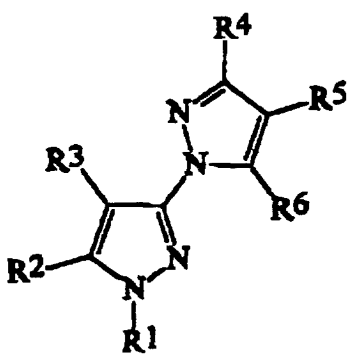

(II),

where

| | |
|---|---|
| $R^1$ | is $(C_1-C_4)$alkyl, |
| $R^2$ | is $(C_1-C_4)$alkyl, $(C_1-C_4)$alkylthio or $(C_1-C_4)$alkoxy, it being possible for each radical to be substituted by one or more halogen atoms, or |
| $R^1$ and $R^2$ | together form the group $(CH_2)_m$ where m = 3 or 4, |
| $R^3$ | is hydrogen or halogen, |
| $R^4$ | is hydrogen or $(C_1-C_4)$alkyl, |
| $R^5$ | is hydrogen, nitro, cyano or one of the groups $-COOR^7$, $-C(=X)NR^7R^8$ or $-C(=X)R^{10}$, |
| $R^6$ | is hydrogen, halogen, cyano, $(C_1-C_4)$alkyl, $(C_1-C_4)$alkylthio or $-NR^{11}R^{12}$, |
| $R^7$ and $R^8$ | are identical or different and are hydrogen or $(C_1-C_4)$alkyl, or |
| $R^7$ and $R^8$ | together with the nitrogen to which they are bonded form a saturated 5- or 6-membered car- |

bocyclic ring,

$R^{10}$ is hydrogen or ($C_1$-$C_4$)alkyl, it being possible for the latter to be optionally substituted by one or more halogen atoms, and

$R^{11}$ and $R^{12}$ are identical or different and are hydrogen, ($C_1$-$C_4$)alkyl or ($C_1$-$C_4$)alkoxycarbonyl, it being possible for

$R^{11}$ and $R^{12}$ together with the nitrogen to which they are bonded to form a 3-, 5- or 6- membered carbocyclic or aromatic ring in which one carbon atom can optionally be replaced by an oxygen atom.

**12.** A composition as claimed in one or more of claims 1 to 4, wherein the type B herbicide which it comprises is B32) diflufenican

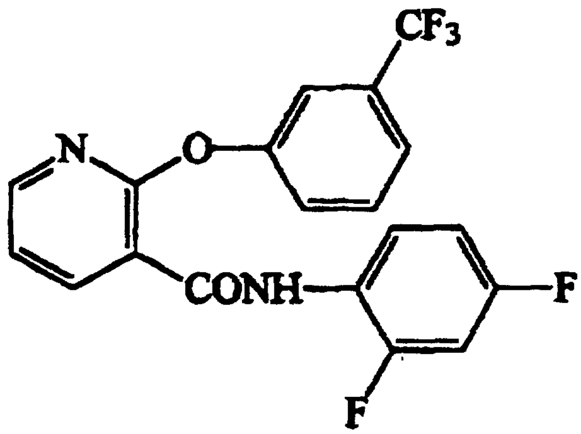

which acts selectively against dicots in cereals and/or in maize.

**13.** A composition as claimed in one or more of claims 1 to 4, wherein the type B herbicide which it comprises is B33) bentazone

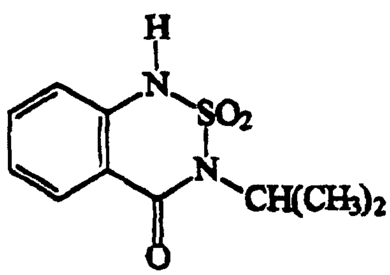

,

which acts selectively against dicots in cereals and/or in maize.

**14.** A composition as claimed in one or more of claims 8 to 13, which comprises, as type B herbicides, MCPA, mecoprop, dicamba, fluroxypyr, diflufenican, ioxynil and/or fluoroglycofen.

**15.** A composition as claimed in one or more of claims 1 to 4, which comprises, as type B herbicides, one or more herbicides from the group embracing

B34) metolachlor

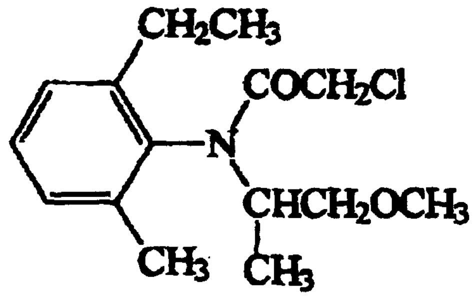

,

B35) metribuzin

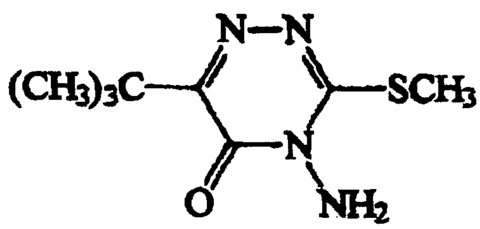

,

B36) atrazine

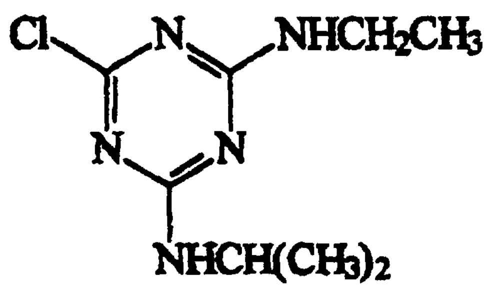

,

B37) terbuthylazine

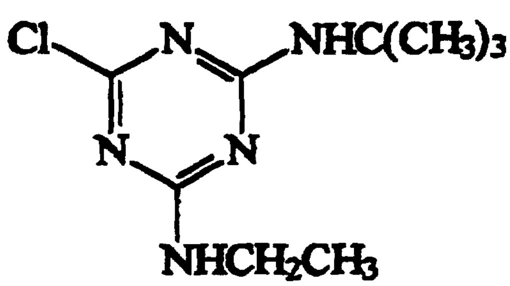

,

B38) alachlor

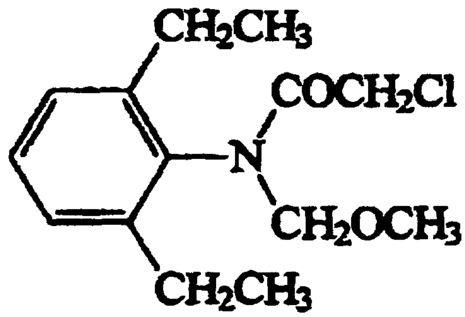

B39) acetochlor

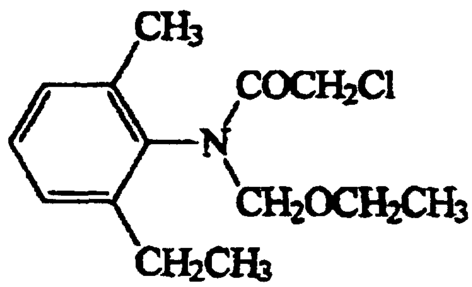

and

B40) dimethenamide

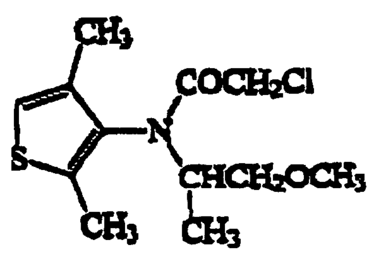

**16.** A composition as claimed in one or more of claims 1 to 4, which comprises, as type B herbicides, one or more herbicides from the group embracing

B41) amidosulfuron

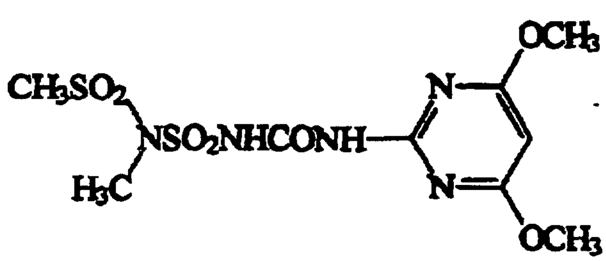

,

B42) metsulfuron

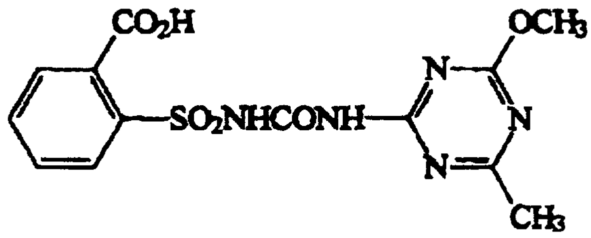

,

B43) tribenuron

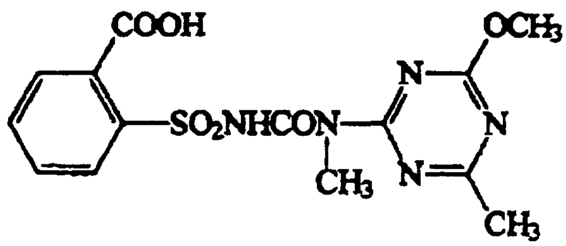

,

B44) thifensulfuron

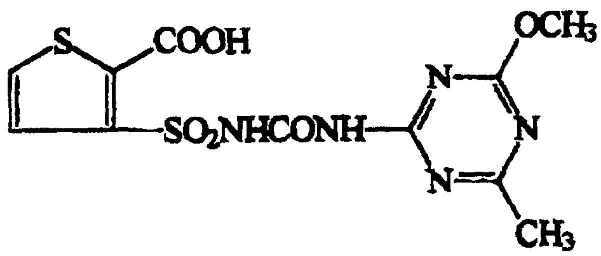

,

B45) triasulfuron

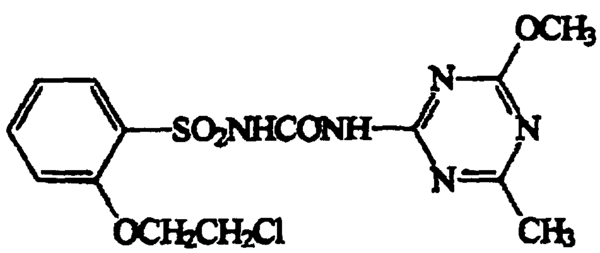

,

B46) chlorsulfuron

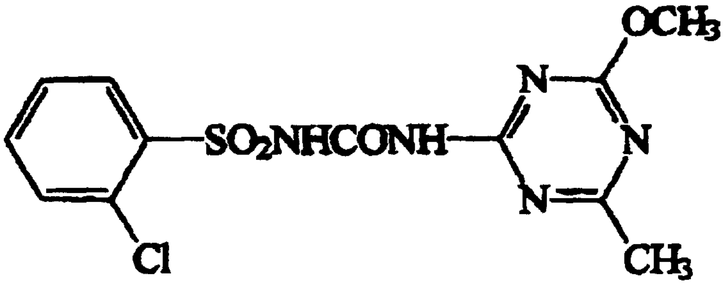

,

B47) prosulfuron or CGA-152005

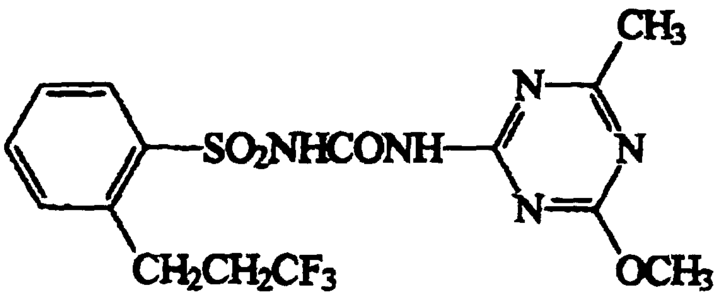

B48) sulfonylureas of the formula III

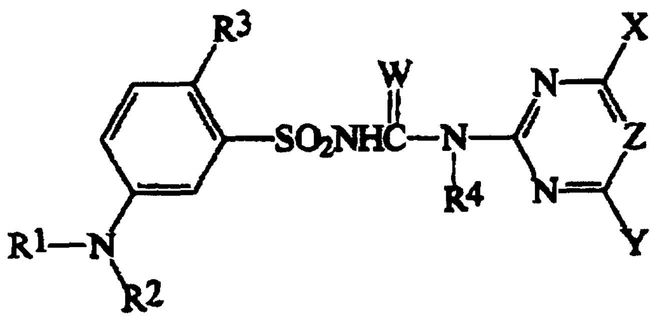

(III),

in which

| | |
|---|---|
| $R^1$ | is methyl, ethyl, n-propyl, i-propyl or allyl, |
| $R^2$ | is CO-$R^5$, COO$R^6$, CO-N$R^8R^9$, CS-N$R^{10}R^{11}$, $SO_2R^{14}$ or $SO_2NR^{15}R^{16}$, |
| $R^3$ | is CO$R^{17}$, COO$R^{18}$, CON$R^{19}R^{20}$ or CO-ON=C$R^{22}R^{23}$, |
| $R^6$ | is hydrogen or ($C_1$-$C_4$)alkyl, |
| $R^5$ | is hydrogen, ($C_1$-$C_4$)alkyl, ($C_1$-$C_2$)haloalkyl, cyclopropyl, phenyl, benzyl or heteroaryl having 5 or 6 ring atoms, the last-mentioned 3 radicals being unsubstituted or substituted by one or more halogen atoms, |
| $R^6$ | is ($C_1$-$C_4$)alkyl, allyl, propargyl or cyclopropyl, |
| $R^8$ | is hydrogen, ($C_1$-$C_4$)alkyl, ($C_1$-$C_4$)haloalkyl or ($C_1$-$C_4$-alkoxy)carbonyl, |
| $R^9$-$R^{11}$ | independently of one another are identical or different and are H or ($C_1$-$C_4$)alkyl, |
| $R^{14}$ | is ($C_1$-$C_4$)alkyl, |
| $R^{15}$ and $R^{16}$ | independently of one another are identical or different and are hydrogen or ($C_1$-$C_4$)alkyl, |
| $R^{17}$ | is hydrogen, ($C_1$-$C_4$)alkyl, ($C_1$-$C_4$)haloalkyl, ($C_3$-$C_6$)cycloalkyl, phenyl or heteroaryl, the last-mentioned two radicals being unsubstituted or substituted, |

| | |
|---|---|
| $R^{18}$ | is hydrogen, $(C_1-C_4)$alkyl, $(C_2-C_6)$alkenyl or $(C_2-C_6)$alkynyl, the last-mentioned three radicals being unsubstituted or substituted by one or more radicals selected from the group consisting of halogen, $(C_1-C_4)$alkoxy, $(C_1-C_4)$alkylthio and $NR^{31}R^{32}$, or is $(C_3-C_6)$cycloalkyl or $(C_3-C_6)$cycloalkyl-$(C_1-C_3)$alkyl, |
| $R^{19}$ | is analogous to $R^8$, |
| $R^{20}$ | is analogous to $R^9$, |
| $R^{22}$ and $R^{23}$ | independently of one another are identical or different and are hydrogen or $(C_1-C_2)$alkyl, |
| $R^{31}$ and $R^{32}$ | independently of one another are identical or different and are hydrogen or $(C_1-C_4)$alkyl, |
| w | is oxygen or sulfur, |
| x | is $(C_1-C_4)$alkyl, $(C_1-C_4)$alkoxy, $(C_1-C_4)$haloalkyl, $(C_1-C_4)$alkylthio, halogen or mono- or di($C_1$-$C_2$-alkyl)amino, |
| Y | is $(C_1-C_4)$alkyl, $(C_1-C_4)$alkoxy, $(C_1-C_4)$haloalkyl or $(C_1-C_4)$alkylthio, and |
| Z | is CH or N |

B49) flupyrsulfuron (DPX-KE459)

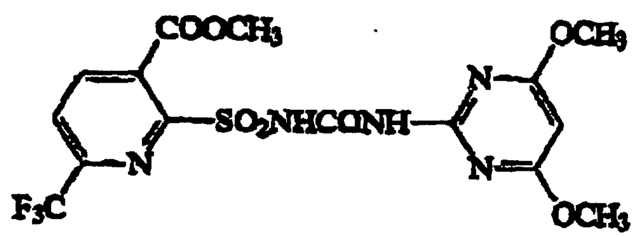

and/or

B50) sulfosulfuron (MON37500)

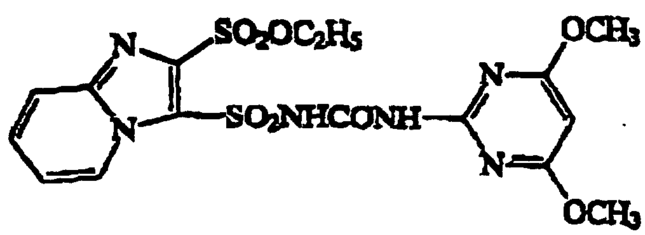

**17.** A composition as claimed in one or more of claims 1 to 4, wherein the type B herbicide which it comprises is B51) KIH-2023

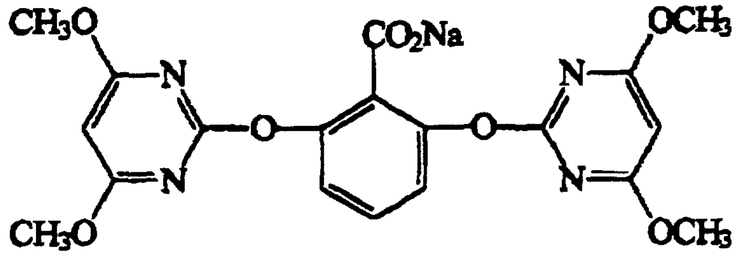

**18.** A composition as claimed in one of claims 15 or 16, wherein the type B herbicide which it comprises is atrazine, metsulfuron-methyl, tribenuron-methyl and/or amidosulfuron.

**19.** A composition as claimed in one or more of claims 1 to 4, which comprises, as type B herbicides, one or more herbicides which act non-selectively against grass weeds and broad-leaved weeds in non-crop areas and/or selectively against grass weeds and broad-leaved weeds in transgenic crops, from the group embracing

B52) glufosinate, glufosinate-P

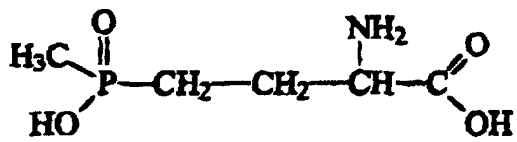

,

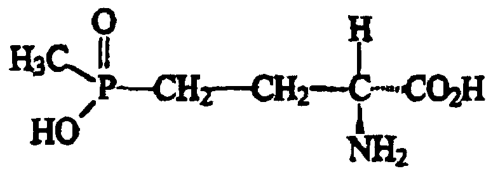

and

B53) glyphosate

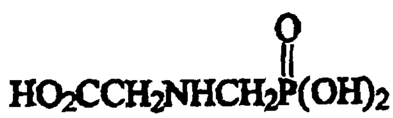

.

**20.** A composition as claimed in claim 19, wherein the type B herbicide which it comprises is glufosinate-ammonium.

**21.** A composition as claimed in one or more of the preceding claims, which exhibit a synergistically active content of a combination of the compounds of the formula I or salts thereof (type A compounds) with compounds from group B.

**22.** A composition as claimed in one or more of the preceding claims, which comprise 0.1 to 99% by weight of the active substances A and B besides customary formulation auxiliaries.

**23.** A process for the preparation of a composition as claimed in one or more of the preceding claims, which comprises formulating the compounds of the formula I or salts thereof (type A compounds) with one or more type B compounds and optionally with one or more type C compounds analogously to a customary crop protection formulation from the group consisting of wettable powders, emulsifiable concentrates, aqueous solutions, emulsions, sprayable solutions (tank mix), oil- or water-based dispersions, suspoemulsions, dusts, seed-dressing products, granules for soil treatment or broadcasting, water-dispersible granules, ULV formulations, microcapsules and waxes.

**24.** A method of controlling undesirable plants, which comprises applying a herbicidally active amount of one of the combinations of active substances A + B defined in one or more of claims 1 to 22 to these plants or to the area under cultivation.

**25.** The method as claimed in claim 24, wherein the rate of application for the compounds of the formula (I) or salts thereof (type A compounds) are from 0.1 to 100 g of a.i./ha, preferably 2 to 40 g of a.i./ha, and the rates for the type B compounds are from 1 to 5000 g of a.i./ha.

**26.** The method as claimed in claim 24 or 25, wherein the active substances of types A and B are applied in a weight ratio of 1:2500 to 20:1, either simultaneously or at separate points in time.

**27.** The method as claimed in one of claims 24 to 26, wherein the combinations are employed for the selective control of undesirable plants.

**28.** The method as claimed in claim 27, wherein the combinations are employed in transgenic crops.

**29.** The method as claimed in claim 28, wherein the combinations are employed in cereals, maize, rice, sugar cane, plantation crops, grassland or pastures.

**30.** The method as claimed in one of claims 24 to 26, wherein the combinations are employed in crops of useful plants.

**31.** The method as claimed in one of claims 24 to 26, wherein the combinations are employed in non-crop areas.

**Revendications**

**1.** Produits herbicides, contenant

A) au moins un composé du groupe des phénylsulfonylurées substituées répondant à la formule générale I et de leurs sels acceptés du point de vue agricole :

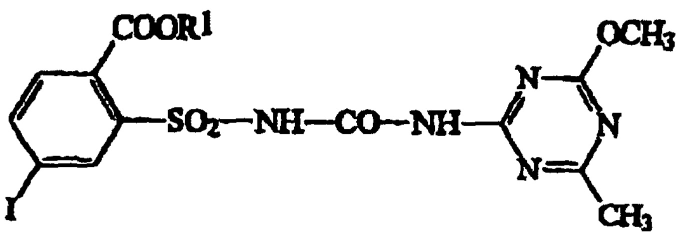

(I)

dans laquelle

$R^1$ représente un groupe $(C_1-C_8)$-alkyle, $(C_3-C_4)$-alcényle, $(C_3-C_4)$-alcynyle ou $(C_1-C_4)$-alkyle, qui est substitué à une jusqu'à quatre reprises par des radicaux du groupe constitué par de l'halogène et un radical $(C_1-C_2)$-alcoxy,
et

B) au moins un composé à action herbicide du groupe des composés, qui est constitué

Ba) d'herbicides sélectivement actifs contre des graminées dans des céréales et/ou du maïs : Fenoxaprop, Fenoxaprop-P, Isoproturon, Diclofop, Clodinafop, des mélanges de Clodinafop et de Cloquintocet, Chlorototuron, Methabenzthiazuron, Imazamethabenz, Tralkoxydim, Difenzoquat, Flamprop, Falmprop-M, Pendimethalin, Nicosulfuron, Rimsulfuron, Primisulfuron,
Bb) d'herbicides sélectivement actifs contre des dicotylédones dans des céréales et/ou du maïs : Mecoprop, Mecoprop-P, MCPA, Dichlorprop, Dichlorprop-P, 2,4-D, Dicamba, Fluroxypyr, loxynil, Bromoxynil, Bifenox, Fluoroglycofen, Acifluorfen, Lactofen, Fomesafen, Oxyfluorfen, ET-751, des azoles de la formule générale II :

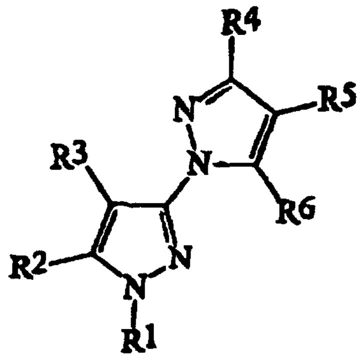

(II)

dans laquelle

| | |
|---|---|
| $R^1$ | est un groupe $(C_1-C_4)$-alkyle, |
| $R^2$ | est un groupe $(C_1-C_4)$-alkyle, $(C_1-C_4)$-alkylthio ou $(C_1-C_4)$-alcoxy, dont chaque radical peut être substitué par un ou plusieurs atomes d'halogène, ou |
| $R^1$ et $R^2$ | forment conjointement le groupe $(CH_2)_m$, où m=3 ou 4, |
| $R^3$ | est de l'hydrogène ou un halogène, |
| $R^4$ | est de l'hydrogène ou un groupe $(C_1-C_4)$-alkyle, |
| $R^5$ | est de l'hydrogène, un groupe nitro, cyano ou un des groupes $-COOR^7$, $-C(=X)NR^7R^8$ ou $-C(=X)R^{10}$, |
| $R^6$ | est de l'hydrogène, un halogène, un groupe cyano, $(C_1-C_4)$-alkyle, $(C_1-C_4)$-alkylthio ou $-NR^{11}R^{12}$, |
| $R^7$ et $R^8$ | sont, d'une manière identique ou différente, de l'hydrogène ou un groupe $(C_1-C_4)$-alkyle, ou |
| $R^7$ et $R^8$ | forment, conjointement à l'atome d'azote sur lequel ils sont liés, un noyau carbocyclique saturé pentagonal ou hexagonal, |
| $R^{10}$ | est de l'hydrogène ou un groupe $(C_1-C_4)$-alkyle, où ce dernier peut être substitué éventuellement par un ou plusieurs atomes d'halogène, et |
| $R^{11}$ et $R^{12}$ | représentent, de manière identique ou différente, de l'hydrogène ou un groupe $(C_1-C_4)$-alkyle ou $(C_1-C_4)$-alcoxycarbonyle, |
| $R^{11}$ et $R^{12}$ | pouvant former, conjointement avec l'atome d'azote sur lequel ils sont liés, un noyau aromatique ou carbocyclique triangulaire, pentagonal ou hexagonal, dans lequel un atome de C peut éventuellement être remplacé par un atome de O, |

Diflufenican, Bentazon,

Bc) d'herbicides sélectivement actifs contre des graminées et des dicotylédones dans des céréales et/ou du maïs : Metolachlor, Metribuzin, Atrazin, Terbuthylazin, Alachlor, Acetochlor, Dimethenamid, Amiodosulfuron, Metsulfuron, Tribenuron, Thifensulfuron, Triasulfuron, Chlorsulfuron, Prosulfuron ou CGA-152005, des sulfonylurées de la formule générale III :

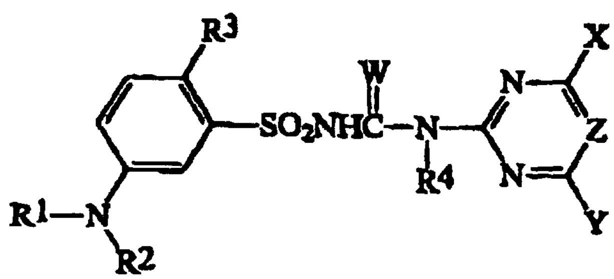

(III)

dans laquelle

| | |
|---|---|
| $R^1$ | est un groupe méthyle, éthyle, n-propyle, i-propyle ou allyle, |
| $R^2$ | est un groupe $CO-R^5$, $COOR^6$, $CO-NR^8R^9$, $CS-NR^{10}R^{11}$, $SO_2R^{14}$ ou $SO_2NR^{15}R^{16}$, |

$R^3$ est un groupe $COR^{17}$, $COOR^{18}$, $CONR^{19}R^{20}$ ou $CO\text{-}ON\text{=}CR^{22}R^{23}$,
$R^4$ est de l'hydrogène ou un groupe ($C_1$-$C_4$)-alkyle,
$R^5$ est de l'hydrogène ou un groupe ($C_1$-$C_4$)-alkyle, ($C_1$-$C_2$)-haloalkyle, cyclopropyle, phényle, benzyle ou hétéroaryle avec 5 ou 6 atomes de noyau, les trois radicaux cités en demier lieu étant non substitués ou substitués par un ou plusieurs atomes d'halogène,
$R^6$ représente un groupe ($C_1$-$C_4$)-alkyle, allyle, propargyle ou cyclopropyle,
$R^8$ représente de l'hydrogène ou un groupe ($C_1$-$C_4$)-alkyle, ($C_1$-$C_4$)-haloalkyle ou ($C_1$-$C_4$-alcoxy)-carbonyle,
$R^9$ à $R^{11}$ représentent indépendamment l'un de l'autre, d'une manière identique ou différente, H ou un groupe ($C_1$-$C_4$)-alkyle,
$R^{14}$ est un groupe ($C_1$-$C_4$)-alkyle,
$R^{15}$ et $R^{16}$ représentent indépendamment l'un de l'autre, de manière identique ou différente, de l'hydrogène ou un groupe ($C_1$-$C_4$)-alkyle,
$R^{17}$ représente de l'hydrogène ou un groupe ($C_1$-$C_4$)-alkyle, ($C_1$-$C_4$)-haloalkyle, ($C_3$-$C_6$)-cycloalkyle, phényle ou hétéroaryle, les deux radicaux cités en dernier lieu étant substitués ou non,
$R^{18}$ est de l'hydrogène ou un groupe ($C_1$-$C_4$)-alkyle, ($C_2$-$C_6$)-alcényle ou ($C_2$-$C_6$)-alcynyle, les trois radicaux cités en dernier lieu étant non substitués ou substitués par un ou plusieurs radicaux du groupe constitué par de l'halogène, du ($C_1$-$C_4$)-alcoxy, du ($C_1$-$C_4$)-alkylthio et $NR^{31}R^{32}$, ou un groupe ($C_3$-$C_6$)-cycloalkyle ou ($C_3$-$C_6$)-cycloalkyle-($C_1$-$C_3$)-alkyle,
$R^{19}$ est analogue à $R^8$,
$R^{20}$ est analogue à $R^9$,
$R^{22}$ et $R^{23}$ représentent indépendamment l'un de l'autre, d'une manière identique ou différente, de l'hydrogène ou un groupe ($C_1$-$C_2$)-alkyle,
$R^{31}$ et $R^{32}$ représentent indépendamment l'un de l'autre, d'une manière identique ou différente, de l'hydrogène ou un groupe ($C_1$-$C_4$)-alkyle,
w est de l'oxygène ou du soufre,
X est un groupe ($C_1$-$C_4$)-alkyle, ($C_1$-$C_4$)-alcoxy, ($C_1$-$C_4$)-haloalkyle, ($C_1$-$C_4$)-alkylthio, de l'halogène ou un groupe mono- ou di-($C_1$-$C_2$)-alkyl)-amino,
Y représente un groupe ($C_1$-$C_4$)-alkyle, ($C_1$-$C_4$)-alcoxy, ($C_1$-$C_4$)-haloalkyle ou ($C_1$-$C_4$)-alkylthio, et
Z représente CH ou N,
Flupyrsulfuron (DPX-KE459), Sulfosulfuron (MON37500), KIH-2023), et

Bd) d'herbicides non sélectifs dans une terre non cultivée et/ou sélectifs dans des cultures transgéniques ayant une action contre des graminées adventices et des mauvaises herbes: Glufosinate, Glusofinate-P, Glyphosate,
les produits contenant les composés de la formule I ou leurs sels (composés de type A) et les composés du groupe B dans un rapport pondéral de 1/2500 à 20/1.

**2.** Produit suivant la revendication 1, **caractérisé en ce que**, dans l'herbicide de la formule (I) ou son sel,

$R^1$ représente un groupe méthyle, éthyle, n-propyle ou iso-propyle, n-, tert-, 2-butyle, ou isobutyle, n-pentyle, iso-pentyle, n-hexyle, isohexyle, 1,3-diméthylbutyle, n-heptyle, 1-méthylhexyle ou 1,4-diméthylpentyle.

**3.** Produit suivant l'une des revendications 1 et 2, **caractérisé en ce que**, dans l'herbicide de la formule (I) ou son sel, $R^1$ représente un groupe méthyle.

**4.** Produit suivant l'une ou plusieurs des revendications précédentes, **caractérisé en ce que** le sel de l'herbicide de la formule (I) est formé par remplacement de l'hydrogène du groupe $-SO_2\text{-}NH$ par un cation du groupe formé des métaux alcalins, des métaux alcalino-terreux et de l'ammonium, de préférence de sodium.

**5.** Produit suivant une ou plusieurs des revendications précédentes, **caractérisé en ce qu'**il contient, comme herbicides de type B, un ou plusieurs herbicides sélectivement actifs contre des graminées dans des céréales, herbicides du groupe qui est constitué

B1) de Fenoxaprop, de Fenoxaprop-P

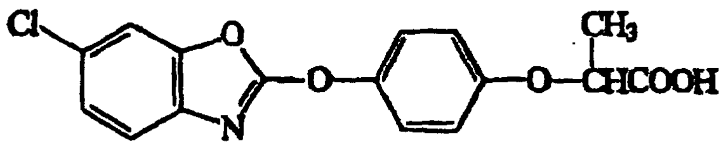

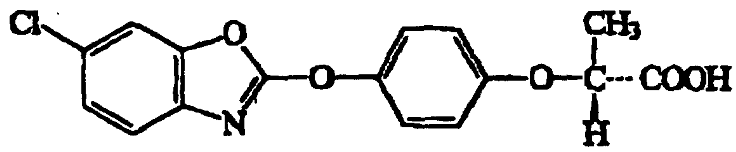

B2) d'Isoproturon

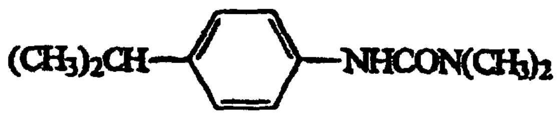

B3) de Diclofop

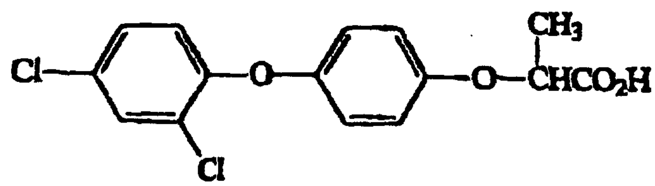

B4) de Clodinafop

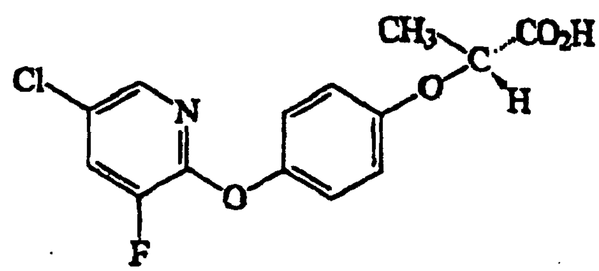

B5) de mélanges de B4) et de Cloquintocet

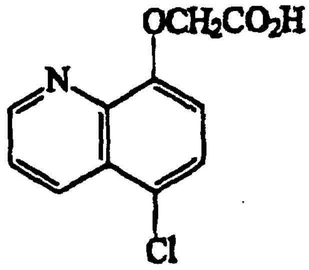

B6) de Chlorotoluron

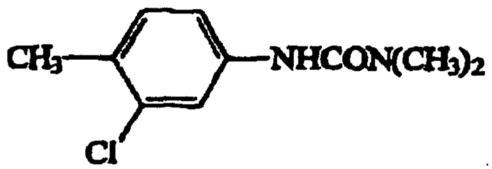

B7) de Methabenzthiazuron

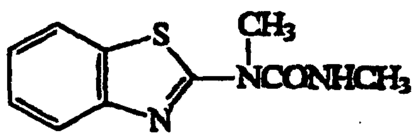

B8) d'Imazamethabenz

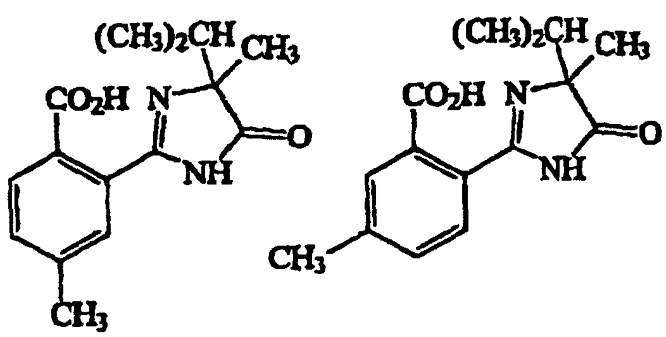

B9) de Tralkoxydim

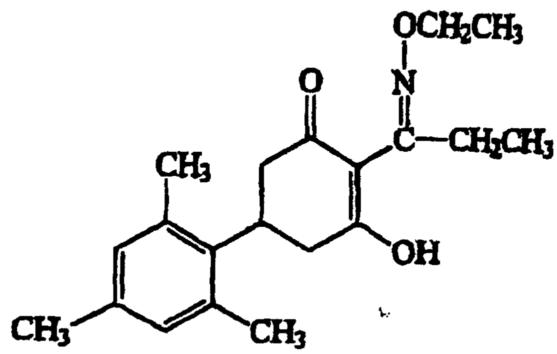

B10) de Difenzoquat

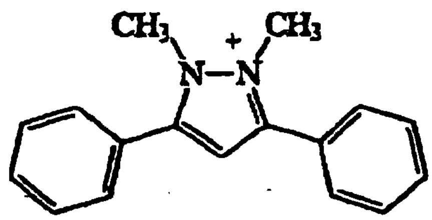

B11) de Flamprop, de Flamprop-M

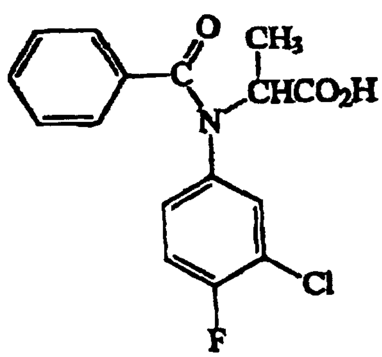

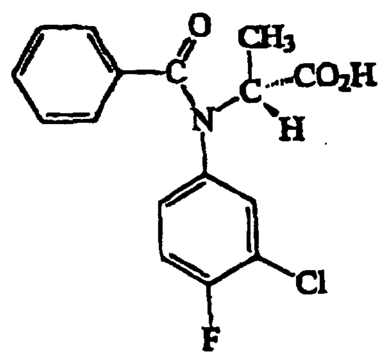

et

B12) de Pendimethalin

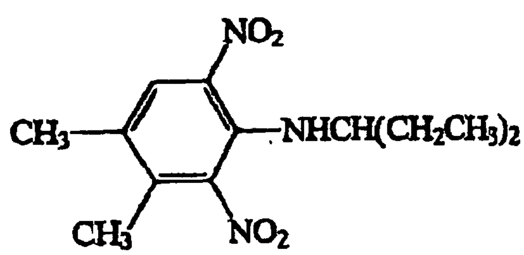

**6.** Produit suivant une ou plusieurs des revendications 1 à 4, **caractérisé en ce qu'**il contient, comme herbicides de type B, un ou plusieurs herbicides sélectivement actifs contre des graminées dans du maïs, herbicides du groupe qui est constitué

B13) de Nicosulfuron

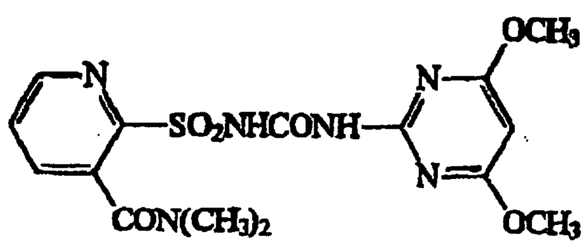

B14) de Rimsulfuron

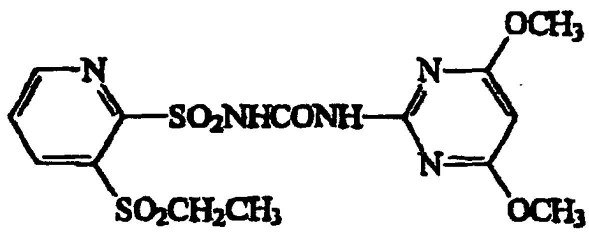

et
B15) de Primisulfuron

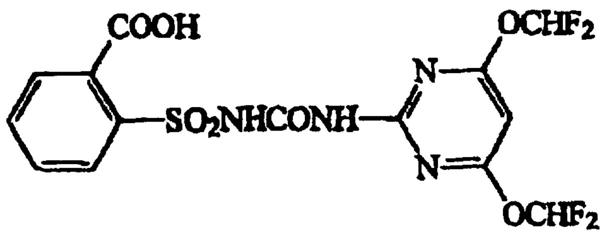

7. Produit suivant l'une des revendications 5 et 6, **caractérisé en ce qu'**il contient, comme herbicides de type B, du Diclofop-methyl, du Fenoxaprop-P-methyl, de l'Isoproturon, des mélanges de Clodinafop-propargyl avec du Cloquintocet-mexyl, de l'Imazamethabenz-methyl, du Nicosulfuron et/ou du Rimsulfuron.

8. Produit suivant une ou plusieurs des revendications 1 à 4, **caractérisé en ce qu'**il contient, comme herbicides de type B, un ou plusieurs herbicides sélectivement actifs contre des dicotylédones dans des céréales et/ou du maïs, herbicides du groupe qui est constitué

B16) de Mecoprop, de Mecoprop-P

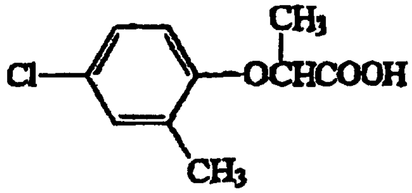 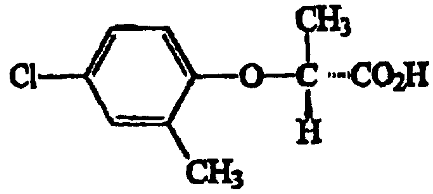

B17) de MCPA

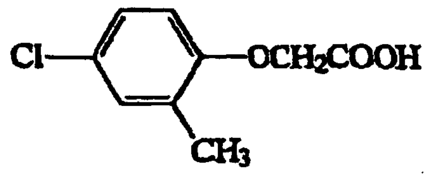

B18) de Dichlorprop, de Dichlorprop-P

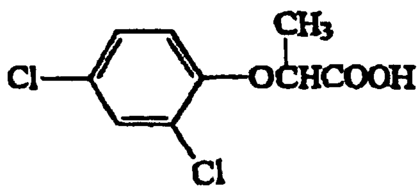

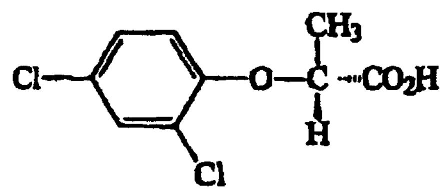

B19) de 2,4-D

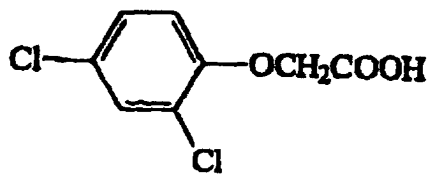

B20) de Dicamba

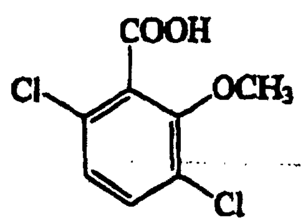

et

B21) de Fluoroxypyr

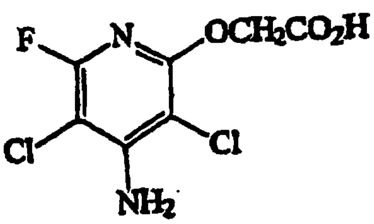

**9.** Produit suivant une ou plusieurs des revendications 1 à 4, **caractérisé en ce qu'**il contient, comme herbicides de

type B, un ou plusieurs herbicides sélectivement actifs contre des dicotylédones dans des céréales et/ou du maïs, herbicides du groupe qui est constitué

B22) d'loxynil

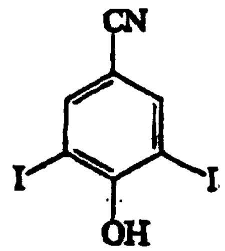

et

B23) de Bromoxynil

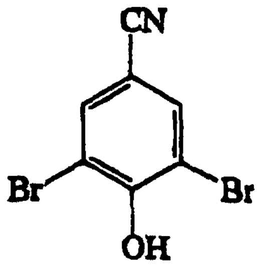

**10.** Produit suivant une ou plusieurs des revendications 1 à 4, **caractérisé en ce qu'**il contient, comme herbicides de type B, un ou plusieurs herbicides sélectivement actifs contre des dicotylédones dans des céréales et/ou du maïs; herbicides du groupe qui est constitué

B24) de Bifenox
méthyl-5-(2,4-dichlorophénoxy)-2-nitrobenzoate

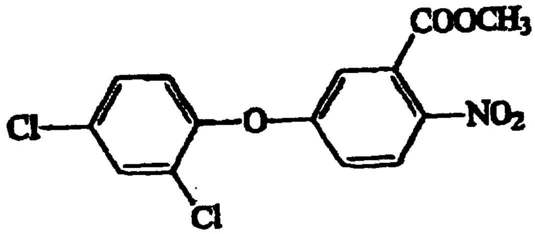

B25) de Fluoroglycofen

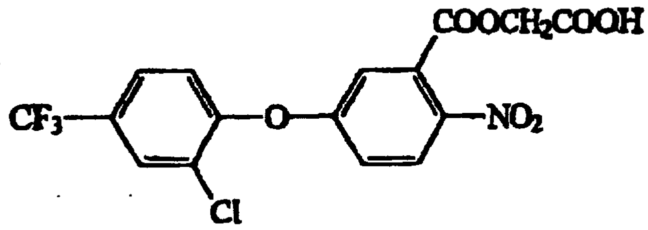

B26) d'Acifluorfen

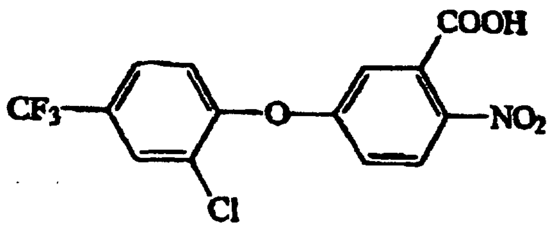

B27) de Lactofen

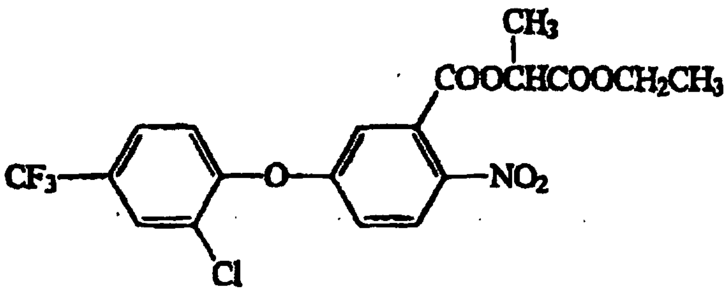

B28) de Fomesafen

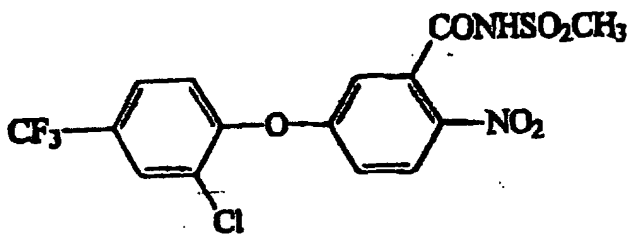

et

B29) d'Oxyfluorfen

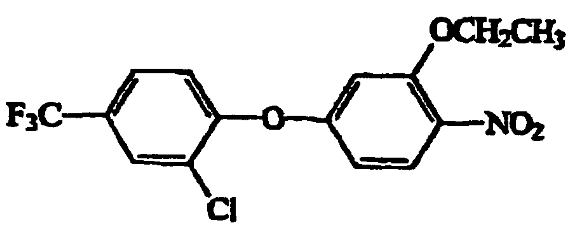

**11.** Produit suivant une ou plusieurs des revendications 1 à 4, **caractérisé en ce qu'**il contient, comme herbicides de type B, un ou plusieurs herbicides sélectivement actifs contre des dicotylédones dans des céréales et/ou du maïs, herbicides du groupe qui est constitué

B30) d'ET-751

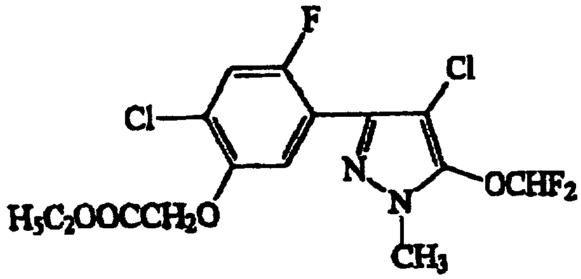

et

B31) d'azotes de la formule générale II :

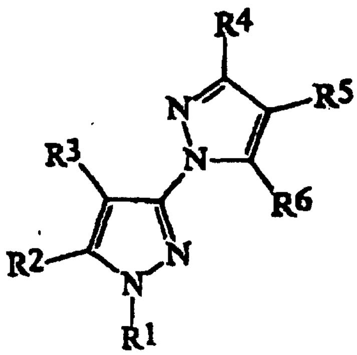

(II)

dans laquelle

| | |
|---|---|
| $R^1$ | est un groupe $(C_1-C_4)$-alkyle, |
| $R^2$ | est un groupe $(C_1-C_4)$-alkyle, $(C_1-C_4)$-alkylthio ou $(C_1-C_4)$-alcoxy, dont chaque radical peut être substitué par un ou plusieurs atomes d'halogène, ou |
| $R^1$ et $R^2$ | forment conjointement le groupe $(CH_2)_m$, où m=3 ou 4, |
| $R^3$ | est de l'hydrogène ou un halogène, |
| $R^4$ | est de l'hydrogène ou un groupe $(C_1-C_4)$-alkyle, |
| $R^5$ | est de l'hydrogène, un groupe nitro, cyano ou un des groupes -COOR7, $-C(=X)NR^7R^8$ ou $-C(=X)R^{10}$, |
| $R^6$ | est de l'hydrogène, un halogène, un groupe cyano, $(C_1-C_4)$-alkyle, $(C_1-C_4)$-alkylthio ou $-NR^{11}R^{12}$, |
| $R^7$ et $R^8$ | sont, d'une manière identique ou différente, de l'hydrogène ou un groupe $(C_1-C_4)$-alkyle, ou |
| $R^7$ et $R^8$ | forment, conjointement à l'atome d'azote sur lequel ils sont liés, un noyau carbocyclique saturé pentagonal ou hexagonal, |
| $R^{10}$ | est de l'hydrogène ou un groupe $(C_1-C_4)$-alkyle, où ce dernier peut être substitué éventuellement par un ou plusieurs atomes d'halogène, et |
| $R^{11}$ et $R^{12}$ | représentent, de manière identique ou différente, de l'hydrogène ou un groupe $(C_1-C_4)$-alkyle ou $(C_1-C_4)$-alcoxycarbonyle, |
| $R^{11}$ et $R^{12}$ | pouvant former, conjointement avec l'atome d'azote sur lequel ils sont liés, un noyau aromatique ou carbocyclique triangulaire, pentagonal ou hexagonal, dans lequel un atome de C peut éventuellement être remplacé par un atome de O. |

**12.** Produit suivant une ou plusieurs des revendications 1 à 4, **caractérisé en ce qu'**il contient, comme herbicide de type B, du
B32) Diflufenican

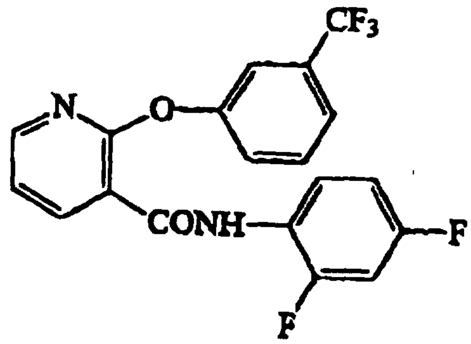

sélectivement actif contre des dicotylédones dans des céréales et/ou du maïs.

**13.** Produit suivant une ou plusieurs des revendications 1 à 4, **caractérisé en ce qu'**il contient du B33) Bentazon

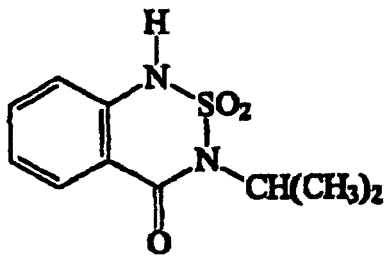

sélectivement actif contre les dicotylédones dans des céréales et/ou du maïs.

**14.** Produit suivant une ou plusieurs des revendications 8 à 13, **caractérisé en ce qu'**il contient, comme herbicides de type B, du MCPA, du Mecoprop, du Dicamba, du Fluroxypyr, du Diflufenican, de l'Ioxynil et/ou du Fluoroglycofen.

**15.** Produit suivant une ou plusieurs des revendications 1 à 4, **caractérisé en ce qu'**il contient, comme herbicides de type B, un ou plusieurs herbicides du groupe qui comprend

B34) du Metolachlor

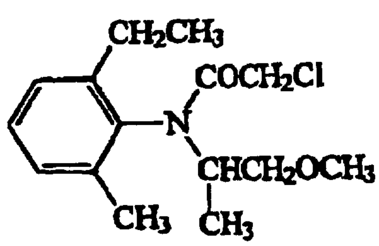

B35) du Metribuzin

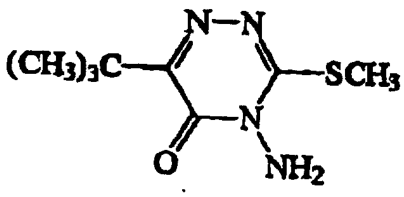

B36) de l'Atrazin

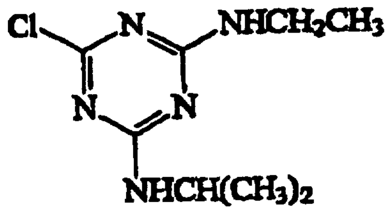

B37) du Terbuthylazin

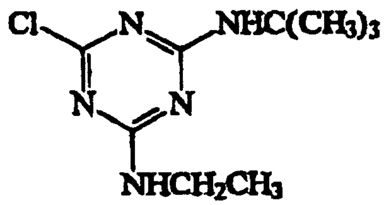

B38) de l'Alachlor

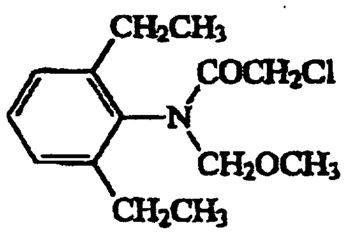

B39) de l'Acetochlor

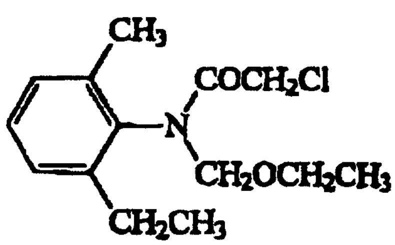

et
B40) du Dimethenamid

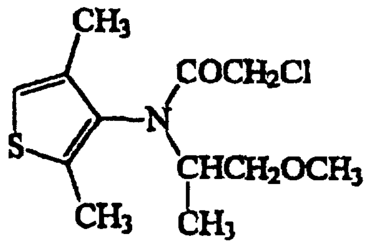

**16.** Produit suivant une ou plusieurs des revendications 1 à 4, **caractérisé en ce qu'**il contient, comme herbicides de type B, un ou plusieurs herbicides du groupe qui comprend

B41) de l'Amidosulfuron

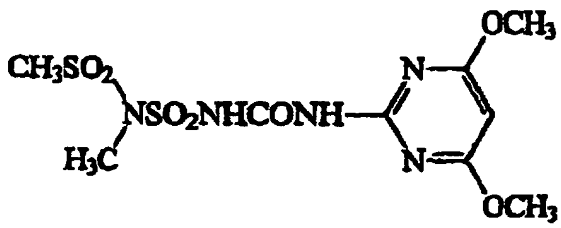

B42) du Metsulfuron

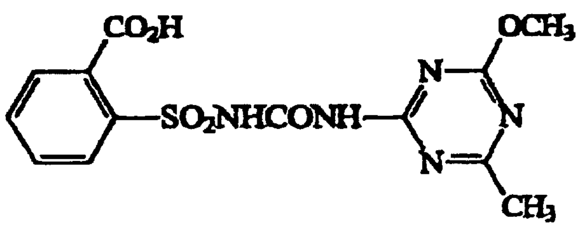

B43) du Tribenuron

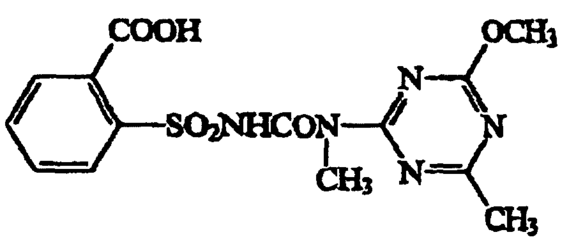

B44) de Thifensulfuron

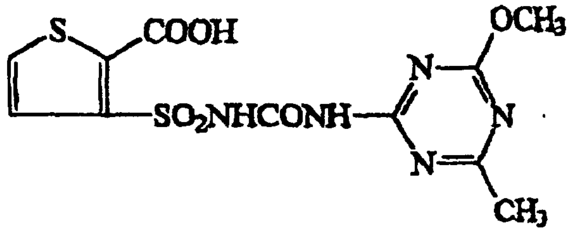

B45) du Triasulfuron

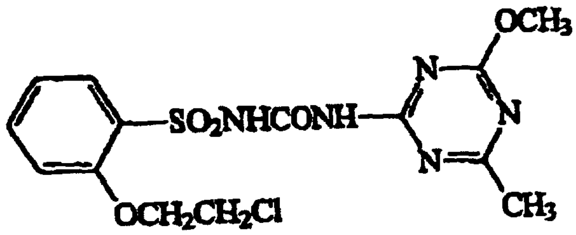

B46) du Chlorsulfuron

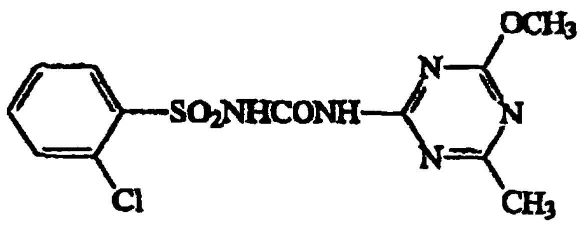

B47) du Prosulfuron ou CGA-152005

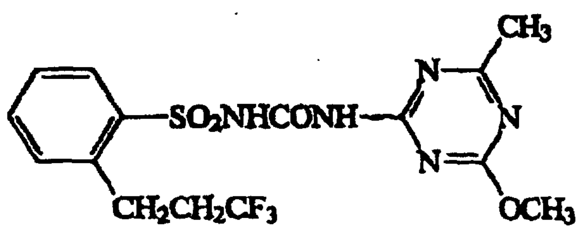

B48) des sulfonylurées de la formule générale III:

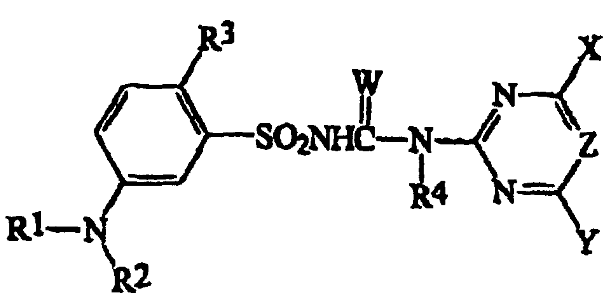

(III)

dans laquelle

| | |
|---|---|
| $R^1$ | est un groupe méthyle, éthyle, n-propyle, i-propyle ou allyle, |
| $R^2$ | est un groupe $CO-R^5$, $COOR^6$, $CO-NR^8R^9$, $CS-NR^{10}R^{11}$, $SO_2R^{14}$ ou $SO_2NR^{15}R^{16}$, |
| $R^3$ | est un groupe $COR^{17}$, $COOR^{18}$, $CONR^{19}R^{20}$ ou $CO-ON=CR^{22}R^{23}$, |
| $R^4$ | est de l'hydrogène ou un groupe $(C_1-C_4)$-alkyle, |
| $R^5$ | est de l'hydrogène ou un groupe $(C_1-C_4)$-alkyle, $(C_1-C_2)$-haloalkyle, cyclopropyle, phényle, benzyle ou hétéroaryle avec 5 ou 6 atomes de noyau, les trois radicaux cités en dernier lieu étant non substitués ou substitués par un ou plusieurs atomes d'halogène, |
| $R^6$ | représente un groupe $(C_1-C_4)$-alkyle, allyle, propargyle ou cyclopropyle, |
| $R^8$ | représente de l'hydrogène ou un groupe $(C_1-C_4)$-alkyle, $(C_1-C_4)$-haloalkyle ou $(C_1-C_4$-alcoxy)-carbonyle, |
| $R^9$ à $R^{11}$ | représentent indépendamment l'un de l'autre, d'une manière identique ou différente, H ou un groupe $(C_1-C_4)$-alkyle, |
| $R^{14}$ | est un groupe $(C_1-C_4)$-alkyle, |
| $R^{15}$ et $R^{16}$ | représentent indépendamment l'un de l'autre, de manière identique ou différente, de l'hydrogène ou un groupe $(C_1-C_4)$-alkyle, |
| $R^{17}$ | représente de l'hydrogène ou un groupe $(C_1-C_4)$-alkyle, $(C_1-C_4)$-haloalkyle, $(C_3-C_6)$-cycloalkyle, phényle ou hétéroaryle, les deux radicaux cités en dernier lieu étant substitués ou non, |
| $R^{18}$ | est de l'hydrogène ou un groupe $(C_1-C_4)$-alkyle, $(C_2-C_6)$-alcényle ou $(C_2-C_6)$-alcynyle, les trois radicaux cités en dernier lieu étant non substitués ou substitués par un ou plusieurs radicaux du groupe constitué par de l'halogène, du $(C_1-C_4)$-alcoxy, du $(C_1-C_4)$-alkylthio et $NR^{31}R^{32}$, ou un groupe $(C_3-C_6)$-cycloalkyle ou $(C_3-C_6)$-cycloalkyle-$(C_1-C_3)$-alkyle, |
| $R^{19}$ | est analogue à $R^8$, |
| $R^{20}$ | est analogue à $R^9$, |
| $R^{22}$ et $R^{23}$ | représentent indépendamment l'un de l'autre, d'une manière identique ou différente, de l'hydrogène ou un groupe $(C_1-C_2)$-alkyle, |
| $R^{31}$ et $R^{32}$ | représentent indépendamment l'un de l'autre, d'une manière identique ou différente, de l'hydrogène ou un groupe $(C_1-C_4)$-alkyle, |
| W | est de l'oxygène ou du soufre, |
| X | est un groupe $(C_1-C_4)$-alkyle, $(C_1-C_4)$-alcoxy, $(C_1-C_4)$-haloalkyle, $(C_1-C_4)$-alkylthio, de l'halogène ou un groupe mono- ou di-$(C_1-C_2)$-alkyl-amino, |
| Y | représente un groupe $(C_1-C_4)$-alkyle, $(C_1-C_4)$-alcoxy, $(C_1-C_4)$-haloalkyle ou $(C_1-C_4)$-alkylthio, et |
| Z | représente CH ou N, |

B49) du Flupyrsulfuron (DPX-KE459)

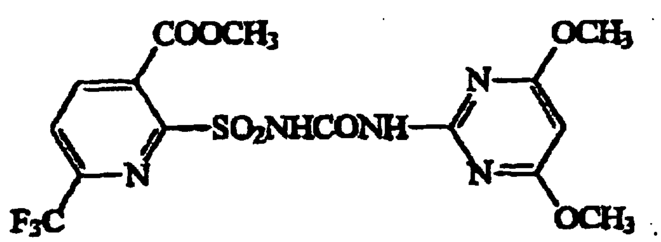

et/ou

B50) du Sulfosulfuron (MON37500)

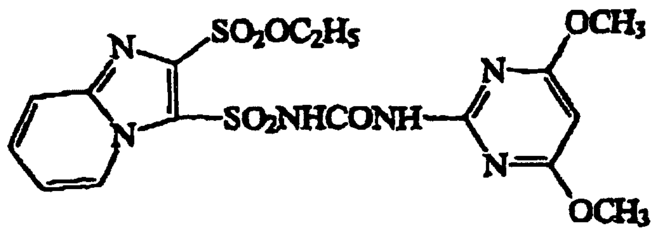

**17.** Produit suivant une ou plusieurs des revendications 1 à 4, **caractérisé en ce qu'**il contient, comme herbicide de type B,
B51) du KIH-2023

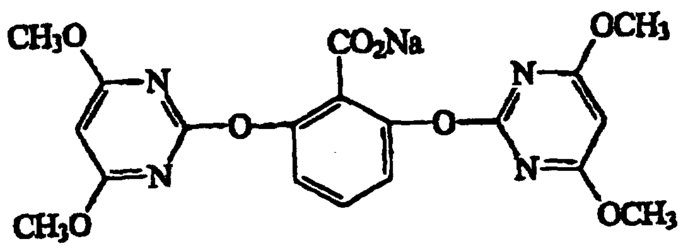

**18.** Produit suivant l'une des revendications 15 et 16, **caractérisé en ce qu'**il contient, comme herbicide de type B, de l'Atrazin, du Metsulfuron-méthyl, du Tribenuron-méthyl et/ou de l'Amidosulfuron.

**19.** Produit suivant une ou plusieurs des revendications 1 à 4, **caractérisé en ce qu'**il contient, comme herbicide de type B, un ou plusieurs herbicides à action non sélective dans une terre non cultivée et/ou à action sélective contre les graminées adventices et les mauvaises herbes dans des cultures transgéniques, herbicides du groupe qui comprend

B52) du Glufosinate, du Glufosinate-P

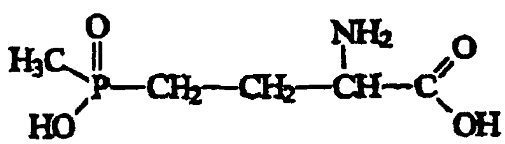

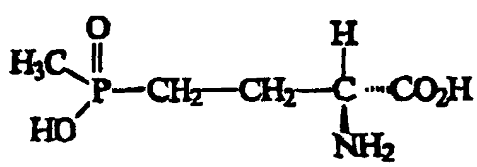

et
B53) du Glyphosate

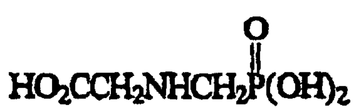

**20.** Produit suivant la revendication 19, **caractérisé en ce qu'**il contient, comme herbicide de type B, du Glufosinate-Ammonium.

**21.** Produits suivant une ou plusieurs des revendications précédentes, **caractérisés en ce qu'**ils présentent une teneur synergiquement efficace d'une combinaison des composés de la formule I ou de leurs sels (composé de type A) avec des composés du groupe B.

**22.** Produits suivant une ou plusieurs des revendications précédentes, **caractérisés en ce qu'**ils contiennent 0,1 à 99% en poids des substances actives A et B à côté d'agents auxiliaires de formulation courants.

**23.** Procédé de préparation d'un produit suivant une ou plusieurs des revendications précédentes, **caractérisé en ce qu'**on formule les composés de la formule I ou leurs sels (composés de type A) avec un ou plusieurs composés de type B et éventuellement avec un ou plusieurs composés de type C d'une manière analogue à une formulation phytosanitaire courante du groupe constitué des poudres à pulvériser, des concentrés émulsionnables, des solutions aqueuses, des émulsions, des solutions pulvérisables (tank-mix), des dispersions à base d'huile ou d'eau, des suspoémulsions, des produits de poudrage, des produits désinfectants, des granulés pour une application au sol ou par épandage, des granulés dispersables dans l'eau, des formulations ULV, des microcapsules et des cires.

**24.** Procédé pour lutter contre des plantes non souhaitables, **caractérisé en ce qu'**on applique sur celles-ci ou sur la terre arable une quantité active du point de vue herbicide d'une des combinaisons de substances actives A + B définies dans une ou plusieurs des revendications 1 à 22.

**25.** Procédé suivant la revendication 24, **caractérisé en ce que** la quantité appliquée pour les composés de la formule (I) ou leurs sels (composés de type A) est de 0,1 à 100 g d'ai/ha, de préférence de 2 à 40 g d'ai/ha, et **en ce que** les quantités appliquées pour les composés de type B sont de 1 à 5000 g d'ai/ha.

**26.** Procédé suivant l'une des revendications 24 et 25, **caractérisé en ce que** les substances actives des types A et B sont appliquées simultanément ou d'une manière séparée dans le temps, dans un rapport pondéral de 1/2500 à 20/1.

**27.** Procédé suivant l'une des revendications 24 à 26, **caractérisé en ce que** les combinaisons sont mises en oeuvre pour lutter de manière sélective contre des plantes non souhaitées.

**28.** Procédé suivant la revendication 27, **caractérisé en ce que** les combinaisons sont mises en oeuvre dans des cultures transgéniques.

**29.** Procédé suivant la revendication 28, **caractérisé en ce que** les combinaisons sont mises en oeuvre dans des céréales, du maïs, du riz, de la canne à sucre, des cultures de plantation, des pâturages ou des herbages.

**30.** Procédé suivant l'une des revendications 24 à 26, **caractérisé en ce que** les combinaisons sont mises en oeuvre dans des cultures de plantes utiles.

**31.** Procédé suivant l'une des revendications 24 à 26, **caractérisé en ce que** les combinaisons sont mises en oeuvre sur une terre non cultivée.